(19)

Europäisches Patentamt
European Patent Office
Office européen des brevets

(11) **EP 1 830 578 A1**

(12) **EUROPEAN PATENT APPLICATION**

(43) Date of publication:
**05.09.2007 Bulletin 2007/36**

(51) Int Cl.:
*H04N 7/36* (2006.01)     *H04N 7/26* (2006.01)

(21) Application number: **07006860.6**

(22) Date of filing: **20.01.2003**

| | |
|---|---|
| (84) Designated Contracting States:<br>**AT BE CH DE ES FI FR GB IT LI NL SE** | • **Chujoh, Takeshi**<br>**Tokyo 151-0061 (JP)**<br>• **Kikuchi, Yoshihiro**<br>**Yokohama-shi**<br>**Kanagawa 232-0025 (JP)** |
| (30) Priority: **10.04.2002 JP 2002108102**<br>**18.01.2002 JP 2002010874**<br>**25.11.2002 JP 2002341238**<br>**25.11.2002 JP 2002341239** | • **Nagai, Takeshi**<br>**Saitama 359-0038 (JP)**<br>• **Asano, Wataru**<br>**Kanagawa 244-0801 (JP)** |
| (62) Document number(s) of the earlier application(s) in accordance with Art. 76 EPC:<br>**03701799.3 / 1 467 569** | (74) Representative: **Granleese, Rhian Jane**<br>**Marks & Clerk**<br>**90 Long Acre**<br>**London WC2E 9RA (GB)** |
| (71) Applicant: **KABUSHIKI KAISHA TOSHIBA**<br>**Tokyo 105-8001 (JP)** | Remarks:<br>This application was filed on 02 - 04 - 2007 as a divisional application to the application mentioned under INID code 62. |
| (72) Inventors:<br>• **Koto, Shinichiro**<br>**Kanagawa 216-0033 (JP)** | |

(54) **Video encoding method and apparatus and video decoding method and apparatus**

(57)     A video encoding method of performing motion compensation predictive inter-frame encoding on a to-be-encoded block in a to-be-encoded frame of a video picture, characterized by comprising: obtaining at least one weighting factor and at least one DC offset value; generating a prediction block by calculating a linear sum of a plurality of reference blocks extracted from a plurality of reference frames and adding the DC offset value to the linear sum; generating a prediction error signal between the prediction block and the to-be-encoded block; and encoding information of the prediction error signal, information of the reference frame, information of the weighting factor, information of the DC offset value, and information of a motion vector between the to-be-encoded block and at least one reference frame.

F I G. 1

**Description**

Technical Field

The present invention relates to a motion compensation predictive inter-frame encoding method and apparatus and motion compensation predictive inter-frame decoding method and apparatus, which use a plurality of reference frames.

Background Art

As motion compensation predictive inter-frame encoding methods, MPEG-1 (ISO/IEC11172-2), MPEG-2 (ISO/IEC13818-2), MPEG-4 (ISO/IEC14496-2), and the like have been widely used. In these encoding schemes, encoding is performed by a combination of intra-frame encoded pictures (I pictures), forward predictive inter-frame encoded pictures (P pictures), and bi-directional predictive encoded pictures (B pictures).

A P picture is encoded by using the immediately preceding P or I picture as a reference picture. A B picture is encoded by using the immediately preceding and succeeding P or I pictures as reference pictures. In MPEG, a predictive picture can be selectively generated for each macroblock from one or a plurality of picture frames. In the case of P pictures, a predictive picture is generally generated on a macroblock basis from one reference frame. In the case of B pictures, a predictive picture is generated by either a method of generating a predictive picture from one of a forward reference picture and a backward reference picture, or method of generating a predictive picture from the average value of reference macroblocks extracted from both a forward reference picture and a backward reference picture. The information of these prediction modes is embedded in encoded data for each macroblock.

In either of these predictive encoding methods, however, when the same picture moves temporally and horizontally between frames in an area equal to or larger than the size of each macroblock, a good prediction result can be obtained. With regard to temporal enlargement/reduction and rotation of pictures or time jitters in signal amplitude such as fade-in and fade-out, however, high prediction efficiency cannot always be obtained by the above predictive encoding method. In encoding at a constant bit rate, in particular, if pictures with poor prediction efficiency are input to the encoding apparatus, a great deterioration in picture quality may occur. In encoding at a variable bit rate, a large code amount is assigned to pictures with poor prediction efficiency to suppress a deterioration in picture quality, resulting in an increase in the total number of encoded bits.

On the other hand, temporal enlargement/reduction, rotation, and fade-in/fade-out of pictures can be approximated by affine transformation of video signals. Predictions using affine transformation will therefore greatly improve the prediction efficiency for these pictures. In order to estimate a parameter for affine transformation, an enormous amount of parameter estimation computation is required at the time of encoding.

More specifically, a reference picture must be transformed by using a plurality of transformation parameters, and one of the parameters which exhibits the minimum prediction residual error must be determined. This requires an enormous amount of transformation computation. This leads to an enormous amount of encoding computation or an enormous increase in hardware cost and the like. In addition, a transformation parameter itself must be encoded as well as a prediction residual error, and hence the encoded data becomes enormous. In addition, inverse affine transformation is required at the time of decoding, resulting in a great amount of decoding computation or a very high hardware cost.

As described above, in the conventional video encoding methods such as MPEGs, sufficient prediction efficiency cannot be obtained with respect to temporal changes in video pictures other than translations. In addition, in the video encoding and decoding method using affine transformation, although prediction efficiency itself can be improved, the overhead for encoded data increases and the encoding and decoding costs greatly increase.

Disclosure of Invention

It is an object of the present invention to provide a video encoding method and apparatus and video decoding method and apparatus which can suppress increases in computation amount and the overhead for encoded data while greatly improving prediction efficiency with respect to fading pictures, in particular, in which the conventional video encoding methods such as MPEGs have a weak point.

According to a first aspect of the present invention, there is provided a video encoding method of performing motion compensation predictive inter-frame encoding of a to-be-encoded frame by referring to a plurality of reference frames for each macroblock, comprising generating a plurality of macroblocks from the plurality of reference frames, selecting, as a predictive macroblock, one of macroblocks obtained by a linear interpolation prediction or a linear extrapolation prediction using one of the plurality of reference macroblocks, an average value of the plurality of reference macroblocks, or the plurality of reference macroblocks, and encoding a predictive error signal between the selected predictive macroblock and a to-be-encoded macroblock, prediction mode information, and a motion vector.

According to a second aspect of the present invention, there is provided a video decoding method of decoding motion compensation predictive inter-frame encoded data by referring to a plurality of reference frames for each macroblock, comprising receiving encoded motion vector data, encoded prediction mode information, and encoded predictive error signal, selecting, in accordance with the motion vector data and the prediction mode information, whether to (a) generate a predictive macroblock from a specific reference frame of the plurality of reference frames, (b) generate a plurality of macroblocks from the plurality of reference frames so as to generate an average value of the plurality of reference frames as a predictive macroblock, or (c) generate a predictive macroblock by a linear extrapolation prediction or linear interpolation prediction, and generating a decoded frame by adding the generated predictive macroblock and the predictive error signal.

In conventional video encoding schemes such as MPEGs, in order to generate a predictive macroblock from a plurality of reference frames, reference macroblocks are extracted from the respective reference frames, and the average value of signals of the extracted macroblocks is used. According to such a conventional video encoding scheme, however, when the amplitude of a picture signal varies over time due to fading or the like, the prediction efficiency deteriorates. In contrast, according to the video encoding scheme of the first or second aspect of the present invention, since a predictive picture is generated by extrapolation or interpolation based on a linear prediction from a plurality of frames, when the amplitude of a picture signal monotonously varies over time, the prediction efficiency can be greatly improved. This can realize high-picture-quality, high-efficiency encoding.

In inter-frame encoding, in general, encoded pictures are used as reference frames on the encoding side, and decoded pictures are used as reference frames on the decoding side. For this reason, the influence of encoding noise in reference frames becomes a factor that degrades the prediction efficiency. Averaging the reference macroblocks extracted from a plurality of reference frames exhibits a noise removing effect and hence contributes to an improvement in encoding efficiency. This effect is equivalent to a technique known as a loop filter in predictive encoding.

According to the first and second aspects of the present invention, averaging processing of a plurality of reference frames, which has a high loop filter effect, linear interpolation which is effective for fading pictures and the like, or an optimal prediction mode for linear interpolation can be selected in accordance with an input picture. This makes it possible to improve encoding efficiency for arbitrary input pictures.

According to a third aspect of the present invention, there is provided a video encoding method in which in motion compensation predictive inter-frame encoding performed by referring to a plurality of video frames for each macroblock, a plurality of reference frames are two frames encoded immediately before a to-be-encoded frame, and in a linear extrapolation prediction based on the plurality of reference macroblocks, the predictive macroblock is generated by subtracting, from a signal obtained by doubling the amplitude of the reference macroblock signal generated from the immediately preceding reference frame, the reference macroblock signal generated from a reference frame preceding one frame from the immediately preceding reference frame.

According to a fourth aspect of the present invention, there is provided a video decoding method in which in motion compensation predictive inter-frame decoding performed by referring to a plurality of video frames for each macroblock, the plurality of reference frames are two frames decoded immediately before a to-be-encoded frame, and in a linear extrapolation prediction based on the plurality of reference macroblocks, the predictive macroblock is generated by subtracting, from the signal obtained by doubling the amplitude of the reference macroblock signal generated from the immediately preceding reference frame, the reference macroblock signal generated from a reference frame preceding one frame from the immediately preceding reference frame.

As described above, in conventional video encoding schemes such as MPEGs, when the amplitude of a picture signal changes over time due to fading or the like, the prediction efficiency deteriorates. For example, letting $V(t)$ be a picture frame at time $\underline{t}$, and $V'(t)$ be a picture frame at time $\underline{t}$ which has undergone fading processing, fade-in and fade-out can be realized by equations (1) and (2). In equation (1), (a) indicates a fade period; fade-in starts at time $t = 0$ and ends at time T. In equation (2), (b) indicates a fade period; fade-out starts at time T0 and ends at time T0 + T.

$$Y'(t) \begin{cases} = & Y(t) \times t/T & (0 \leqq t < T) & (a) \\ & Y(t) & (t \geqq T) & (b) \end{cases} \quad (1)$$

$$Y'(t) \begin{cases} = Y(t) \quad (t \leqq T0) & (a) \\ Y(t) \times (T-t+T0)/T \quad (T0<t<T0+T) & (b) \\ 0 \quad (t \geqq T0+T) & (c) \quad (2) \end{cases}$$

Assume that a frame Y'(t) at time $\underline{t}$ when fade processing is performed is a to-be-encoded frame, and two frames Y'(t-1) and Y'(t-2) subjected to the same fade processing at time t-1 and time t-2 are reference frames.
Consider first a case wherein a predictive picture P(t) is generated from the average value of these two frames, as indicated by equation (3).

$$P(t) = \{Y'(t-1)+Y'(t-2)\}/2 \qquad (3)$$

In consideration of the fade periods (a) and (b) in equations (1) and (2), the predictive picture obtained by equation (3) is represented by equations (4) and (5) as follows:

$$P(t) = \{Y(t-1) \times (t-1)$$
$$/T + Y(t-2) \times (t-2)/T\}/2 \qquad (4)$$

$$P(t) = \{Y(t-1) \times (T-t+1+T0)$$
$$/T + Y(t-2) \times (T-t+2+T0)/T\}/2 \qquad (5)$$

If there is no time jitter in an original signal Y(t) before fading, i.e., Y(t) = C (constant) assuming that Y(t) is constant regardless of $\underline{t}$, equations (4) and (5) are modified into equations (6) and (7):

$$P(t) = C \times (2t-3)/2T \qquad (6)$$

$$P(t) = C \times (2T-2t+3+2T0)/2T \qquad (7)$$

On the other hand, the to-be-encoded signal Y'(t) is expressed by equations (8) and (9):

$$Y'(t) = C \times t/T \qquad (8)$$

$$Y'(t) = C \times (T-t+T0)/T \qquad (9)$$

A predictive error signal D(t) obtained by subtracting the predictive picture P(t) given by equations (6) and (7) from Y'(t) given by equations (8) and (9) is expressed by equations (10) and (11) :

$$D(t)=C\times 3/2T \qquad\qquad (10)$$

$$D(t)=-C\times 3/2T \qquad\qquad (11)$$

According to the video encoding methods of the third and fourth aspects of the present invention, the predictive picture P(t) expressed by equation (12) is generated.

$$P(t)=2\times Y'(t-1)-Y'(t-2) \qquad\qquad (12)$$

Assuming that Y(t) = C (constant) as in the above case, a predictive picture at fade-in expressed by equation (1) and a predictive picture at fade-out expressed by equation (2) are represented by

$$P(t)=C\times t/T \qquad\qquad (13)$$

$$P(t)=C\times(T-t+T0)/T \qquad\qquad (14)$$

Equations (13) and (14) coincide with the to-be-encoded pictures represented by equations (8) and (9). In either of the cases, the predictive error signal D(t) obtained by subtracting the predictive picture from the encoded picture becomes 0. As described above, with regard to fading pictures, conventional motion compensation techniques such as MPEGs cause residual error signals. In contrast, as is obvious, according to the third and fourth aspects of the present invention, no residual error signals are produced, and the prediction efficiency greatly improves.

In equations (1) and (2), 1/T represents the speed of change in fade-in and fade-out. As is obvious from equations (10) and (11), in conventional motion compensation, a residual error increases as the speed of change in fade increases, resulting in a deterioration in encoding efficiency. According to the video encoding methods of the third and fourth aspects of the present invention, high prediction efficiency can be obtained regardless of the speed of change in fade.

According to a fifth aspect of the present invention, in addition to the video encoding methods of the first and third aspects of the present invention, there is provided a video encoding method in which the to-be-encoded motion vector is a motion vector associated with a specific one of the plurality of reference frames.

In addition to the video encoding methods of the second and fourth aspects of the present invention, according to a sixth aspect of the present invention, there is provided a video encoding method in which the received motion vector data is a motion vector associated with a specific one of the plurality of reference frames, and the motion vector data is scaled/converted in accordance with the inter-frame distances between the to-be-decoded frame and reference frames to generate motion vectors for the remaining reference frames.

By the methods according to the first to fourth aspects of the present invention, a prediction efficiency higher than that in the prior art can be obtained with respect to fading pictures and the like by using a plurality of reference pictures. If, however, motion vectors for a plurality of reference pictures are multiplexed into encoded data for each encoded macroblock, the encoding overhead increases. According to an encoding scheme such as ITU-TH. 263, an encoding method called a direct mode is available, in which no motion vector for a B picture is sent, and a motion vector for the B picture is obtained by scaling a motion vector for a P picture, which strides over the B picture, in accordance with the inter-frame distance between a reference picture and a to-be-encoded picture. This direct mode encoding method is a model in which a to-be-encoded video picture is approximated to a picture whose moving speed is almost constant or 0 when viewed in a short period of time corresponding to several frames. In many cases, this method can reduce the number of encoded bits of the motion vector.

According to the methods of the fifth and sixth aspects of the present invention, as in the direct mode for B pictures, in the case of P pictures, only one motion vector of the motion vectors for a plurality of reference frames is encoded, and on the decoding side, the received motion vector can be scaled in accordance with the inter-frame distance from a reference picture. This makes it possible to achieve the same improvement in encoding efficiency as that achieved by the methods according to the first to fourth aspects of the present invention without increasing the encoding overhead.

In addition to the method according to the fifth aspect of the present invention, there is provided a method according to a seventh aspect of the present invention, in which the motion vector associated with the specific reference frame is a motion vector normalized in accordance with the inter-frame distance between the reference frame and the frame to be encoded.

In addition to the method according to the sixth aspect of the present invention, there is provided a method according to an eighth aspect, in which the motion vector associated with the received specific reference frame is a motion vector normalized in accordance with the inter-frame distance between the reference frame and the frame to be encoded.

According to the methods of the seventh and eighth aspects of the present invention, a reference scale for a motion vector to be encoded is constant regardless of whether the inter-frame distance changes, and scaling processing for motion vectors for the respective reference frames can be done by computation using only the information of the inter-frame distance between each reference frame and the frame to be encoded. Division is required to perform arbitrary scaling operation. However, normalizing a motion vector to be encoded with the inter-frame distance makes it possible to perform scaling processing by multiplication alone. This can reduce the encoding and encoding costs.

In addition to the methods according to the first and third aspects of the present invention, there is provided a method according to a ninth aspect of the present invention, in which the motion vector to be encoded includes the first motion vector associated with a specific one of the plurality of reference frames and a plurality of motion vectors for the remaining reference frames, and the plurality of motion vectors are encoded as differential vectors between the plurality of motion vectors and motion vectors obtained by scaling the first motion vector in accordance with the inter-frame distances between the to-be-encoded frame and the plurality of reference frames.

In addition to the methods according to the second and fourth aspects, there is provided a method according to a 10th aspect of the present invention, in which the received motion vector data includes a motion vector associated with a specific one of the plurality of reference frames and differential vectors associated with the remaining reference frames. The motion vector data is scaled/converted in accordance with the inter-frame distances between a to-be-decoded frame and the reference frames. The resultant data are then added to the differential vectors to generate motion vectors associated with the plurality of reference frames except for the specific one frame.

According to the methods of the fifth and sixth aspects of the present invention, in the case of still pictures or pictures with a constant moving speed, the prediction efficiency can be improved by using a plurality of reference frames without increasing the encoding overhead for motion vector information. If, however, the moving speed is not constant, a sufficient prediction efficiency may not be obtained by simple scaling of motion vectors alone.

According to a dual-prime prediction which is one prediction mode in MPEG2 video encoding, in a motion prediction using two consecutive fields, a motion vector for one field and a differential vector between a motion vector obtained by scaling the motion vector in accordance with the inter-field distance and a motion vector for the other field are encoded. A motion vector is expressed with a 1/2 pixel resolution. By averaging the reference macroblocks of the two fields, a loop filter effect is produced by an adaptive spatiotemporal filter. In addition, an increase in encoding overhead can be suppressed. This greatly contributes to an improvement in encoding efficiency.

According to the methods of the ninth and 10th aspects of the present invention, in addition to an effect similar to that obtained by a dual-prime prediction, i.e., the loop filter effect produced by an adaptive spatiotemporal filter, the prediction efficiency for fading pictures and the like can be improved. This makes it possible to obtain an encoding efficiency higher than that in the prior art.

In addition to the methods of the first, third, fifth, seventh, and ninth aspects, there is provided a method according to a 11th aspect of the present invention, in which the prediction mode information includes the first flag indicating a prediction using a specific reference frame or a prediction using a plurality of reference frames and the second flag indicating that the prediction using the plurality of reference frames is a prediction based on the average value of a plurality of reference macroblocks or a prediction based on linear extrapolation or linear interpolation of a plurality of reference macroblock, and the second flag is contained in the header data of an encoded frame or the header data of a plurality of encoded frames.

In addition to the methods of the second, fourth, sixth, eighth, and 10th aspects, there is provided a method according to a 12th aspect of the present invention, in which the prediction mode information includes the first flag indicating a prediction using a specific reference frame or a prediction using a plurality of reference frames and the second flag indicating that the prediction using the plurality of reference frames is a prediction based on the average value of a plurality of reference macroblocks or a prediction based on linear extrapolation or linear interpolation of a plurality of reference macroblock, and the second flag is received as the header data of an encoded frame or part of the header data of a plurality of encoded frames.

As described above, according to the present invention, an improvement in prediction efficiency and high-efficiency, high-picture-quality encoding can be realized by adaptively switching between the operation of generating a predictive macroblock, for each macroblock of an encoded frame, from only a specific reference frame of a plurality of reference frames, the operation of generating a predictive macroblock from the average value of a plurality of reference pictures, and the operation of generating a predictive macroblock by linear extrapolation or linear interpolation of a plurality of reference pictures.

For example, a prediction from only a specific reference frame of a plurality of reference frames (prediction mode 1 in this case) is effective for a picture portion in a single frame at which a background alternately appears and disappears over time. With regard to a picture portion with little time jitter, a prediction from the average value of a plurality of reference pictures (prediction mode 2 in this case) makes it possible to obtain a loop filter effect of removing encoding distortion in reference pictures. When the amplitude of a picture signal such as a fading picture varies over time, the prediction efficiency can be improved by linear extrapolation or linear interpolation of a plurality of reference pictures (prediction mode 3 in this case).

In general, in a conventional encoding scheme, when optimal prediction modes are to be selectively switched for each macroblock in this manner, a flag indicating a prediction mode is encoded for each macroblock while being contained in header data of each macroblock. If many prediction modes are selectively used, the encoding overhead for flags indicating the prediction modes increases.

According to the methods of the 11th and 12th aspects of the present invention, a combination of prediction modes to be used is limited to a combination of prediction modes 1 and 2 or a combination of prediction modes 1 and 3 for each encoded frame. The second flag indicating one of the above combinations is prepared, together with the first flag indicating prediction mode 1, prediction mode 2, or prediction mode 3. The second flag indicating the combination of the prediction modes is contained in the header data of an encoded frame. The first flag indicating a prediction mode can be changed for each macroblock and is contained in the header data of the macroblock. This can reduce the overhead associated with the prediction modes in encoded data.

When the amplitude of a picture signal such as a fading picture changes over time, the amplitudes uniformly changes over time within the frame. For this reason, there is no need to switch between prediction mode 2 and prediction mode 3 for each macroblock; no deterioration in prediction efficiency occurs even if a prediction mode is fixed for each frame.

A background or the like alternately appears and disappears over time within a frame regardless of a change in the amplitude of a picture signal over time. If, therefore, a background is fixed for each frame, the prediction efficiency deteriorates. This makes it necessary to switch optimal prediction modes for each macroblock using the first flag. Separately setting the flags indicating the prediction modes in the headers of a frame and macroblock in the above manner makes it possible to reduce the encoding overhead without degrading the prediction efficiency.

According to a 13th aspect of the present invention, there is provided a video encoding method, in which in motion compensation predictive inter-frame encoding performed by referring to a plurality of video frames for each macroblock, a predictive macroblock is generated by a linear prediction from the plurality of reference frames, a predictive error signal between the predictive macroblock and an encoded macroblock and a motion vector are encoded for each macroblock, and a combination of predictive coefficients for the linear prediction is encoded for each frame.

In addition to the methods according to the 13th aspect, according to a 14th aspect of the present invention, there is provided a method in which the plurality of reference frames are past frames with respect to a to-be-encoded frame.

According to a 15th aspect of the present invention, there is provided a video decoding method in which in decoding motion compensation predictive inter-frame encoded data by referring to a plurality of video frames for each macroblock, motion vector data and a predictive error signal which are encoded for each macroblock and a combination of predictive coefficients which encoded for each frame are received, a predictive macroblock is generated from the plurality of reference frames in accordance with the motion vector and predictive coefficients, and the generated predictive macroblock and the predictive error signal are added.

In addition to the method according to the fifth aspect, according to a 16th aspect of the present invention, there is provided a method in which the plurality of reference frames are past frames with respect to a to-be-encoded frame.

According to the methods of the 13th to 16th aspects of the present invention, since predictive coefficients can be set in an arbitrary time direction, the prediction efficiency can be improved by using an optimal combination of predictive coefficients on the encoding side not only when the amplitude of a picture signal changes over time as in the case of a fading picture but also when an arbitrary time jitter occurs in the amplitude of a picture signal. In addition, transmitting the above predictive coefficients upon multiplexing them on encoded data allows the same linear prediction as in encoding operation to be performed in decoding operation, resulting in high-efficiency predictive encoding.

According to the present invention, an improvement in encoding efficiency can be achieved by a prediction from a plurality of reference frames. However, as in the case of B pictures in MPEG, a predictive from temporally consecutive frames may be done by using a plurality of past and future frames as reference frames. In addition, as in the case of I and P pictures in MPEG, only past frames may be used as reference frames. Furthermore, a plurality of past P and I pictures may be used as reference pictures.

This arrangement can realize encoding with picture quality higher than that of conventional MPEG encoding. In encoding P pictures using only past pictures, in particular, the encoding efficiency can be greatly improved as compared with the prior art by using a plurality of past reference frames unlike in the prior art. In encoding operation using no B pictures, there is no need to provide a delay for rearrangement of encoded frames. This makes it possible to realize low-delay encoding. According to the present invention, therefore, a great improvement in encoding efficiency can be attached even in low-delay encoding than in the prior art.

In a seventeenth aspect, the present invention provides a video encoding apparatus for performing motion compensation predictive inter-frame encoding of a to-be-encoded frame by referring to a plurality of reference frames for each macroblock, comprising:

means for generating a plurality of macroblocks from the plurality of reference frames;
means for selecting, as a predictive macroblock, one of macroblocks obtained by a linear interpolation prediction or a linear extrapolation prediction using one of the plurality of reference macroblocks, an average value of the plurality of reference macroblocks, or the plurality of reference macroblocks and
means for encoding a predictive error signal between the selected predictive macroblock and a to-be-encoded macroblock, prediction mode information, and a motion vector.

In an eighteenth aspect, the present invention provides a video decoding apparatus for decoding motion compensation predictive inter-frame encoded data by referring to a plurality of reference frames for each macroblock, comprising:

means for receiving encoded motion vector data, encoded prediction mode information, and encoded predictive error signal;
means for selecting, in accordance with the motion vector data and the prediction mode information, one from (a) generation of a predictive macroblock from a specific reference frame of the plurality of reference frames, (b) generation of a plurality of macroblocks from the plurality of reference frames so as to generate an average value of the plurality of reference frames as a predictive macroblock, or (c) generation of a predictive macroblock by a linear extrapolation prediction or linear interpolation prediction; and
means for adding the generated predictive macroblock and the predictive error signal.

In a nineteenth aspect, the present invention provides a video encoding apparatus for performing motion compensation predictive inter-frame encoding of a to-be-encoded frame by referring to a plurality of reference frames for each macroblock, comprising:

means for generating a predictive macroblock by a linear prediction using the plurality of reference frames;
means for encoding a predictive error signal between the predictive macroblock and a to-be-encoded macroblock and a motion vector for each macroblock; and
means for encoding a combination of predictive coefficients for the linear prediction for each frame.

In a twentieth aspect, the present invention provides a video decoding apparatus for decoding motion compensation predictive inter-frame encoded data by referring to a plurality of reference frames for each macroblock, comprising:

means for receiving motion vector data and a propriety error signal encoded for each macroblock and a combination of predictive coefficients encoded for each frame;
means for generating a predictive macroblock from the plurality of reference frames in accordance with the motion vector and the predictive coefficients, and
means for adding the generated predictive macroblock and the predictive error signal.

In a twenty-first aspect, the present invention provides a program for causing a computer to execute motion compensation predictive inter-frame encoding processing by referring to a plurality of video frames for each macroblock, the program causing the computer to execute

a process of generating a plurality of macroblocks from the plurality of reference frames,
a process of selecting, as a predictive macroblock, one of macroblocks obtained by a linear interpolation prediction or a linear extrapolation prediction using one of the plurality of reference macroblocks, an average value of the plurality of reference macroblocks, or the plurality of reference macroblocks, and
a process of encoding a predictive error signal between the selected predictive macroblock and a to-be-encoded macroblock, prediction mode information, and a motion vector.

In a twenty-second aspect, the present invention provides a program for causing a computer to execute motion compensation predictive inter-frame decoding processing by referring to a plurality of video frames for each macroblock, the program causing the computer to execute

a process of receiving encoded motion vector data, encoded prediction mode information, and encoded predictive error signal,

a process of selecting, in accordance with the motion vector data and the prediction mode information, one from (a) generation of a predictive macroblock from specific reference frame of the plurality of reference frames, (b) generation of a plurality of macroblocks from the plurality of reference frames so as to generate an average value of the plurality of reference frames as a predictive macroblock, or (c) generation of a predictive macroblock by a linear extrapolation prediction or linear interpolation prediction, and

a process of adding the generated predictive macroblock and the predictive error signal.

In a twenty-third aspect, the present invention provides a program for causing a computer to execute motion compensation predictive inter-frame encoding processing by referring to a plurality of reference frames for each macroblock, the program causing the computer to execute

a process of generating a predictive macroblock by a linear prediction using the plurality of reference frames,

a process of encoding a predictive error signal between the predictive macroblock and a to-be-encoded macroblock and a motion vector for each macroblock, and

a process of encoding a combination of predictive coefficients for the linear prediction for each frame.

In a twenty-fourth aspect, the present invention provides a program for causing a computer to execute motion compensation predictive inter-frame decoding processing by referring to a plurality of video frames for each macroblock, the program causing the computer to execute

a process of receiving motion vector data and a propriety error signal encoded for each macroblock and a combination of predictive coefficients encoded for each frame,

a process of generating a predictive macroblock from the plurality of reference frames in accordance with the motion vector and the predictive coefficients, and

a process of adding the generated predictive macroblock and the predictive error signal.

In a twenty-fifth aspect the present invention provides a video encoding method of performing motion compensation predictive inter-frame encoding of each to-be-encoded block contained in a to-be-encoded frame of an input video by using at least one reference frame, comprising:

a step of selecting, for each to-be-encoded block, one of a first predictive block generating mode of generating a predictive block signal from a single reference frame and a second predictive block generating mode of generating the predictive block signal by a linear sum of a plurality of reference blocks extracted from a plurality of reference frames;

a step of encoding a differential signal between the selected predictive block signal and a signal of the to-be-encoded block;

a step of selecting, for each set of a plurality of pixel blocks in the to-be-encoded frame or the each to-be-encoded frame, whether the linear sum prediction is performed as an average value prediction based on the plurality of reference blocks or a linear interpolation prediction based on the plurality of reference frames and a display time of the to-be-encoded frame;

a step of encoding, for the each to-be-encoded block or each set of a plurality of to-be-encoded blocks, first encoding mode information indicating that a specific one of the first and second predictive block generating modes is selected at the time of generation of the predictive block signal; and

a step of encoding, for each set of a plurality of pixel blocks of the to-be-encoded frame or the each to-be-encoded frame, second encoding mode information indicating that a specific one of the average value prediction and the linear interpolation prediction is selected as the linear sum prediction.

In a twenty-sixth aspect, the present invention provides a video decoding method of performing motion compensation predictive inter-frame decoding of each to-be-decoded block contained in a to-be-decoded frame of a video picture by using at least one reference frame, comprising:

a step of decoding a predictive error signal for a signal of the to-be-decoded block corresponding to a predictive block signal;

a step of decoding, for the each to-be-decoded block or each set of a plurality of to-be-decoded blocks, first encoding mode information indicating which one of a first predictive block generating mode of generating a predictive block signal from a single reference frame and a second predictive block generating mode of generating the predictive block signal by a linear sum prediction based on a plurality of reference blocks extracted from a plurality of reference frames is selected at the time of generation of a predictive block signal on an encoding side;

a step of decoding, for each set of a plurality of pixel blocks of the to-be-decoded frame or the each to-be-decoded frame, second encoding mode information indicating which one of an average value prediction based on the plurality of reference blocks and a linear interpolation prediction based on the plurality of reference frames and a display time of the to-be-encoded frame is selected as the linear sum prediction;

a step of generating the predictive block in accordance with the decoded first encoding mode information and the decoded second encoding mode information; and a step of generating a reconstructed video signal by using the generated predictive block signal and the decoded predictive error signal.

In a twenty-seventh aspect, the present invention provides a video encoding method of performing motion compensation predictive inter-frame encoding of a to-be-encoded macroblock of a video picture by using a predetermined combination of a plurality of reference frames and a motion vector between the to-be-encoded macroblock and at least one reference frame, comprising:

extracting at least one reference macroblock from each of the plurality of reference frames;
generating a predictive macroblock by calculating a linear sum of the plurality of extracted reference macroblocks by using a predetermined combination of weighting factors;
generating a predictive error signal between the predictive macroblock and the to-be-encoded macroblock; and
encoding the predictive error signal, a first index indicating the combination of the plurality of reference frames, a second index indicating the combination of weighting factors, and information of the motion vector.

In a twenty-eighth aspect, the present invention provides a video encoding method of performing motion compensation predictive inter-frame encoding of a to-be-encoded macroblock of a video picture by using a predetermined combination of a plurality of reference frames and a motion vector between the to-be-encoded macroblock and at least one reference frame, comprising:

extracting a first reference macroblock corresponding to a candidate for the motion vector from a first reference frame;
scaling the candidate for the motion vector in accordance with an inter-frame distance between at least one second reference frame and the to-be-encoded frame;
extracting at least one second reference macroblock corresponding to the candidate for the motion vector obtained by scaling from the second reference frame;
generating a predictive macroblock by calculating a linear sum using a predetermined combination of weighting factors for the first and second reference macroblocks;
generating a predictive error signal between the predictive macroblock and the to-be-encoded macroblock;
determining the motion vector on the basis of a magnitude of a predictive error signal between a linear sum of the first and second reference macroblocks and the to-be-encoded macroblock; and
encoding the predictive error signal, a first index indicating the first and second reference frames, the second index indicating the combination of weighting factors, and information of the determined motion vector.

In a twenty-ninth aspect, the present invention provides a video encoding method of performing motion compensation inter-frame encoding of a to-be-encoded macroblock of a video picture by using at least one past reference frame and a motion vector between the to-be-encoded macroblock and the reference frame, comprising:

performing the motion compensation predictive inter-frame encoding upon switching, for each to-be-encoded macroblock, between operation of using a motion vector for a to-be-decoded macroblock at the same intra-frame position as that of the to-be-encoded macroblock in the frame encoded immediately before the to-be-encoded frame containing the to-be-encoded macroblock and operation of newly determining and encoding the motion vector.

In a thirtieth aspect, the present invention provides a video encoding method of performing motion compensation predictive inter-frame encoding of a to-be-encoded macroblock of a video picture by using at least one reference frame and a motion vector between the to-be-encoded macroblock and the reference frame, comprising
performing the motion compensation predictive inter-frame encoding upon switching, for the each to-be-encoded macroblock, between a first prediction mode of using at least one encoded past frame as the reference frame, a second prediction mode of using an encoded future frame as the reference frame, a third prediction mode of using a linear sum of the encoded past and future frames as the reference frame, and a fourth prediction mode of using a linear sum of the plurality of encoded past reference frames as the reference frame.

In a thirty-first aspect, the present invention provides a video decoding method of performing motion compensation predictive inter-frame decoding of a to-be-decoded macroblock of a video picture by using a predetermined combination of a plurality of reference frames and a motion vector between the to-be-decoded macroblock and at least one reference frame, comprising
decoding encoded data including a predictive error signal for the each to-be-decoded macroblock, a first index indicating the combination of the plurality of reference frames, a second index indicating a combination of linear sum weighting factors for reference macroblocks, and information of the motion vector;
extracting a plurality of reference macroblocks from the plurality of reference frames in accordance with the decoded information of the motion vector and the decoded information of the first index;
generating a predictive macroblock by calculating a linear sum of the plurality of extracted reference frames by using the combination of weighting factors indicated by the decoded information of the second index; and
decoding a video signal by adding the predictive macroblock and the decoded predictive error signal for the each to-be-decoded macroblock.

In a thirty-second aspect, the present invention provides a video decoding method of performing motion compensation predictive inter-frame decoding of a to-be-decoded macroblock of a video picture by using a predetermined combination of a plurality of reference frames and a motion vector between the to-be-decoded macroblock and at least one reference frame, comprising:

decoding encoded data including a predictive error signal for the each to-be-decoded macroblock, a first index indicating a combination of the plurality of reference frames, a second index indicating the frame number of an encoded frame, and information of the motion vector;
extracting a plurality of reference macroblocks from the plurality of reference frames in accordance with the information of the motion vector and the decoded information of the first index;
calculating inter-frame distances between the plurality of reference frames and the encoded frame in accordance with the decoded information of the second index;
generating a predictive macroblock by calculating a linear sum of the plurality of extracted reference macroblocks using weighting factors determined in accordance with the calculated inter-frame distances; and
decoding a video signal by adding the predictive macroblock and the decoded predictive error signal.

In a thirty-third aspect, the present invention provides a video decoding method of performing motion compensation predictive inter-frame decoding of a to-be-decoded macroblock of a video picture by using at least one past reference frame and a motion vector between the to-be-decoded macroblock and at least one reference frame, comprising:

receiving and decoding encoded data including a predictive error signal for the each to-be-decoded macroblock and information of one of the encoded first motion vector or a flag indicating the use of the second motion vector for a macroblock at the same intra-frame position as in an immediately previously encoded frame;
generating a predictive macroblock by using the decoded first motion vector for a to-be-decoded macroblock for which the information of the first motion vector is received and using the second motion vector for a to-be-decoded macroblock for which the flag is received; and
decoding a video signal by adding the predictive macroblock and the predictive error signal.

In a thirty-fourth aspect, the present invention provides a video decoding method of performing motion compensation predictive inter-frame decoding of a to-be-decoded macroblock of a video picture by using a motion vector between the to-be-decoded macroblock and at least one reference frame, comprising:

receiving and decoding encoded data including information of a predictive error signal for the each to-be-decoded macroblock, prediction mode information indicating one of a first prediction mode of using at least one to-be-encoded past frame as the reference frame, a second mode of using a to-be-encoded future frame as the reference frame, a third prediction mode of using a linear sum of the to-be-encoded past and future frames as the reference frame, and a fourth mode of using a linear sum of the plurality of to-be-encoded past frames as the reference frame, and information of the motion vector;
generating a predictive macroblock signal by using the prediction mode information and the information of the motion vector; and
decoding a video signal by adding the predictive macroblock signal and the decoded predictive error signal.

In a thirty-fifth aspect, the present invention provides a video encoding method of performing motion compensation predictive inter-frame encoding of a to-be-encoded macroblock of a video picture by using at least one reference frame selected from a plurality of reference frames and a motion vector between the to-be-encoded macroblock and at least the one reference frame, comprising:

skipping the motion compensation predictive inter-frame encoding with respect to a to-be-encoded macroblock when the motion vector coincides a predictive vector selected from motion vectors for a plurality of macroblocks adjacent to the to-be-encoded macroblock of the video picture, at least one reference frame selected for the to-be-encoded macroblock coincides with the macroblock from which the predictive vector is selected, and all to-be-encoded predictive error signals in the motion compensation predictive inter-frame encoding are 0, and encoding the number of macroblocks for which the motion compensation predictive inter-frame encoding is skipped in performing motion compensation predictive inter-frame encoding of a next to-be-encoded macroblock.

In a thirty-sixth aspect, the present invention provides a video encoding method of performing motion compensation predictive inter-frame encoding of a to-be-encoded macroblock of a video picture by using at least one first reference frame selected from a plurality of reference frames and a motion vector between the to-be-encoded macroblock and the first reference frame, comprising:

encoding predictive error signal obtained by the motion compensation predictive inter-frame encoding, a differential vector between a motion vector used for the motion compensation predictive inter-frame encoding and a predictive vector selected from motion vectors between the second reference frame and a plurality of macroblocks adjacent to the to-be-encoded macroblock, and a differential value between an index indicating the first reference frame and an index indicating the second reference frame.

In a thirty-seventh aspect, the present invention provides a video decoding method of performing motion compensation predictive inter-frame decoding of a to-be-decoded macroblock of a video picture by using a motion vector between the to-be-decoded macroblock and at least one reference frame selected from a plurality of reference frames, comprising:

receiving and decoding encoded data including a predictive error signal for the each to-be-decoded macroblock which is obtained by motion compensation predictive inter-frame encoding, the number of immediately previously skipped macroblocks, and information of an index indicating at least the one selected reference frame;
selecting one predictive vector from motion vectors for a plurality of macroblocks adjacent to the skipped macroblock;
generating a predictive macroblock in accordance with at least one reference frame for the macroblock from which the predictive vector is selected and the predictive vector; and
outputting the predictive macroblock as a decoded picture signal of the skipped macroblock.

In a thirty-eighth aspect, the present invention provides a video decoding method of performing motion compensation predictive inter-frame decoding of a to-be-decoded macroblock of a video picture by using a motion vector between the to-be-decoded macroblock and at least a first reference frame selected from a plurality of reference frames, comprising:

receiving and decoding encoded data including a predictive error signal obtained by motion compensation predictive inter-frame encoding, a differential vector between a motion vector used for the motion compensation predictive inter-frame encoding and a predictive vector selected from motion vectors between a plurality of macroblocks adjacent to the to-be-decoded macroblock and the second reference frame, and a differential value between a first index indicating the first reference frame and a second index indicating the second reference frame;
selecting the predictive vector from a plurality of macroblocks adjacent to the to-be-decoded macroblock;
reconstructing the motion vector by adding the selected predictive vector and the decoded differential vector;
reconstructing the first index by adding an index of a reference frame for the macroblock from which the predictive vector is selected and the decoded differential value;
generating a predictive macroblock in accordance with the reconstructed motion vector and the reconstructed first index; and
generating a decoded reconstructed picture signal of the to-be-decoded macroblock by adding the generated predictive macroblock and the decoded predictive error signal.

In a thirty-ninth aspect, the present invention provides a video encoding method of performing motion compensation predictive inter-frame of a to-be-encoded block in a to-be-encoded frame of a video picture by using a predetermined combination of a plurality of reference frames and a motion vector between the to-be-encoded block and at least one reference frame, comprising:

a step of determining at least one weighting factor from a ratio between an AC component value in the to-be-encoded frame and an AC component value in the reference frame;
a step of determining at least one DC offset value from a difference between a DC component value in the to-be-encoded frame and a DC component value in the reference frame;
a step of generating a predictive block by calculating a linear sum of a plurality of reference blocks extracted from the reference frames and adding the DC offset value;
a step of generating a predictive error signal between the predictive block and the to-be-encoded block; and

a step of encoding information of the predictive error signal, information of the reference frame, information of the weighting factor, information of the DC offset value, and information of the motion vector.

In an embodiment, the step of determining the weighting factor includes a step of detecting the AC component values in the to-be-encoded frame and in the entire reference frame or a pixel block including a plurality of pixels in the frame.

In an embodiment the step of determining the DC offset value includes a step of detecting the DC component values in the to-be-encoded frame and in the entire reference frame or a pixel block including a plurality of pixels in the frame.

In an embodiment the step of determining the weighting factor comprises determining the weighting factor by expressing the weighting factor by a rational number using a unique denominator which becomes a power of 2 set for the each to-be-encoded frame, and

the step of encoding comprises encoding information of the denominator and information of a numerator of the rational number as information of the weighting factor.

In an embodiment the step of determining the weighting factor comprises determining the weighting factor by expressing the weighting factor by a rational number which becomes a fixed value of a power of 2 regardless of the to-be-encoded frame, and

the step of encoding comprises encoding information of the numerator as information of the weighting factor.

In a fortieth aspect, the present invention provides a video decoding method of performing motion compensation predictive inter-frame of a to-be-decoded block in a to-be-decoded frame of a video picture by using a predetermined combination of a plurality of reference frames and a motion vector between the to-be-decoded block and at least one reference frame, comprising:

a step of decoding encoded data including information of a predictive error signal between a predictive block and the to-be-decoded block, information of the reference frame, information of a weighting factor, information of a DC offset value, and information of the motion vector;

a step of generating the predictive block by calculating a linear sum of a plurality of reference blocks extracted from the reference frames and adding the DC offset value; and a step of generating a reconstructed video signal by using the predictive error signal and a signal of the predictive block.

In an embodiment the weighting factor is expressed by a rational number using a unique denominator which becomes a power of 2 set for the each to-be-encoded frame, and the step of decoding comprises receiving information of the denominator and information of a numerator of the rational number as information of the weighting factor and decoding the information.

In an embodiment the weighting factor is expressed by a rational number which becomes a fixed value of a power of 2 regardless of the to-be-encoded frame, and

the step of decoding comprises receiving information of the numerator as information of the weighting factor and decoding the information.

Brief Description of Drawings

FIG. 1 is a block diagram showing a video encoding method according to the first embodiment of the present invention;
FIG. 2 is a block diagram showing a video decoding method according to the first embodiment of the present invention;
FIG. 3 is a view showing an inter-frame prediction relationship in video encoding and decoding methods according to the second embodiment of the present invention;
FIG. 4 is a view showing an inter-frame prediction relationship in video encoding and decoding methods according to the third embodiment of the present invention;
FIG. 5 is a view showing an inter-frame prediction relationship in video encoding and decoding methods according to the fourth embodiment of the present invention;
FIG. 6 is a view for explaining vector information encoding and decoding methods according to the fifth embodiment of the present invention;
FIG. 7 is a view for explaining vector information encoding and decoding methods according to the sixth embodiment of the present invention;
FIG. 8 is a view for explaining vector information encoding and decoding methods according to the seventh embodiment of the present invention;
FIG. 9 is a block diagram showing a video encoding apparatus for executing a video encoding method according to the eighth embodiment of the present invention;

FIG. 10 is a flow chart showing a sequence in a video encoding method according to the ninth embodiment of the present invention;

FIG. 11 is a view showing an example of the data structure of the picture header or slice header of to-be-encoded video data in the ninth embodiment;

FIG. 12 is a view showing an example of the data structure of a macroblock of to-be-encoded video data in the ninth embodiment;

FIG. 13 is a view showing the overall data structure of to-be-encoded video data according to the ninth embodiment;

FIG. 14 is a flow chart showing a sequence in a video decoding method according to the ninth embodiment;

FIG. 15 is a view for explaining temporal linear interpolation in the ninth embodiment;

FIG. 16 is a view for explaining temporal linear interpolation in the ninth embodiment;

FIG. 17 is a view showing an example of a linear predictive coefficient table according to the first and eighth embodiments;

FIG. 18 is a view showing an example of a linear predictive coefficient table according to the first and eighth embodiments;

FIG. 19 is a view showing an example of a table indicating reference frames according to the first and eighth embodiments;

FIG. 20 is a block diagram showing a video encoding apparatus according to the 10th embodiment of the present invention;

FIG. 21 is a block diagram showing a video decoding apparatus according to the 10th embodiment of the present invention;

FIG. 22 is a view showing an example of a syntax indicating linear predictive coefficients according to the embodiment of the present invention;

FIG. 23 is a view showing an example of a table showing reference frames according to the embodiment of the present invention;

FIG. 24 is a view for explaining a motion vector information predictive encoding method according to the embodiment of the present invention;

FIG. 25 is a view for explaining a motion vector information predictive encoding method according to the embodiment of the present invention;

FIG. 26 is a block diagram showing the arrangement of a video encoding apparatus according to the fourth embodiment of the present invention;

FIG. 27 is a view for explaining an example of a linear predictive coefficient determination method according to the embodiment of the present invention;

FIG. 28 is a view for explaining an example of a linear predictive coefficient determination method according to the embodiment of the present invention;

FIG. 29 is a view for explaining an example of a linear predictive coefficient determination method according to the embodiment of the present invention;

FIG. 30 is a view for explaining an example of a linear predictive coefficient determination method according to the embodiment of the present invention;

FIG. 31 is a view for explaining an example of a linear predictive coefficient determination method according to the embodiment of the present invention;

FIG. 32 is a view for explaining a motion vector search method according to the embodiment of the present invention;

FIG. 33 is a view for explaining a motion vector search method according to the embodiment of the present invention;

FIG. 34 is a view for explaining a motion vector encoding method according to the embodiment of the present invention;

FIG. 35 is a view for explaining a motion vector encoding method according to the embodiment of the present invention;

FIG. 36 is a view showing an inter-frame prediction relationship according to the embodiment of the present invention;

FIG. 37 is a view for explaining a motion vector encoding method according to the embodiment of the present invention;

FIG. 38 is a view for explaining a motion vector encoding method according to the embodiment of the present invention;

FIG. 39 is a view for explaining a motion vector encoding method according to the embodiment of the present invention;

FIG. 40 is a flow chart showing a procedure for video encoding according to the embodiment of the present invention;

FIG. 41 is a view for explaining a weighting prediction according to the embodiment of the present invention;

FIG. 42 is a view showing the data structure of a picture header or slice header according to the embodiment of the present invention;

FIG. 43 is a view showing the first example of the data structure of a weighting prediction coefficient table according to the embodiment of the present invention;

FIG. 44 is a view showing the second example of the data structure of a weighting prediction coefficient table according to the embodiment of the present invention;

FIG. 45 is a view showing the data structure of to-be-encoded video data according to the embodiment of the present invention; and

FIG. 46 is a flow chart showing a procedure for video decoding according to the present invention of the present invention.

Best Mode for Carrying Out the Invention

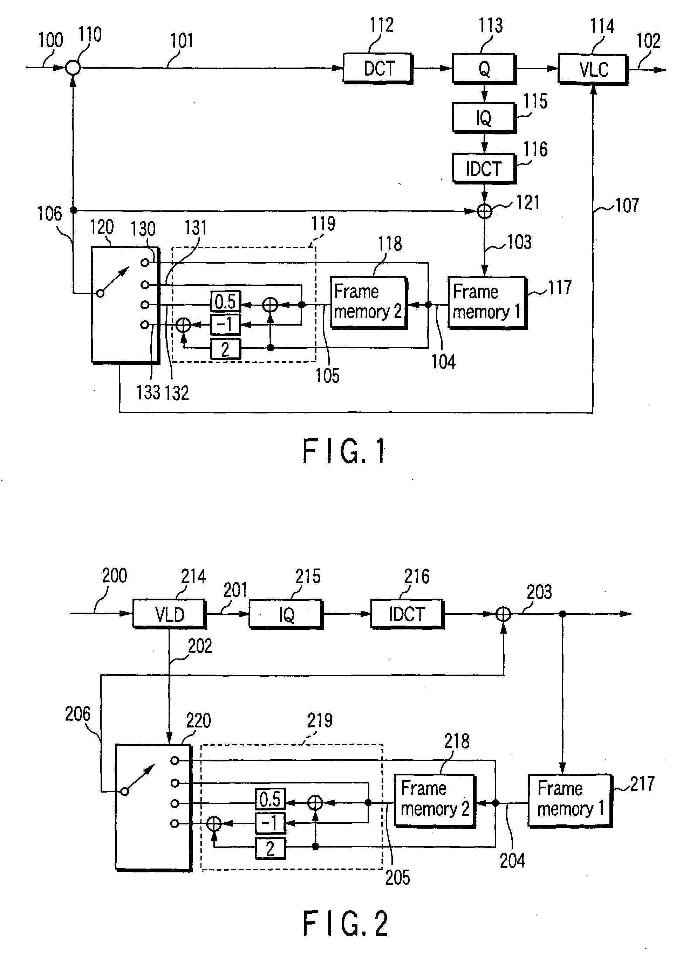

FIG. 1 is a block diagram showing a video encoding apparatus which executes a video encoding method according to an embodiment of the present invention. According to this apparatus, a predictive macroblock generating unit 119 generates a predictive picture from the frame stored in a first reference frame memory 117 and the frame stored in a second reference frame memory 118. A predictive macroblock selecting unit 120 selects an optimal predictive macroblock from the predictive picture. A subtracter 110 generates a predictive error signal 101 by calculating the difference between an input signal 100 and a predictive signal 106. A DCT (Discrete Cosine Transform) unit 112 performs DCT for the predictive error signal 101 to send the DCT signal to a quantizer 113. The quantizer 113 quantizes the DCT signal to send the quantized signal to a variable length encoder 114. The variable length encoder 114 variable-length-encodes the quantized signal to output encoded data 102. The variable length encoder 114 encodes motion vector information and prediction mode information (to be described later) and outputs the resultant data together with the encoded data 102. The quantized signal obtained by the quantizer 113 is also sent to a dequantizer 115 to be dequantized. An adder 121 adds the dequantized signal and the predictive signal 106 to generate a local decoded picture 103. The local decoded picture 103 is written in the first reference frame memory 117.

In this embodiment, the predictive error signal 101 is encoded by a DCT transform, quantization, and variable length encoding. However, the DCT transformation may be replaced with a wavelet transform, or the variable length encoding may be replaced with arithmetic encoding.

In this embodiment, a local decoded picture of the frame encoded immediately before the current frame is stored in the first reference frame memory 117, and a local decoded picture of the frame encoded further before the above frame is stored in the second reference frame memory 118. The predictive macroblock generating unit 119 generates a predictive macroblock signal 130, predictive macroblock signal 131, predictive macroblock signal 132, and predictive macroblock signal 133. The predictive macroblock signal 130 is a signal extracted from only the picture in the first reference frame memory 117. The predictive macroblock signal 131 is a macroblock signal extracted from only the picture in the second reference frame memory 118. The predictive macroblock signal 132 is a signal obtained by averaging the reference macroblock signals extracted from the first and second reference frame memories. The predictive macroblock signal 133 is a signal obtained by subtracting the reference macroblock signal extracted from the second reference frame memory 118 from the signal obtained by doubling the amplitude of the reference macroblock signal extracted from the first reference frame memory 117. These predictive macroblock signals are extracted from a plurality of positions in the respective frames to generate a plurality of predictive macroblock signals.

The predictive macroblock selecting unit 120 calculates the difference between each of the plurality of predictive macroblock signals generated by the predictive macroblock generating unit 119 and the to-be-encoded macroblock signal extracted from the input video signal 100. The predictive macroblock selecting unit 120 then selects one of the predictive macroblock signals, which exhibits a minimum error for each to-be-encoded macroblock, and sends the selected one to the subtracter 110. The subtracter 110 calculates the difference between the selected predictive macroblock signal and the input signal 100, and outputs the predictive error signal 101. The position of the selected predictive macroblock relative to the to-be-encoded macroblock and the generation method for the selected predictive macroblock signal (one of the signals 130 to 133 in FIG. 1) are respectively encoded as a motion vector and prediction mode for each to-be-encoded block.

The variable length encoder 114 encodes the encoded DCT coefficient data 102 obtained through the DCT transformer 112 and quantizer 113 and side information 107 containing the motion vector information and prediction mode information output from the predictive mode selecting unit 120, and outputs the resultant data as encoded data 108. The encoded data 108 is sent out to a storage system or transmission system (not shown).

In this case, when a video signal is formed of a luminance signal and chrominance signals, the predictive signal 106 is generated by applying the same motion vector and prediction mode to the signal components of the respective macroblocks.

FIG. 2 is a block diagram of a video decoding apparatus, which executes a video decoding method according to an embodiment of the present invention. The video decoding apparatus in FIG. 2 receives and decodes the data encoded by the video encoding apparatus according to the first embodiment shown in FIG. 1.

More specifically, a variable length decoding unit 214 decodes the variable length code of input encoded data 200 to extract a predictive error signal 201 and prediction mode information 202. The predictive error signal 201 is subjected to dequantization and inverse DCT in a dequantizing unit 215 and inverse DCT unit 216. The resultant data is added to a predictive signal 206 to generate a decoded picture 203.

The decoded picture 203 is written in a first reference frame memory 217. The predictive signal 206 is generated by a predictive macroblock generating unit 219 and predictive macroblock selecting unit 220 from picture signals 204 and 205 in accordance with the motion vector and prediction mode extracted from the encoded data 200. The picture signal 204 is a picture signal decoded immediately before the encoded data 200 and recorded on the first reference frame memory 217. The picture signal 205 is a picture signal decoded before the picture signal 204 and stored in a second reference frame memory 218. The predictive signal 206 is the same predictive signal as the predictive macroblock signal used at the time of encoding.

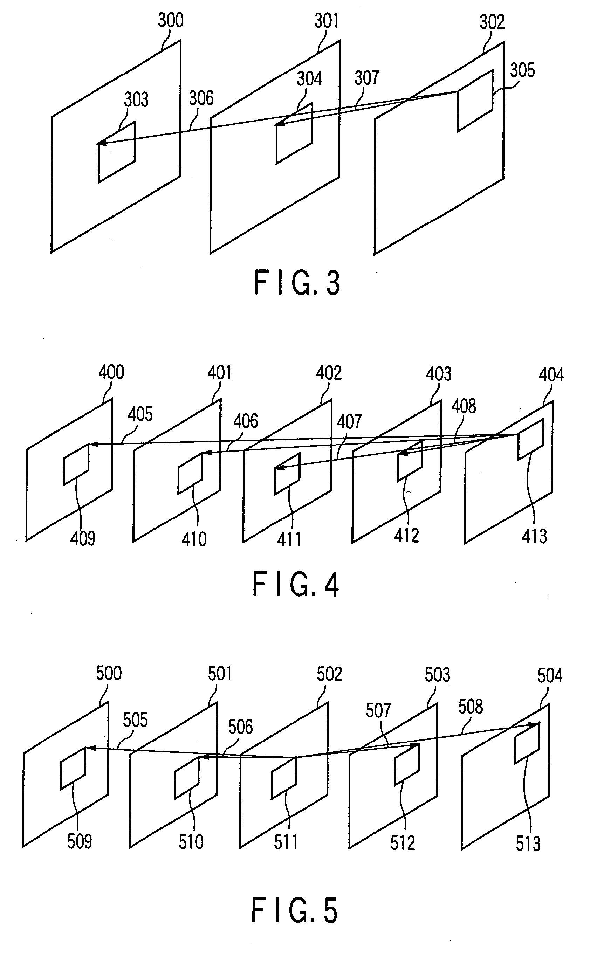

FIG. 3 schematically shows a relationship of an inter-frame prediction using two reference frames in video encoding and decoding methods according to the second embodiment of the present invention. FIG. 3 shows a to-be-encoded frame 302, a frame 301 immediately preceding the to-be-encoded frame 302, and a frame 300 further preceding the frame 302. While the frame 302 is encoded or decoded, a decoded picture of the frame 301 is stored in the first reference frame memory 117 in FIG. 2 or the first reference frame memory 217 in FIG. 2, and the frame 300 is stored in the second reference frame memory 118 in FIG. 1 or the second reference frame memory 218 in FIG. 2.

A macroblock 305 in FIG. 3 is a to-be-encoded macroblock, which is generated by using either or both of a reference macroblock 303 in the reference frame 300 and a reference macroblock 304 in the reference frame 301. Vectors 306 and 307 are motion vectors, which respectively indicate the positions of the reference macroblocks 303 and 304. In encoding operation, a search is made for an optimal motion vector and prediction mode for the to-be-encoded macroblock 305. In decoding operation, a predictive macroblock signal is generated by using the motion vector and prediction mode contained in the encoded data.

FIGS. 4 and 5 show examples of inter-frame prediction using three or more reference frames according to the third and fourth embodiments of the present invention. FIG. 4 shows an example of using a plurality of past reference frames, i.e., a linear extrapolation prediction. FIG. 5 shows an example of using a plurality of past and future reference frames, i.e., a linear interpolation prediction.

Referring to FIG. 4, a frame 404 is a to-be-encoded frame, and frames 400 to 403 are reference frames for the frame 404. Reference numeral 413 in FIG. 4 denotes an encoded macroblock 413. In encoding operation, reference macroblocks (409 to 412 in FIG. 4) are extracted from the respective reference frames for each to-be-encoded macroblock in accordance with motion vectors (405 to 408 in FIG. 4) for the respective reference frames. A predictive macroblock is generated from a plurality of reference macroblocks by a linear extrapolation prediction.

A combination of a prediction mode and one of a plurality of reference macroblocks or a motion vector exhibiting a minimum predictive error in one of prediction modes for a predictive macroblock based on a linear prediction is selected. One combination of linear predictive coefficients is determined for each to-be-encoded frame from a change in average luminance between frames over time or the like. The determined combination of predictive coefficients is encoded as header data for the to-be-encoded frame. The motion vector of each macroblock, a prediction mode, and a predictive error signal are encoded for each macroblock.

In decoding operation, a combination of linear predictive coefficients received for each frame is used to generate a predictive macroblock for each macroblock from a plurality of reference frames in accordance with a motion vector and prediction mode information. The encoded data is decoded by adding the predictive macroblock to the predictive error signal.

Referring to FIG. 5, a frame 502 is a to-be-encoded frame, and frames 500, 501, 503, and 504 are reference frames. In the case shown in FIG. 5, in encoding operation and decoding operation, the frames 500, 501, 503, 504, and 502 are rearranged in this order. In the case of encoding, a plurality of local decoded picture frames are used as reference frames. In the case of decoding, a plurality of encoded frames are used as reference frames. For a to-be-encoded macroblock 511, one of reference macroblocks 509, 510, 512, and 513 or one of the predictive signals obtained from them by linear interpolation predictions is selected on a macroblock basis and encoded, as in the embodiment shown in FIG. 4.

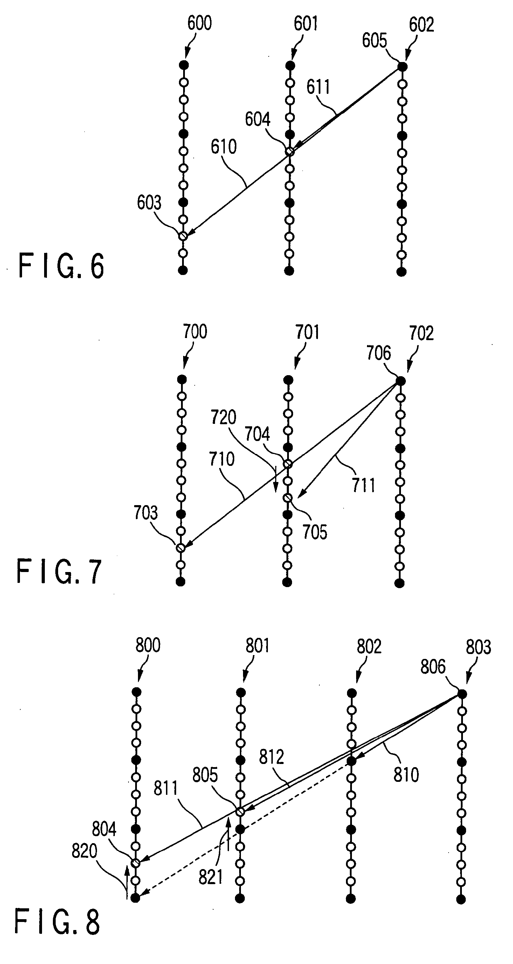

FIG. 6 shows encoding and decoding methods for motion vector information according to the fifth embodiment of the present invention. Assume that in inter-frame encoding operation using a plurality of reference frames as in the embodiment shown in FIG. 3, a predictive macroblock signal is generated for each to-be-encoded macroblock by using a plurality of reference macroblock signals. In this case, a plurality of pieces of motion vector information must be encoded for each macroblock. Therefore, as the number of macroblocks to be referred to increases, the overhead for motion vector information to be encoded increases. This causes a deterioration in encoding efficiency. According to the method shown in FIG. 6, when a predictive macroblock signal is to be generated by extracting reference macroblock signals from two reference frames, respectively, one motion vector and the motion vector obtained by scaling the motion vector in accordance with the inter-frame distance are used.

A frame 602 is a to-be-encoded frame, and frames 601 and 600 are reference frames. Vectors 611 and 610 are motion vectors. Each black point indicates a pixel position in the vertical direction, and each white point indicates an interpolated point with a precision of 1/4 pixel. FIG. 6 shows a case wherein a motion compensation prediction is performed with a precision of 1/4 pixel. A motion compensation pixel precision is defined for each encoding scheme as 1 pixel, 1/2 pixel, 1/8 pixel, or the like. In general, a motion vector is expressed by a motion compensation precision. A reference picture is generally generated by interpolating the picture data of reference frames.

Referring to FIG. 6, with regard to a pixel 605 in the to-be-encoded frame 602, a point 603 vertically separated, by 2.5 pixels, from a pixel in the reference frame 600 which corresponds to the pixel 605 is referred to, and the motion vector 610 indicating a shift of 2.5 pixels is encoded. On the other hand, a motion vector extending from the pixel 605 to the reference frame 601 is generated by scaling the encoded motion vector 610 in accordance with the inter-frame distance. In this case, the motion vector 611 extending from the pixel 605 to the frame 601 is a vector corresponding to a shift of 2.5/2 = 1.25 pixels from a pixel in the frame 601 corresponding to the pixel 605 in consideration of the inter-frame distance. A pixel 604 in the reference frame 601 is used as a reference pixel for the pixel 605 in the to-be-encoded frame 602.

Since motion vectors are scaled with the same precision in encoding and decoding operations, only one motion vector needs to be encoded for each macroblock even when a to-be-encoded macroblock refers to a plurality of frames. In this case, if the motion vector scaling result does not exist on any of sampling points with the motion compensation precision, the scaled motion is rounded by rounding off its fractions to the nearest whole number.

FIG. 7 shows a motion vector information encoding and decoding methods according to the sixth embodiment of the present invention, which differ from those of the embodiment shown in FIG. 6. In the embodiment shown in FIG. 6, when the temporal moving speed of a video picture is constant, the overhead for motion vectors with respect to encoded data can be efficiently reduced. In a case wherein the temporal movement of a video picture is monotonous but the moving speed is not constant, the use of a simply scaled motion vector may lead to a decrease in prediction efficiency and hence a decrease in encoding efficiency. In the case shown in FIG. 7, as in the case shown in FIG. 6, a predictive pixel is generated from two reference frames 700 and 701 by using a pixel 706 as a reference pixel. Assume that a pixel 703 in the frame 700 and a pixel 705 in the frame 701 are referred to.

As in the fifth embodiment shown in FIG. 6, a motion vector 710 with respect to the frame 700 is encoded. A differential vector 720 between a motion vector 711 with respect to the frame 701 and the vector obtained by scaling the motion vector 710 is encoded. That is, the vector generated by scaling the motion vector 710 to 1/2 indicates a pixel 704 in the frame 701, and the differential vector 720 indicating the difference amount between the predictive pixel 705 and the pixel 704 is encoded. In general, the magnitude of the above differential vector decreases with respect to a temporally monotonous movement. Even if, therefore, the moving speed is not constant, the prediction efficiency does not decrease, and an increase in the overhead for a motion vector is suppressed. This makes it possible to perform efficient encoding.

FIG. 8 shows still other motion vector information encoding and decoding methods according to the seventh embodiment of the present invention. In the embodiment shown in FIG. 8, a frame 803 is a to-be-encoded frame, and frames 801 and 800 are used as reference frames with a frame 802 being skipped. With respect to a pixel 806, a pixel 804 in the reference frame 800 and a pixel 805 in the reference frame 801 are used as reference pixels to generate a predictive pixel.

As in the embodiment shown in FIG. 6 or 7, a motion vector 811 with respect to the reference frame 800 is encoded. A motion vector with respect to the reference frame 801 can also be generated by using the motion vector obtained by scaling the motion vector 811. In the case shown in FIG. 8, however, the motion vector 811 must be scaled to 2/3 in consideration of the distance between the reference frame and the to-be-encoded frame. In the embodiment shown in FIG. 8 and other embodiments, in order to perform arbitrary scaling, division is required because the denominator becomes an arbitrary integer other than a power of 2. Motion vectors must be scaled in both encoding operation and decoding operation. Division, in particular, requires much cost and computation time in terms of both hardware and software, resulting in increases in encoding and decoding costs.

In the embodiment shown in FIG. 8, a motion vector 810 obtained by normalizing the to-be-encoded motion vector 811 with the inter-frame distance is encoded. The differential vector between the motion vector obtained by scaling the normalized motion vector 810 and the original motion vector is encoded in accordance with the distance between the to-be-encoded frame and each reference frame. That is, the reference pixel 804 is generated from the motion vector obtained by tripling the normalized motion vector 810 and a differential vector 820. The reference pixel 805 is generated from the motion vector obtained by doubling the normalized motion vector 810 and a differential vector 821. The method shown in FIG. 8 prevents an increase in the encoding overhead for motion vectors without decreasing the prediction efficiency. In addition, since scaling of a motion vector can be done by multiplication alone, increases in the computation costs for encoding and decoding operations can also be suppressed.

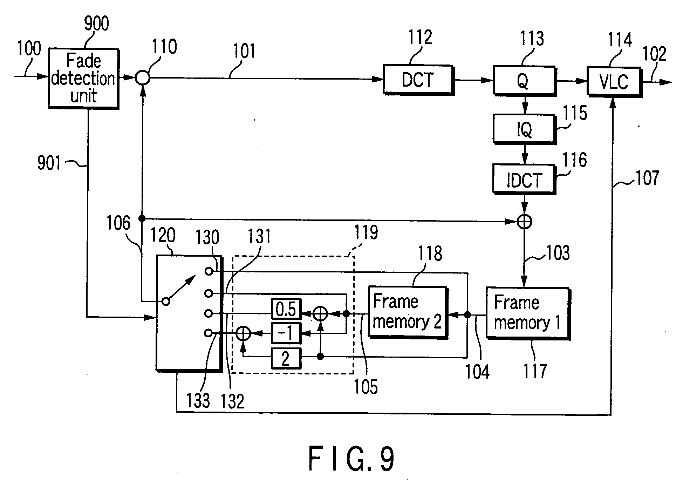

FIG. 9 is a block diagram of a video encoding apparatus, which executes a video encoding method according to the eighth embodiment of the present invention. In the eighth embodiment, a fade detecting unit 900 for an input picture 900 is added to the video encoding apparatus according to the macroblock shown in FIG. 1. The fade detecting unit 900 calculates an average luminance value for each frame of the input video signal. If a change in luminance over time has a predetermined slope, it is determined that the picture is a fading picture. A result 901 is notified to a predictive mode selecting unit 120.

If the fade detecting unit 900 determines that the input picture is a fading picture, a prediction mode is limited to a prediction from one reference frame or a prediction based on linear extrapolation or linear interpolation of a plurality of reference frames. An optimal motion vector and prediction mode are then determined for each macroblock. The first flag indicating the determined motion vector and prediction mode is written in the header of a macroblock, and a predictive error signal is encoded. Meanwhile, the second flag indicating a possible prediction mode combination is written in the header data of the frame.

If the fade detecting unit 900 determines that the picture is not a fading picture, a prediction mode is limited to a prediction from one reference frame or a prediction based on the average value of a plurality of reference frames. An optimal motion vector and prediction mode are then determined. The motion vector, prediction mode, and predictive error signal 101 are encoded.

When the data encoded by the method of the embodiment shown in FIG. 9 is to be decoded, a prediction mode for each macroblock is determined from the first and second flags indicating a prediction mode. A predictive macroblock signal is generated from a motion vector sent for each macroblock and the determined prediction mode. The encoded predictive error signal is decoded and added to the predictive signal to decode the encoded data. This method can reduce the encoding overhead for prediction mode information.

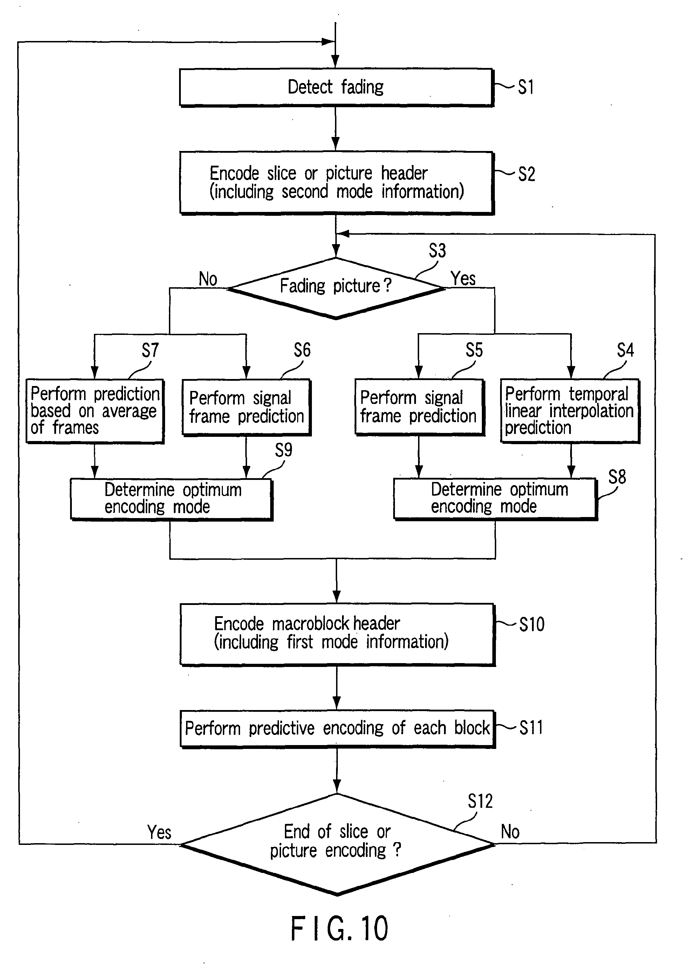

A sequence in a video encoding method according to the ninth embodiment of the present invention will be described with reference to FIG. 10.

To-be-encoded video frames are input one by one to a video encoding apparatus (not shown). A fading picture is detected for each slice formed from an entire frame or a plurality of pixel blocks in the frame on the basis of a change in intra-frame average luminance value over time or the like (step S1). A single frame prediction mode or linear sum prediction mode is selected for each pixel block in a frame. The single frame prediction mode is a prediction mode of generating a predictive pixel block signal by selecting one optimal reference frame from a plurality of reference frames. The linear sum prediction mode is a prediction mode of generating a predictive pixel block by a prediction based on the linear sum of two reference pixel block signals.

In the linear sum prediction mode, when an input video picture is detected as a fading picture, a temporal linear interpolation (interpolation or extrapolation based on an inter-frame time distance) prediction is performed to generate a predictive pixel block. If the input video picture is not a fading picture, a predictive picture block is generated from the average value of two reference pixel block signals. Second to-be-encoded mode information indicating whether a linear sum prediction using a plurality of frames is an average value prediction or temporal linear interpolation prediction is encoded as the header data of a frame (picture) or slice (step S2).

It is checked whether or not the input video picture is a fading picture (step S3). If it is determined that the input video picture is a fading picture, an encoding mode which exhibits a higher encoding efficiency and the small number of encoded bits is determined for each pixel block from an encoding mode of selecting a single prediction block from a plurality of reference frames (step S5) and an encoding mode based on a temporal linear interpolation prediction (step S4) (step S8).

A macroblock header containing the first encoding mode information indicating the single frame prediction mode or linear sum prediction mode and other pieces of information concerning the selected encoding mode (e.g., the identification information of a reference frame to be used for a prediction and motion vector) is encoded (step S10). Finally, the differential signal (predictive error signal) between the selected predictive block signal and the signal of the to-be-encoded block is encoded (step S11), and the encoded data is output (S12).

If NO in step S3, an optimal encoding mode is selected from the single frame prediction mode (step S6) and the average value prediction mode (step S7) (step S9). Subsequently, in the same manner, encoding of the information concerning the encoding mode (step S10) and encoding of the differential signal (step S11) are performed.

When each block in a frame or slice is encoded in accordance with the fade detection result in step 51, and encoding of all the pixel blocks in one frame (picture) or one slice is completed (step S12), fade detection is performed with respect to the frame or slice to be encoded next (step S1). Encoding is performed through similar steps.

According to the above description, one frame is encoded as one picture. However, one frame may be encoded as one picture on a field basis.

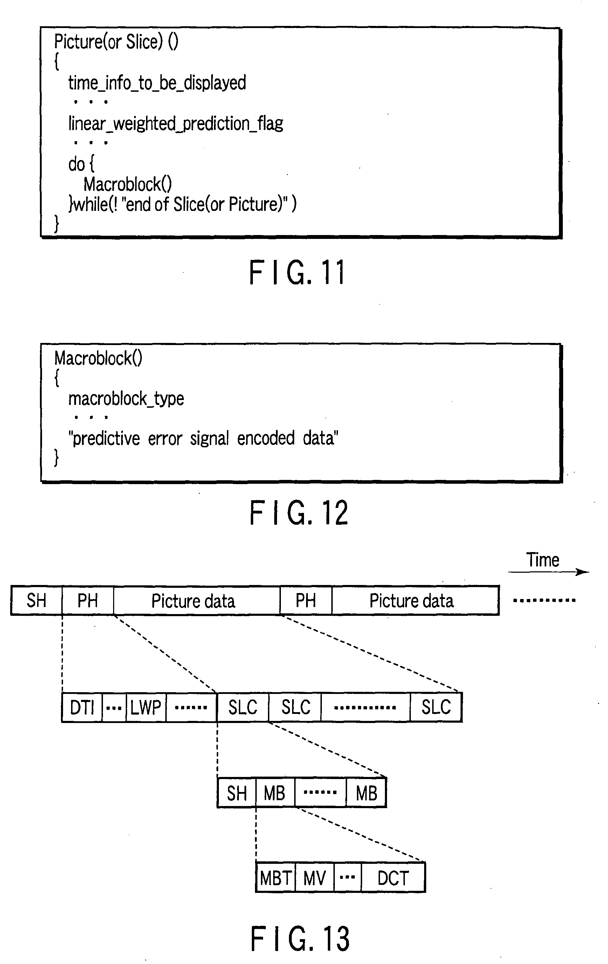

FIGS. 11 and 12 show the structure of to-be-encoded video data according to this embodiment. FIG. 11 shows part of the data structure, which includes the header data of a picture or slice. FIG. 12 shows part of macroblock data. In the header area of the picture or slice, the following information is encoded: information "time_info_to_be_displayed" concerning the display time of a to-be-encoded frame, and flag "linear_weighted_prediction_flag" which is the second encoding mode information indicating whether or not an average value prediction is selected. In this case, "linear_weighted_prediction_flag" = 0 represents an average value prediction, and "linear_weighted_prediction_flag" = 1 rep-

**EP 1 830 578 A1**

resents a temporal linear interpolation prediction.

The encoded data of a picture or slice contains a plurality of encoded macroblock data. Each macroblock data has a structure like that shown in FIG. 12. In the header area of the macroblock data, information (first encoding mode information) indicating a single frame prediction based on a selected single frame or a prediction based on the linear sum of a plurality of frames is encoded as "macroblock_type", together with selection information concerning a reference frame, motion vector information, and the like.

FIG. 13 schematically shows the overall time-series structure of the to-be-encoded video data including the structure shown in FIGS. 11 and 12. In the head of the to-be-encoded data, information of a plurality of encoding parameters which remain constant within one encoding sequence, such as a picture size, is encoded as a sequence header (SH).

Each picture frame or field is encoded as a picture, and each picture is sequentially encoded as a combination of a picture header (PH) and picture data (Picture data). In the picture header (PH), information "time_info_to_be_displayed" concerning the display time of the to-be-encoded frame shown in FIG. 11 and second encoding mode information "linear_weighted_prediction_flag" are respectively encoded as DTI and LWP. The picture data is divided into one or a plurality of slices (SLC), and the data are sequentially encoded for each slice. In each slice SLC, an encoding parameter associated with each pixel block in the slice is encoded as a slice header (SH), and one or a plurality of macroblock data (MB) are sequentially encoded following the slice header SH. The macroblock data MB contains encoded data MBT of "macroblock_type" which is the first encoding mode information shown in FIG. 12, the encoded information concerning encoding of each pixel in the macroblock, e.g., motion vector information (MV), and the orthogonal transform coefficient (DCT) obtained by performing an orthogonal transform (e.g., a discrete cosine transform) of the to-be-encoded pixel signal or predictive error signal and encoding it.

In this case, second encoding mode information "linear_weighted_prediction_flag" contained in the picture header HP may be encoded by the slice header SH for each slice.

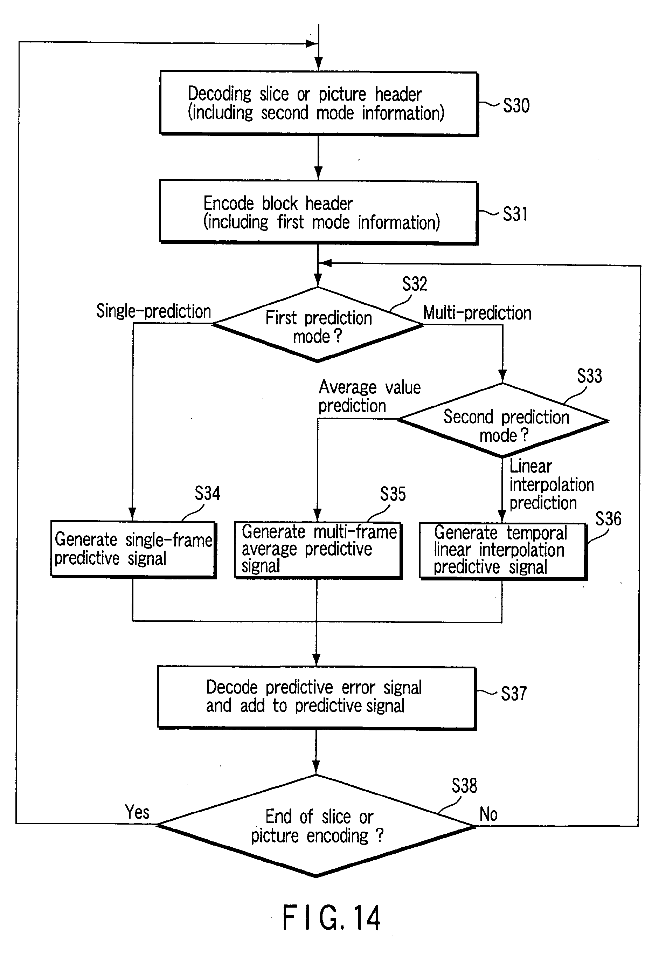

A sequence in a video decoding method according to the ninth embodiment will be described below with reference to FIG. 14.

In the video encoding method of this embodiment, encoded data which is encoded by the video encoding method shown in FIG. 10 and has a data structure like that shown in FIGS. 11 and 12 is input and decoded. The header information of a picture or slice contained in the input coded data is decoded. More specifically, information "time_info_to_be_displayed" concerning the display time of a to-be-encoded frame and second encoding mode information "linear_weighted_prediction_flag" are decoded (step S30).

In addition, the header information of each macroblock in the picture or slice is decoded. That is, "macroblock_type" including the identification information of a reference frame, motion vector information, and first encoding mode information and the like are decoded (step S31).

If the decoded first encoding mode information indicates a single frame prediction, a predictive block signal is generated in accordance with the identification information of a reference frame and prediction mode information such as motion vector information (step S34). Assume the first encoding mode information indicates a prediction based on the linear sum of a plurality of frames. In this case, in accordance with the decoded second encoding mode information (step S33), a predictive signal is generated by either an average prediction method (step S35) or a temporal linear interpolation prediction method (step S36).

The encoded predictive error signal is decoded and added to the predictive signal. With this operation, a decoded picture is generated (step S37). When each macroblock in the picture or slice is sequentially decoded, starting from each macroblock head, and all the macroblocks in the picture or slice are completely decoded (step S38), decoding is consecutively performed again, starting from a picture or slice header.

As described above, according to this embodiment, information concerning encoding modes is divided into the first encoding mode information indicating a single frame prediction or a prediction based on the linear sum of a plurality of frames, and the second encoding mode information indicating whether a prediction based on a linear sum is a temporal linear interpolation prediction or an average prediction. The first encoding mode information is encoded for each macroblock. The second encoding mode information is encoded for each picture or slice. This makes it possible to reduce the encoding overhead for to-be-encoded mode information while maintaining the encoding efficiency.

That is, the second encoding mode information indicates broad-based characteristics in a frame such as a fading picture. If, therefore, the second encoding mode information is encoded for each slice or frame, an increase in code amount required to encode the encoding mode information itself can be suppressed while a great deterioration in encoding efficiency can be suppressed as compared with the method of encoding the information for each macroblock.

Encoding the first encoding mode information for each macroblock makes it possible to determine an appropriate mode in accordance with the individual characteristics of each pixel block (e.g., a picture that partly appears and disappears over time). This makes it possible to further improve the encoding efficiency.

In this embodiment, since the encoding frequencies of the first encoding mode information and second encoding mode information are determined in consideration of the characteristics of video pictures, high-efficiency, high-picture-quality encoding can be done.

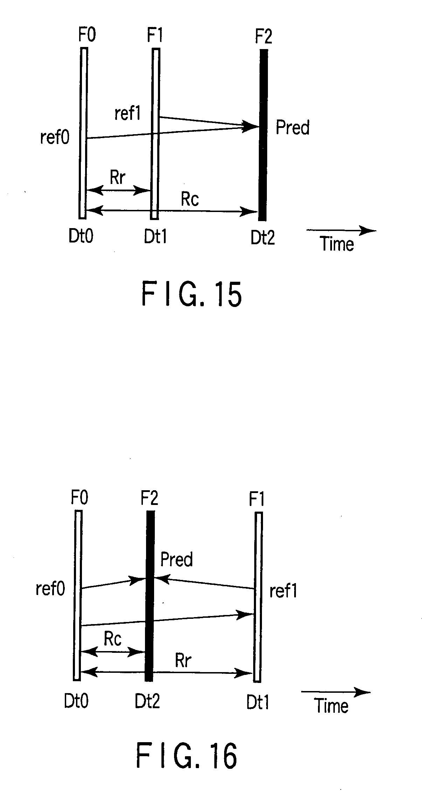

A temporal linear interpolation prediction in this embodiment will be described in detail next with reference to FIGS. 15 and 16.

Reference symbols F0, F1, and F2 in FIG. 15 and reference symbols F0, F2, and F1 in FIG. 16 denote temporally consecutive frames. Referring FIG. 15 and 16, the frame F2 is a to-be-encoded or to-be-decoded frame, and the frames F0 and F1 are reference frames. Assume that in the embodiment shown in FIGS. 15 and 16, a given pixel block in a to-be-encoded frame or a to-be-decoded frame is predicted from the linear sum of two reference frames.

If the linear sum prediction is an average value prediction, a predictive pixel block is generated from the simple average of the reference blocks extracted from the respective reference frames. Letting ref0 and ref1 be the reference pixel block signals extracted from the frames F0 and F1, respectively, each of predictive pixel block signals pred2 in FIGS. 15 and 16 is given by

$$pred2 = (\ ref0\ +\ ref1\ )\ /\ 2 \qquad (15)$$

If the linear sum prediction is a temporal linear interpolation prediction, a linear sum is calculated in accordance with the time difference between a to-be-encoded frame or a to-be-decoded frame and each reference frame. As shown in FIG. 11, information "time_info_to_be_displayed" concerning a display time in a picture or slice header area is encoded for each to-be-encoded frame. At the time of decoding, the display time of each frame is calculated on the basis of this information. Assume that the display times of the frames F0, F1, and F2 are respectively represented by Dt0, Dt1, and Dt2.

The embodiment shown in FIG. 15 exemplifies a linear extrapolation prediction for predicting the current frame from two past frames. The embodiment shown in FIG. 16 exemplifies a linear interpolation prediction from future and past frames. Referring to FIGS. 15 and 16, letting Rr be the time distance between two reference frames, and Rc be the time distance from the earliest reference frame with respect to a to-be-encoded frame to the to-be-encoded frame, the time distance Rr is given by

$$Rr = Dt1 - Dt0, \quad Rc = Dt2 - Dt0 \qquad (16)$$

In both the cases shown in FIGS. 15 and 16, the linear extrapolation prediction and liner interpolation prediction based on the above time distances are calculated by

$$pred2 = \{\ (Rr-Rc)*ref0 + Rc*ref1\ \}\ /\ Rr \qquad (17)$$

Equation (17) can be transformed into equation (18):

$$Pred2 = ref0\ +\ (ref1 - ref0)*\ Rc/\ Rr \qquad (18)$$

In a picture such as a fading picture or cross-fading picture whose signal amplitude monotonously varies over time between frames, the time jitter in signal amplitude can be linearly approximated within a very short period of time (e.g., equivalent to three frames). As in this embodiment, therefore, a more accurate predictive picture can be generated by performing temporal linear interpolation (linear extrapolation or linear interpolation) in accordance with the time distance between a to-be-encoded frame and each of two reference frames. As a consequence, the inter-frame prediction efficiency improves. This makes it possible to reduce the generated code amount without degrading the picture quality. Alternatively, this makes it possible to perform higher-quality encoding with the same bit rate.

The above encoding and decoding processing in the present invention may be implemented by hardware, or part or all of the processing can be implemented by software.

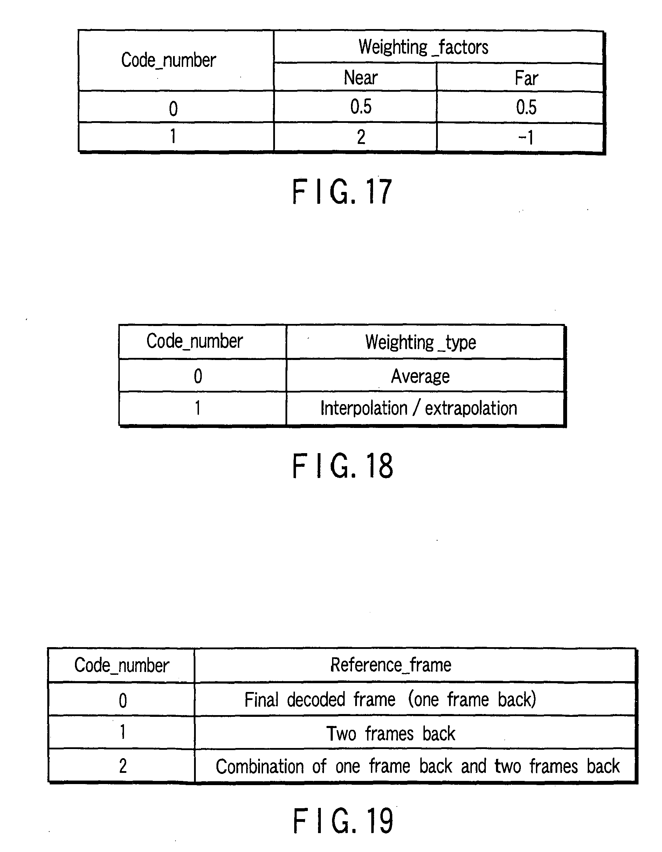

FIGS. 17 and 18 each show an example of a predictive coefficient table used for one of the prediction modes in the first and eighth embodiments which is based on the linear sum of a plurality of reference frames. Predictive coefficients change on the macroblock basis in the first embodiment, and change on the frame basis in the eighth embodiment. There is a combination of two coefficients: "average" and "linear extrapolation".

An index (Code_number) shown in FIGS. 17 and 18 is encoded as header data for each macroblock or frame. In the eighth embodiment, since a linear predictive coefficient is constant for each frame, encoding may be performed by using only the header data of a frame. In the predictive coefficient table shown in FIG. 17, the numerical values of the coefficients are explicitly defined. The predictive coefficient table shown in FIG. 18 indicates "average" or "linear prediction (interpolation or extrapolation)". By encoding such indexes, the amount of information to be encoded can be reduced, and hence the encoding overhead can be reduced as compared with the case wherein linear predictive coefficients are directly encoded.

FIG. 19 is a table indicating a combination of reference frames (Reference_frame) associated with various prediction modes in the first and eighth embodiments of the present invention. Referring to FIG. 19, Code_number = 0 indicates a combination of reference frames in a prediction mode from an immediately preceding frame (one frame back); Code_number = 1, in a prediction mode two frames back; and Code_number = 2, in a prediction mode based on the linear sum of frames one frame back and two frames back. In the case of Code_number = 2, the prediction mode using the above linear predictive coefficients is used.

In the first and eighth embodiments, the combinations of reference frames can be changed on the macroblock basis, and the indexes in the table in FIG. 19 are encoded on the macroblock basis.

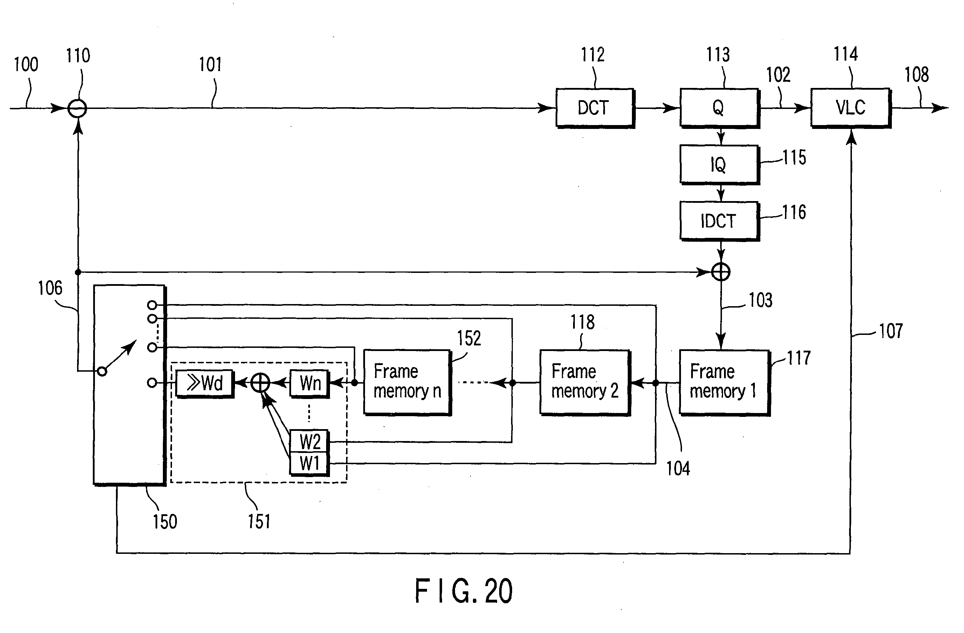

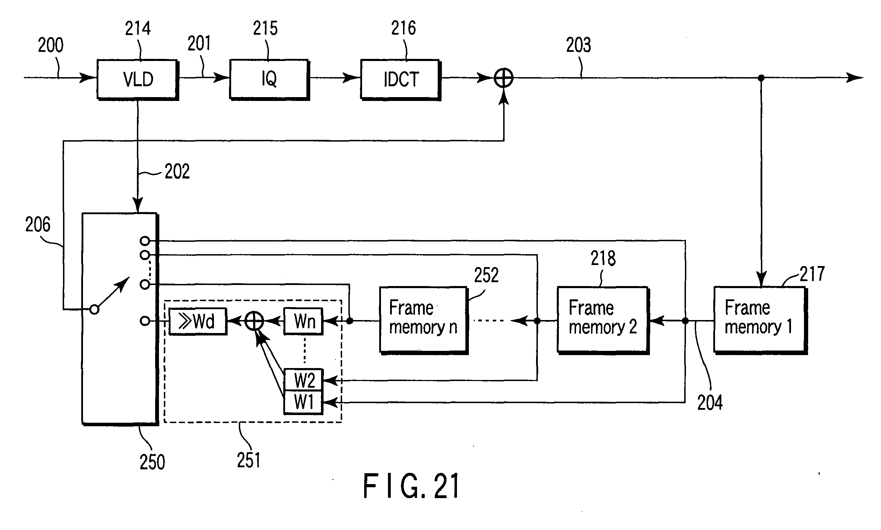

FIGS. 20 and 21 show the arrangements of a video encoding apparatus and video decoding apparatus according to the 10th embodiment of the present invention. In the first and eighth embodiments, a prediction is performed on the basis of the linear sum of a maximum of two reference frames. In contrast to this, the 10th embodiment can perform a prediction based on selection of one specific frame for each macroblock by using three or more reference frames or the linear sum of a plurality of reference frames.

The video encoding apparatus shown in FIG. 20 includes reference frame memories 117, 118, and 152 corresponding to the maximum reference frame count (n). Likewise, the video decoding apparatus in FIG. 21 includes reference frame memories 217, 218, and 252 corresponding to the maximum reference frame count (n). In this embodiment, in a prediction based on a linear sum, each of predictive macroblock generators 151 and 251 generates a predictive picture signal by computing the sum of the products of predictive coefficients W1 to Wn and reference macroblocks extracted from the respective reference frames and shifting the result to the right by Wd bits. The reference frames to be selected can be changed for each macroblock, and the linear predictive coefficients can be changed for each frame. A combination of linear predictive coefficients is encoded as header data for a frame, and the selection information of reference frames is encoded as header data for each macroblock.

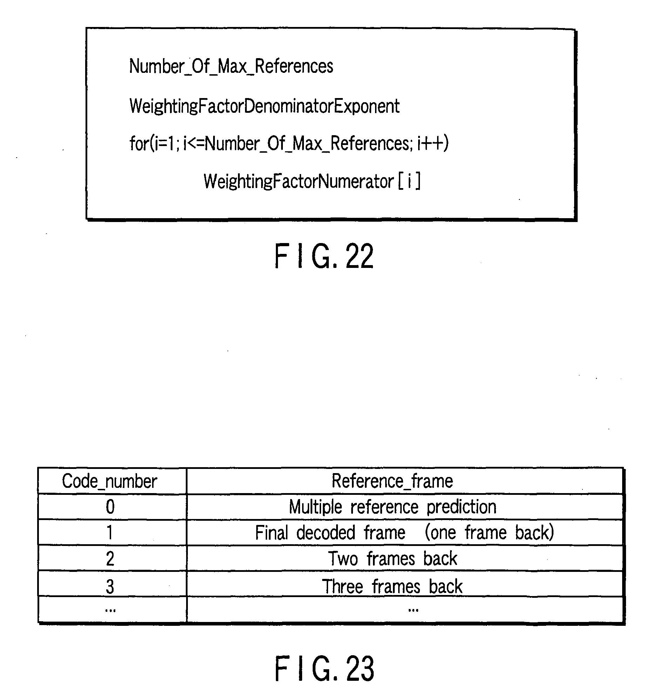

FIG. 22 shows a data syntax for encoding by using a linear predictive coefficient as a header for a frame according to this embodiment. In encoding linear predictive coefficients, the maximum number of reference frames is encoded first as Number_Of_Max_References. WeightingFactorDenominatorExponent (Wd in FIGS. 20 and 21) indicating the computation precision of linear predictive coefficients is then encoded. Coefficients WeightingFactorNumerator [i] (W1 to Wn in FIGS. 20 and 21) corresponding to the respective reference frames equal to Number_Of_Max_References are encoded. The linear predictive coefficient corresponding to the ith reference frame is given by

$$W_i\ /\ 2^{Wd} \hspace{4cm} (19)$$

FIG. 23 shows a table indicating a combination of reference frames to be encoded for each macroblock according to this embodiment. Code_number = 0 indicates a prediction based on the linear sum of all reference frames. Code_number = 1 indicates that a reference frame is one specific frame and that a frame a specific number of frames back is used as a reference frame. A prediction based on the linear sum of all reference frames is performed by using the predictive coefficients shown in FIG. 22. In this case, some of the predictive coefficients are set to 0 so that a linear prediction based on a combination of arbitrary reference frames can be switched on the frame basis in the linear prediction mode.

In this embodiment of the present invention, a motion vector or differential vector is encoded by using the spatial or temporal correlation between motion vectors in the following manner to further decrease the motion vector code amount.

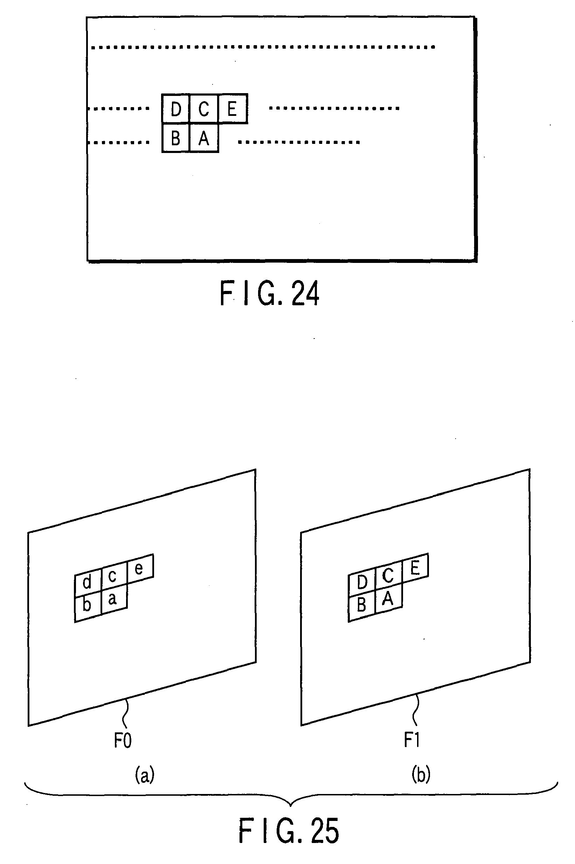

A motion vector compression method using a spatial correlation will be described first with reference to FIG. 24. Referring to FIG. 24, reference symbols A, B, C, D, and E denote adjacent macroblocks in one frame. When a motion vector or differential vector of the macroblock A is to be encoded, a prediction vector is generated from the motion vectors of the adjacent macroblocks B, C, D, and E. Only the error between the motion vector of the prediction vector and that of the macroblock A is encoded. On the decoding side, a prediction vector is calculated in the same manner as in an encoding operation. The motion vector or differential vector of the macroblock A is generated by adding this prediction vector to the encoded error signal.

Encoding a motion vector error by variable length encoding or arithmetic encoding can compress the picture with high efficiency. A motion vector can be predicted by using, for example, the median or average value of the motion vectors of the macroblocks B, C, D, and E as a prediction vector.

A motion vector compression method using a temporal correlation will be described with reference to FIG. 25.

FIG. 25 show two consecutive frames (F0, F1). Referring to FIG. 25, reference symbols A, B, C, D, and E denote adjacent macroblocks in the frame F1; and a, b, c, d, and e, macroblocks at the same positions as those of the macroblocks A, B, C, D, and E in the frame F0. When the motion vector or differential vector of the macroblock A is to be encoded, the motion vector of the macroblock a at the same position as that of the macroblock A is set as a prediction vector. The motion vector information can be compressed by encoding only the error between this prediction vector and the vector of the macroblock A.

A three-dimensional prediction is further made on the motion vector of the macroblock A by using a spatiotemporal correlation and the motion vectors of the macroblocks B, C, D, and E in the frame F1 and of the macroblocks a, b, c, d, and e in the frame F0. The motion vector can be compressed with higher efficiency by encoding only the error between the prediction vector and the to-be-encoded vector.

A three-dimensional prediction on a motion vector can be realized by generating a prediction vector from the median value, average value, or the like of a plurality of spatiotemporally adjacent motion vectors.

An embodiment of macroblock skipping according to the present invention will be described. Assume that in motion compensation predictive encoding, there are macroblocks in which all prediction error signals become 0 by DCT and quantization. In this case, in order to reduce the encoding overhead, macroblocks that satisfy predefined, predetermined conditions are not encoded, including the header data of the macroblocks, e.g., prediction modes and motion vectors. Of the headers of video macroblocks, only those of macroblocks corresponding to the number of macroblocks that are consecutively skipped are encoded. In a decoding operation, the skipped macroblocks are decoded in accordance with a predefined, predetermined mode.

In the first mode of macroblock skipping according to the embodiment of the present invention, macroblock skipping is defined to satisfy all the following conditions that a reference frame to be used for a prediction is a predetermined frame, all motion vector elements are 0, and all prediction error signals are 0. In a decoding operation, a predictive macroblock is generated from predetermined reference frames as in the case wherein a motion vector is 0. The generated predictive macroblock is reconstructed as a decoded macroblock signal.

Assume that setting the linear sum of two immediately preceding frames as a reference frame is a skipping condition for a reference frame. In this case, macroblock skipping can be done even for a picture whose signal intensity changes over time, like a fading picture, thereby improving the encoding efficiency. Alternatively, the skipping condition may be changed for each frame by sending the index of a reference frame serving as a skipping condition as the header data of each frame. By changing the frame skipping condition for each frame, an optimal skipping condition can be set in accordance with the properties of an input picture, thereby reducing the encoding overhead.

In the second mode of macroblock skipping according to the embodiment of the present invention, a motion vector is predictively encoded. Assume that a macroblock skipping condition is that the error signal of a motion vector is 0. The remaining conditions are the same as those for macroblock skipping in the first mode described above. In the second mode, in decoding a skipped macroblock, a prediction motion vector is generated first. A prediction picture is generated from predetermined reference frames by using the generated prediction motion vector, and the decoded signal of the macroblock is generated.

In the third mode of macroblock skipping according to the embodiment of the present invention, a skipping condition is that to-be-encoded motion vector information is identical to the motion vector information encoded in the immediately preceding macroblock. To-be-encoded motion vector information is a prediction error vector when a motion vector is to be predictively encoded, and is a motion vector itself when it is not predictively encoded. The remaining conditions are the same as those in the first mode described above.

In the third mode of macroblock skipping, when a skipped macroblock is to be decoded, the to-be-encoded motion vector information is regarded as 0, and the motion vector is reconstructed. A prediction picture is generated from predetermined reference frames in accordance with the reconstructed motion vector, and the decoded signal of the macroblock is generated.

Assume that in the fourth mode of macroblock skipping, a combination of reference frames to be used for a prediction is identical to that for the immediately encoded macroblock. The remaining skipping conditions are the same as those in the first mode described above.

Assume that in the fifth mode of macroblock skipping, a combination of reference frames used for a prediction is identical to that for the immediately encoded macroblock. The remaining skipping conditions are the same as those in the first mode described above.

Assume that in the sixth mode of macroblock skipping, a combination of reference frames used for a prediction is identical to that for the immediately encoded macroblock. The remaining skipping conditions are the same as those in the third mode described above.

According to the skipping conditions in either of the first to sixth modes described above, a reduction in encoding overhead and highly efficient encoding can be realized by efficiently causing macroblock skipping by using the property that the correlation of movement between adjacent macroblocks or change in signal intensity over time is high.

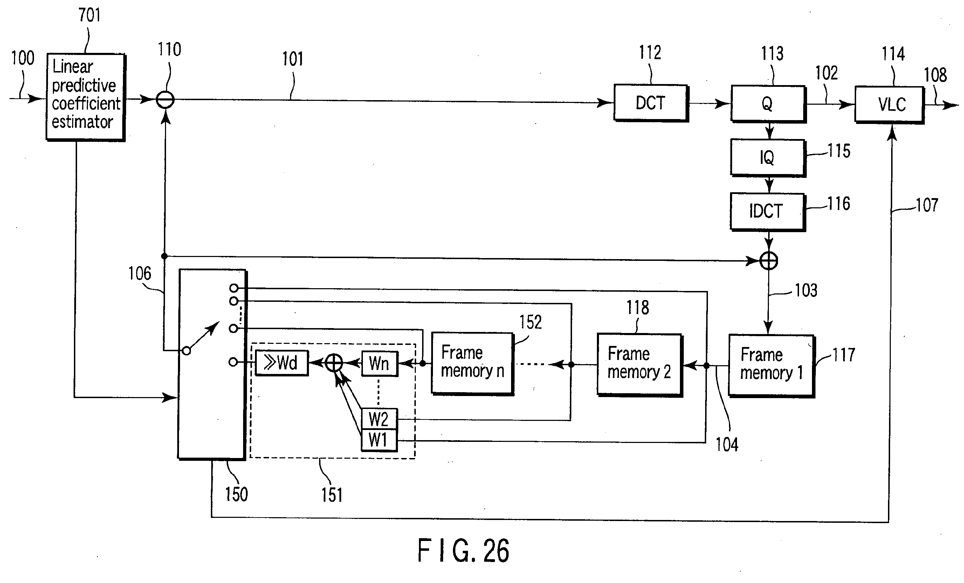

FIG. 26 shows an embodiment in which a linear predictive coefficient estimator 701 is added to the video encoding apparatus according to the embodiment shown in FIG. 20. In the linear predictive coefficient estimator 701, predictive coefficients for a linear prediction are determined from a plurality of reference frames in accordance with the distance from each reference frame and a video frame, a temporal change in DC component within an input frame, and the like. A plurality of embodiments associated with determination of specific predictive coefficients will be described below.

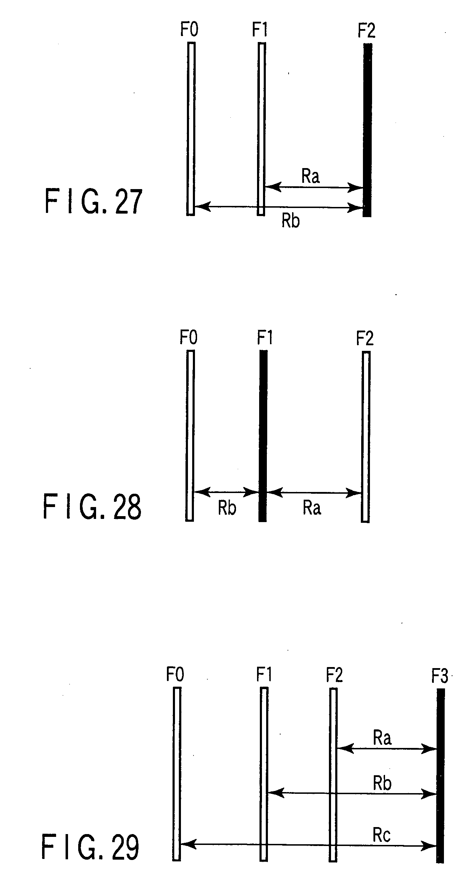

FIG. 27 shows a prediction method of predicting a frame from the linear sum of two past frames. Reference frames F0 and F1 are used for a video frame F2. Reference symbols Ra and Rb denote the inter-frame distances between the respective reference frames F0 and F1 and the video frame F2. Let W0 and W1 be linear predictive coefficients for the reference frames F0 and F1. A combination of first linear predictive coefficients is (0.5, 0.5). That is, this combination can be obtained from the simple average of the two reference frames. Second linear predictive coefficients are determined by linear extrapolation in accordance with the inter-frame distance. In the case shown in FIG. 27(20), linear predictive coefficients are given by equation (20). If, for example, the frame intervals are constant, Rb = 2*Ra, and linear predictive coefficients given by:

$$(W_0, W_1) = \left( \frac{-Ra}{Rb - Ra}, \frac{Rb}{Rb - Ra} \right) \qquad (20)$$

are (W0, W1) = (-1, 2).

According to equation (20), even if the inter-frame distance between each reference frame and the video frame arbitrarily changes, a proper linear prediction can be made. Even if, for example, variable-frame-rate encoding is performed by using frame skipping or the like or two arbitrary past frames are selected as reference frames, high prediction efficiency can be maintained. In an encoding operation, one of the first and second predictive coefficients may be permanently used or the first or second predictive coefficients may be adaptively selected. As a practical method of adaptively selecting predictive coefficients, a method of selecting predictive coefficients by using the average luminance value (DC value) in each frame may be used.

Assume that the average luminance values in the frames F0, F1, and F2 are DC(F0), DC(F1), and DC(F2), respectively. As for DC components of a intra-frame, the magnitudes of prediction errors obtained by using the respective linear predictive coefficients are calculated by the equations (21) and (22):

$$\left| DC(F2) - \left( \frac{DC(F0) + DC(F1)}{2} \right) \right| \qquad (21)$$

$$\left| DC(F2) - \left( \frac{Rb}{Rb - Ra} DC(F1) - \frac{Ra}{Rb - Ra} DC(F0) \right) \right| \qquad (22)$$

If the value of mathematic expression (21) is smaller than that of mathematic expression (22), the first predictive coefficient is selected. If the value of mathematic expression (22) is smaller than that of mathematic expression (21), the second predictive coefficient is selected. By changing these predictive coefficients for each video frame, an optical linear prediction can be made in accordance with the characteristics of a video signal. Efficient linear prediction can also be made by determining the third and fourth predictive coefficients by using the ratios of DC values in the frames according to equation (23) or (24):

$$(W_0, W_1) = \left( \frac{1}{2} \cdot \frac{DC(F2)}{DC(F0)}, \frac{1}{2} \cdot \frac{DC(F2)}{DC(F1)} \right) \qquad (23)$$

$$\left(W_0, W_1\right) = \left(\frac{-\,Ra}{Rb\,-\,Ra}\,\bullet\,\frac{DC(F2)}{DC(F0)}\,,\,\frac{Rb}{Rb\,-\,Ra}\,\bullet\,\frac{DC(F2)}{DC(F1)}\right) \quad (24)$$

The third linear predictive coefficient given by equation (23) is the weighted mean calculated in consideration of the ratios of the DC values in the frames. The fourth linear predictive coefficient given by equation (24) is the linear predictive coefficient calculated in consideration of the ratios of the DC values in the frames and the inter-frame distances. In the use of the above second to fourth linear predictive coefficients, linear predictions require division. However, matching the computation precision at the time of encoding with that at the time of decoding allows a linear prediction based on multiplications and bit shifts without any division.

A practical syntax may be set such that each linear predictive coefficient is expressed by a denominator to a power of 2 and an integer numerator, as in the case shown in FIG. 22. FIG. 28 shows a method of predicting a frame from the linear sum of two temporally adjacent frames. Referring to FIG. 28, reference symbol F1 denotes a to-be-encoded frame; F0 and F2, reference frames; and Ra and Rb, the inter-frame distances between the respective reference frames and the video frame. In addition, linear predictive coefficients for the reference frames F0 and F2 are represented by W0 and W2, respectively. The intra-frame average values of the luminance values of the respective frames are represented by DC(F0), DC(F1), and DC(F2), respectively. Four types of predictive coefficient combinations like those in FIG. 27(20) are given by equations (25) to (28):

$$\left(W_0, W_2\right) = \left(0.5, 0.5\right) \quad (25)$$

$$\left(W_0, W_2\right) = \left(\frac{Ra}{Rb\,+\,Ra}\,,\,\frac{Rb}{Rb\,+\,Ra}\right) \quad (26)$$

$$\left(W_0, W_2\right) = \left(\frac{1}{2}\,\bullet\,\frac{DC(F1)}{DC(F0)}\,,\,\frac{1}{2}\,\bullet\,\frac{DC(F1)}{DC(F2)}\right) \quad (27)$$

$$\left(W_0, W_2\right) = \left(\frac{Ra}{Rb\,+\,Ra}\,\bullet\,\frac{DC(F1)}{DC(F0)}\,,\,\frac{Rb}{Rb\,+\,Ra}\,\bullet\,\frac{DC(F1)}{DC(F2)}\right) \quad (28)$$

Equation (25) represents a simple average prediction; equation (26), a weighted mean prediction based on an inter-frame distances, equation (27), a weighed mean prediction based on the ratios of the DC values; and equation (28), a weighting prediction based on the ratios of the DC values and the inter-frame distances.

FIG. 29 shows a method of performing a predetermined prediction based on the linear sum of three past frames. Reference symbols F0, F1, and F2 denote reference frames; F3, a video frame; and Rc, Rb, and Ra, the inter-frame distances between the respective reference frames F0, F1, and F2 and the video frame F3. In the case shown in FIG. 29 as well, a plurality of linear predictive coefficient combinations can be conceived. The following is a specific example. Assume that the linear predictive coefficients for the respective reference frames are represented by W0, W1, and W2.

A combination of first predictive coefficients is given by equation (29). The first predictive coefficients are used for a simple average prediction based on three reference frames. A prediction picture $F_3^{012}$ based on the first predictive coefficient combination is represented by the equation (30):

$$\left( w_0, \ w_1, \ w_2 \right) = \left( \frac{1}{3}, \ \frac{1}{3}, \ \frac{1}{3} \right) \tag{29}$$

$$a F_3^{012} = \frac{1}{3} \left( F1 + F2 + F3 \right) \tag{30}$$

The second, third, and fourth predictive coefficients are coefficients for performing an extrapolation prediction based on linear extrapolation by selecting two frames from the three reference frames as in the case of a prediction based on equation (20). Letting $eF_3^{12}$ be a prediction picture of the video frame F3 which is predicted from the reference frames F2 and F1, $eF_3^{02}$ be a prediction picture of the video frame f3 which is predicted from the reference frames F2 and F0, and $eF_3^{01}$ be a prediction picture of the video frame F3 which is predicted from the reference frames F1 and F0, these prediction pictures are respectively represented by equations (31), (32) and (33):

$$eF_3^{12} = \frac{Rb}{Rb - Ra} F2 - \frac{Ra}{Rb - Ra} F1 \tag{31}$$

$$eF_3^{02} = \frac{Rc}{Rc - Ra} F2 - \frac{Ra}{Rc - Ra} F0 \tag{32}$$

$$eF_3^{01} = \frac{Rc}{Rc - Rb} F1 - \frac{Rb}{Rc - Rb} F0 \tag{33}$$

Letting $eF_3^{012}$ be a prediction value obtained by averaging the values given by equations (31) to (33), the prediction value $eF_3^{012}$ can be given as the fifth predictive coefficient by the equation (34):

$$eF_3^{012} = \frac{1}{3} \frac{2RaRb - RaRc - RbRc}{(Rc - Ra)(Rc - Rb)} F0 + \frac{1}{3} \frac{RaRb - 2RaRc + RbRc}{(Rc - Rb)(Rb - Ra)} F1 + \frac{1}{3} \frac{- RaRb - RaRc + 2RbRc}{(Rc - Ra)(Rb - Ra)} F2 \tag{34}$$

One of the first to fifth linear predictive coefficients may be used. Alternatively, intra-frame average luminance values DC(F0), DC(F1), DC(F2), and DC(F3) of the frames F0, F1, F2, and F3 may be calculated, and the intra-frame average luminance value of the video frame F3 may be predicted by using each of the above five predictive coefficients. One of the predictive coefficients which exhibits a minimum prediction error may be selectively used for each video frame. The use of the latter arrangement allows automatic selection of an optimal linear prediction on the frame basis in accordance with the properties of an input picture and can realize high-efficiency encoding.

In addition, the predictive coefficients obtained by multiplying the first to fifth linear predictive coefficients by the ratios of the average luminance values of the respective frames may be used. If, for example, the first predictive coefficient is multiplied by the ratios of the average luminance values, a predictive coefficient is given by equation (35) be low. This applies to the remaining predictive coefficients.

$$\left(W_0, W_1, W_2\right) = \left(\frac{1}{3} \bullet \frac{DC(F3)}{DC(F0)}, \frac{1}{3} \bullet \frac{DC(F3)}{DC(F1)}, \frac{1}{3} \bullet \frac{DC(F3)}{DC(F2)}\right) \qquad (35)$$

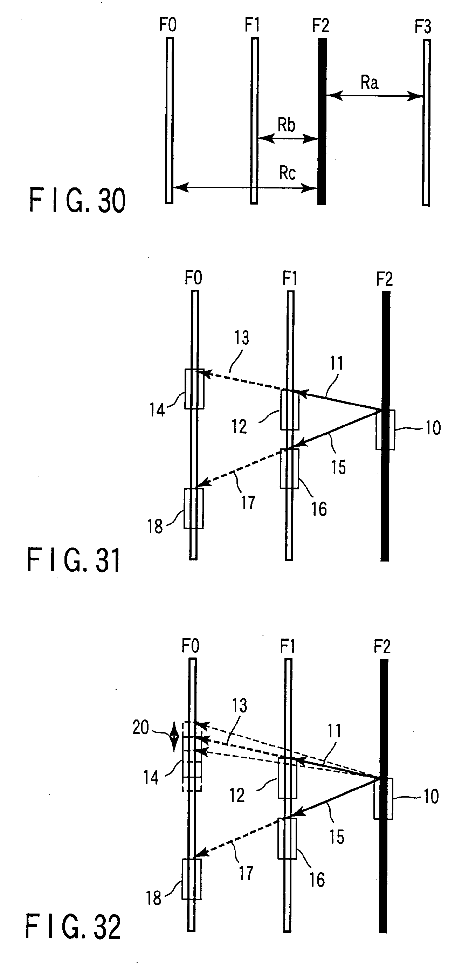

FIG. 30 shows a method of performing a prediction based on the linear sum of two past frames and one future frame. Reference symbols F0, F1, and F3 denote reference frames; F2, a video frame; and Rc, Rb, and Ra, the inter-frame distances between the reference frames F0, F1, and F3 and the video frame. In this case, as in the case shown in FIG. 29, a plurality of predictive coefficient combinations can be determined by using the ratios of the inter-frame distances and the DC values in the respective frames. In addition, an optimal predictive coefficient combination can be determined from the prediction errors of the DC values in the frames.

Linear prediction expressions or predictive coefficients corresponding to equations (30) to (35) in the prediction method in FIG. 30 are expressed by the equations (36) to (41):

$$a F_2^{013} = \frac{1}{3}\left(F0 + F1 + F3\right) \qquad (36)$$

$$e F_2^{13} = \frac{Rb}{Rb + Ra} F3 + \frac{Ra}{Rb + Ra} F1 \qquad (37)$$

$$e F_2^{03} = \frac{Rc}{Rc + Ra} F3 + \frac{Ra}{Rc + Ra} F0 \qquad (38)$$

$$e F_2^{01} = \frac{Rc}{Rc - Rb} F1 - \frac{Rb}{Rc - Rb} F0 \qquad (39)$$

$$e F_2^{013} = \frac{1}{3} \frac{1 - 2RaRb + RaRc - RbRc}{(Rc + Ra)(Rc - Rb)} F0 \\ + \frac{1}{3} \frac{1 - RaRb + 2RaRc + RbRc}{(Rc - Rb)(Rb + Ra)} F1 \\ + \frac{1}{3} \frac{RaRb + RaRc + 2RbRc}{(Rc + Ra)(Rb + Ra)} F3 \qquad (40)$$

$$\left(W_0, W_1, W_3\right) = \left(\frac{1}{3} \bullet \frac{DC(F2)}{DC(F0)}, \frac{1}{3} \bullet \frac{DC(F2)}{DC(F1)}, \frac{1}{3} \bullet \frac{DC(F2)}{DC(F3)}\right) \qquad (41)$$

FIG. 31 shows the first example of a motion vector search in video encoding according to the embodiment of the present invention. FIG. 32 shows a motion vector search method in a case wherein a prediction is made by using two consecutive frames as reference frames, and one representative motion vector is encoded, as shown in FIG. 6. Reference symbol F2 in figure denotes a video frame; and F0 and F1, reference frames. Reference numeral 10 denotes a video macroblock; and 12, 14, 16, and 18, some reference macroblock candidates in the reference frames.

In order to obtain an optimal motion vector for the macroblock 10, motion vector candidates (motion vector candidates 11 and 15 in FIG. 31) for the reference frame F1 within a motion vector search range and the motion vectors (a motion vector 13 obtained by scaling the motion vector candidate 11 and a motion vector 17 obtained by scaling the motion vector candidate 15 in FIG. 31) obtained by scaling the motion vector candidates in accordance with the inter-frame distance are used as motion vectors for the reference frame F0. A predictive macroblock is generated from the linear sum of the reference macroblocks 14 and 12 or 16 and 18 extracted from the two reference frames F0 and F1. The differential value between the predictive macroblock and the to-be-encoded macroblock 10 is calculated. When this differential value becomes minimum, the corresponding motion vector is determined as a motion vector search result for each macroblock. Motion compensation predictive encoding is then performed for each macroblock by using the determined motion vector.

A motion vector may be determined in consideration of the encoding overhead for each motion vector itself as well as the above differential value. A motion vector may be selected, which exhibits a minimum code amount required to actually encode a differential signal and the motion vector. As described above, the motion vector search method can obtain an accurate motion vector with a smaller computation amount than in the method of separately searching for optimal motion vectors for the reference frames F0 and F1.

FIG. 32 shows the second example of a motion vector search in video encoding according to the embodiment of the present invention. FIG. 32 shows a motion vector search method in a case wherein a current frame is predicted by using two consecutive frames as reference frames, and one representative motion vector is encoded or one representative motion vector and a differential vector are encoded, as shown in FIG. 6, by the same method as that shown in FIG. 31. Referring to FIG. 32, reference symbol F2 denotes a video frame; and F0 and F1, reference frames. Reference numeral 10 denotes a video macroblock; and 12, 14, 16, and 18, reference macroblock candidates in the reference frames.

In the second motion vector search, a search is made for one motion vector with respect to the two reference frames as in the first motion vector search. Referring to FIG. 32, a motion vector 11 and a motion vector 13 obtained by scaling the motion vector 11 are selected as optical motion vectors. A re-search is made for a motion vector with respect to a reference macroblock from the frame F0 in an area near the motion vector 13. In re-search operation, the reference frame 12 extracted from the frame F1 by using the motion vector 11 is fixed. A predictive macroblock is generated from the linear sum of the reference frame 12 and the reference frame 14 extracted an area near the motion vector 13 of the frame F0. A re-search is made for a motion vector with respect to the frame F0 so as to minimize the difference between the predictive macroblock and the to-be-encoded macroblock.

Assume that a video signal is set at a constant frame rate, and the interval between the frames F2 and F1 and the interval between the frames F1 and F0 are equal. In this case, in order to search for a constant movement, a search range with respect to the reference frame F0 needs to be four times larger in area ratio than a search range with respect to the reference frame F1. A search for a motion vector with respect to the two reference frames F0 and F1 with the same precision requires a computation amount four times larger than that for a search for a motion vector in a prediction only from the reference frame F1.

According to the second motion vector search method, first of all, a search is made for a motion vector with respect to the reference frame F1 with full precision. The reference frame F0 is then searched for a motion vector obtained by scaling this motion vector twice. The reference frame F0 is re-searched with full precision. The use of such two-step search operation can reduce the computation amount for a motion vector search to almost 1/4.

In the second motion vector search method, motion vectors for the reference frames F0 and F1 are separately obtained. In encoding these motion vectors, first of all, the motion vector 11 for the reference frame F1 is encoded. The differential vector between the motion vector 13 obtained by scaling the motion vector 11 and the motion vector obtained as the result of re-searching the reference frame F0 is encoded. This makes it possible to reduce the encoding overhead for each motion vector.

A search is made for the motion vector 13 obtained scaling the motion vector 11 in a re-search range of $\pm 1$, i.e., with a coarse precision of 1/2. Only a re-search is made for the motion vector 13 with full precision. In this case, the motion vector with respect to the re-searched reference frame F0 is scaled to 1/2. This makes it possible to uniquely reconstruct the motion vector 11 with respect to the reference frame F1 regardless of the re-search result. Therefore, only the motion vector with respect to the reference frame F0 may be encoded. In a decoding operation, the motion vector 11 with respect to the reference frame F1 can be obtained by scaling the received motion vector to 1/2.

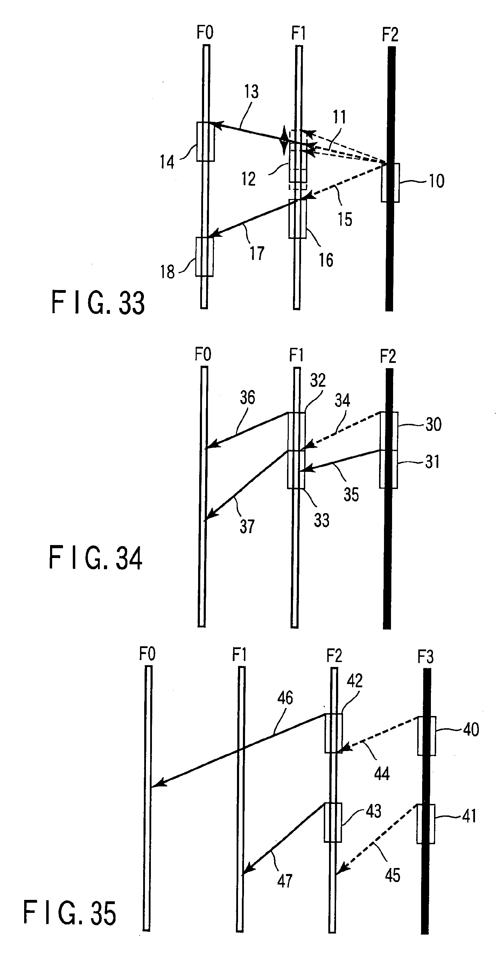

FIG. 33 shows the third motion vector search method. In this motion vector search method, a current frame is predicted by using two consecutive frames as reference frames, as in the method shown in FIG. 31, as shown in FIG. 6. One representative motion vector is encoded, or one representative motion vector and a differential vector are encoded. Referring to FIG. 33, reference symbol F2 denotes a video frame; and F0 and F1, reference frames. Reference numeral 10 denotes a video macroblock; and 12, 14, 16, and 18, some reference macroblock candidates in the reference frames.

In the third motion vector search, as in the first or second example, searches are made for motion vectors with respect to the reference frames F0 and F1, and a re-search is made for a motion vector with respect to the reference frame F1. In general, in a video picture, the correlation between frames that are temporally close to each other is strong. On the basis of this property, the prediction efficiency can be improved by obtaining a motion vector with respect to the reference frame F1 temporally closest to the reference frame F2 with higher precision in the third motion vector search.

FIG. 34 shows a motion vector encoding method according to the embodiment of the present invention. In figure, F2 shows a video frame, F1 shows a frame encoded immediately before the frame F2, 30 and 31 show macroblocks to be encoded respectively. 32 and 33 show macroblocks located at the same positions as those of the macroblocks 30 and 31 in the frame F1. 34 and 35 also show to-be-encoded motion vectors of the macroblocks 30 and 31, and 36 and 37 are encoded motion vectors of the macroblocks 32 and 33.

In this embodiment, if a to-be-encoded motion vector is identical to a motion vector for a macroblock at the same position in the immediately preceding video frame, the motion vector is not encoded, and a flag indicating that the motion vector is identical to that for the macroblock at the same position in the immediately preceding video frame is encoded as a prediction mode. If the motion vector is not identical to that for the macroblock at the same position in the immediately preceding video frame, the motion vector information is encoded. In the method shown in FIG. 34, the motion vectors 34 and 36 are identical. Therefore, the motion vector 34 is not encoded. In addition, since the motion vector 35 differs from the motion vector 37, the motion vector 35 is encoded.

Encoding motion vectors in the above manner reduces the redundancy of motion vectors with respect to a still picture or a picture which makes a temporally uniform movement and hence can improve the encoding efficiency.

FIG. 35 shows another motion vector encoding method according to the embodiment of the present invention. In the method shown in FIG. 35, as in the method shown in FIG. 34, if a motion vector for a macroblock at the same position in the immediately preceding video frame is identical to a motion vector for a video macroblock, the motion vector is not encoded. Whether motion vectors are identical to each other is determined depending on whether their moving angles are identical. Referring to FIG. 35, a motion compensation prediction is performed with respect to macroblocks 40 and 41 in a video frame F3 by setting an immediately preceding video frame F2 as a reference frame and using motion vectors 44 and 45. With respect to a macroblock 42 at the same position as that of the macroblock 40 in the video frame F2 immediately preceding a frame F1, a motion compensation prediction is performed by setting a frame F0 two frames back with respect to the frame F2 as a reference frame and using a motion vector 46.

Although the motion vectors 46 and 44 exhibit the same angle, the size of the motion vector 46 is twice that of the motion vector 44. Therefore, the motion vector 44 can be reconstructed by scaling the motion vector 46 in accordance with the inter-frame distance. For this reason, the motion vector 44 is not encoded, and prediction mode information indicating a mode of using a motion vector for the immediately preceding frame is set.

The motion vector 45 of the macroblock 41 exhibits the same angle as a motion vector 47 of the macroblock 43 at the same position in the preceding frame, and hence the motion vector 45 is not encoded as in the case of the macroblock 40. A macroblock for which a motion vector is not encoded as in the above case is subjected to motion compensation predictive inter-frame encoding and decoding by using the motion vector obtained by scaling the motion vector at the same position in the preceding video frame in accordance with the inter-frame distance between the video frame and the reference frame.

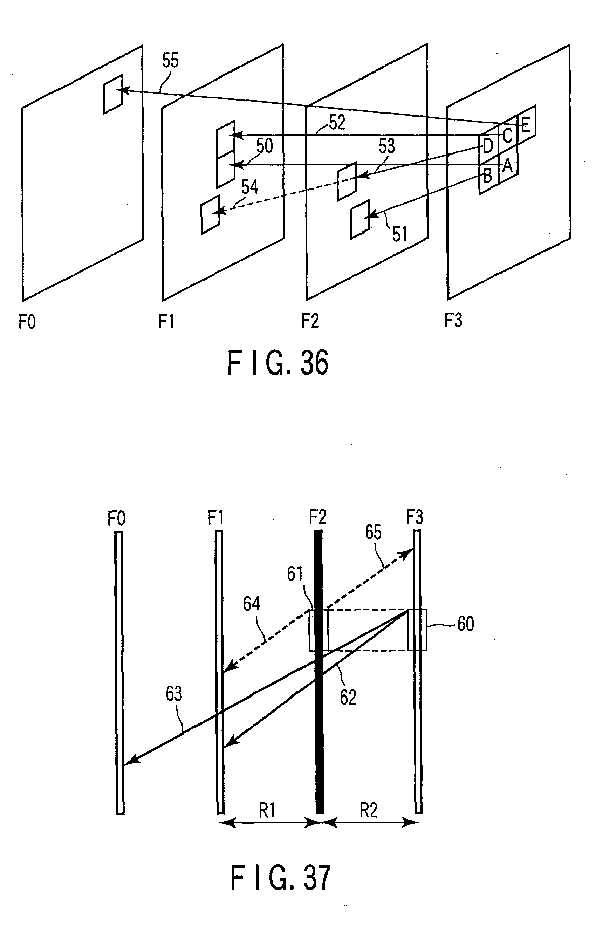

FIG. 36 is a view for explaining macroblock skipping and predictive encoding of an index indicating a reference frame according to the embodiment of the present invention. Referring to FIG. 36, reference symbol F3 denotes a video frame; A, a video macroblock; B, C, D, and E, adjacent macroblocks that have already been encoded; and F0, F1, and F2, reference frames, one or a plurality of which are selected and subjected to motion compensation predictive encoding for each macroblock. With respect to the macroblock A, a prediction is performed based on a motion vector 50 by using the frame F1 as a reference frame. With respect to the macroblocks B, C, and E, predictions are performed based on motion vectors 51, 52, and 55 by using the frames F2, F1, and F0 as reference frames, respectively. The macroblock D is predicted by using the reference frames F1 and F2. When the motion vector 50 of the macroblock A is to be encoded, a prediction vector is selected from the motion vectors of the adjacent macroblocks B, C, D, and E, and the differential vector between the prediction vector and the motion vector 50 is encoded.

A prediction vector is determined by, for example, a method of selecting a motion vector corresponding to the median value of the motion vectors of the adjacent macroblocks B, C, and E or a method of selecting, as a prediction vector, the motion vector of one of the adjacent macroblocks B, C, D, and E which exhibits a minimum residual error signal.

Assume that the difference between the prediction vector and the motion vector of the to-be-encoded macroblock becomes 0, the reference frame having the macroblock for which the prediction vector is selected coincides with the reference frame having the video macroblock to be encoded, and all the prediction error signals to be encoded become 0. In this case, the macroblock is skipped without being encoded. The number of macroblocks consecutively skipped is encoded as header information of a video macroblock to be encoded next without being skipped. Assume that a prediction vector for the macroblock A becomes the motion vector 52 of the macroblock C. In this case, the macroblock A coincides with the macroblock C in terms of reference frame, and the motion vector 50 coincides with the motion vector 52. If all the prediction error signals of the macroblock A are 0, the macroblock is skipped without being encoded. At the time of decoding, a prediction vector is selected by the same method as that used at the time of encoding, and a prediction picture is generated by using the reference frame of the macroblock for which the prediction vector is selected. The generated prediction picture is a decoded picture of the skipped macroblock.

If one of the above macroblock skipping conditions is not satisfied, the differential vector between the prediction vector and the motion vector of the video macroblock, the prediction error signal, and an index indicating the reference frame are encoded.

As the index indicating the reference frame, the differential value between the reference frame index of an adjacent macroblock for which a prediction vector is selected and the reference frame index of the video frame is encoded.

When the motion vector 52 of the macroblock C is selected as the prediction vector of the macroblock A as in the above case, the differential vector between the motion vector 50 and the motion vector 52 and the prediction error signal of the macroblock A are encoded. Alternatively, for example, in accordance with the table shown in FIG. 23, a reference frame is expressed by an index (Code_number). A differential value between the index 2 indicating a reference frame for the macroblock C two frames back and the index 2 of the macroblock A, i.e., 0, is encoded as a reference frame index differential value.

FIG. 37 shows another motion vector encoding method according to the embodiment of the present invention. Referring to FIG. 37, a frame F2 is a video frame to be encoded, which is a B picture for which a motion compensation prediction is performed from temporally adjacent frames. With respect to a macroblock 61 in the frame F2, a frame F3 is used as a reference frame for a backward prediction, and a frame F1 is used as a reference frame for a forward prediction. Therefore, the frame F3 is encoded or decoded before the frame F2 is encoded or decoded.

In the reference frame f3 for a backward prediction for the video macroblock 61, a macroblock 60 at the same position as that of the video macroblock 61 in the frame will be considered. If a motion compensation prediction based on the linear sum of the frames F0 and F1 is used, the motion vector (62 in the figure) of the macroblock 60 corresponding to the reference frame F1 for a forward prediction for the video macroblock 61 is scaled in accordance with the inter-frame distance, and the resultant vector is used as a vector for forward and backward predictions for the video macroblock 61.

Letting R1 be the inter-frame distance from the frame F1 to the frame F2, and R2 be the inter-frame distance from the frame F2 to the frame F3, the motion vector obtained by multiplying the motion vector 62 by $R1/(R1 + R2)$ becomes a motion vector 64 for a forward prediction for the macroblock 61. The motion vector obtained by multiplying the motion vector 62 by $-R2/(R1 + R2)$ becomes a motion vector 65 for a backward prediction for the macroblock 61.

With respect to the video macroblock 61, the above motion vector information is not encoded, and only a flag indicating the above prediction mode, i.e., the execution of a bi-directional prediction by motion vector scaling, is encoded.

In a decoding operation, the frame F3 is decoded first. The motion vectors of the respective macroblocks of the decoded frame F3 are temporarily stored. In the frame F2, with respect to the macroblock for which the flag indicating the above prediction mode is set, motion vectors for forward and backward predictions at the macroblock 60 are calculated by scaling the motion vector of a macroblock at the same position in the frame F3, thereby performing bi-directional predictive decoding.

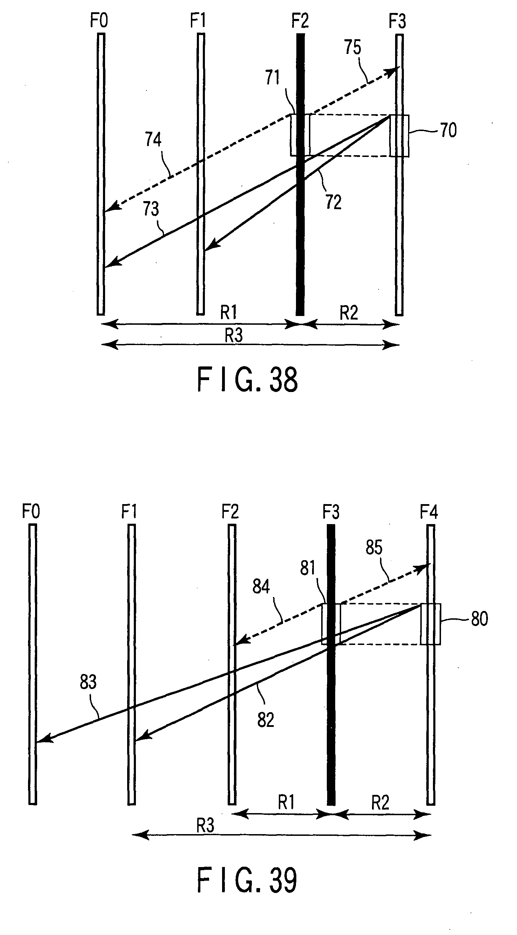

FIG. 38 shows another example of the bi-directional prediction shown in FIG. 37. Referring to FIG. 38, a frame F0 is a reference frame for a forward prediction for a video macroblock 71 of a video frame F2, and the other arrangements are the same as those in FIG. 37. In this case, forward and backward motion vectors for the video macroblock 71 are obtained by scaling a motion vector 73 of a macroblock 70 with respect to a frame F3, which is located at the same position as that of the video macroblock 71, to the frame F0 in accordance with the inter-frame distance.

Letting R1 be the inter-frame distance from the frame F0 to the frame F2, R2 be the inter-frame distance from the frame F3 to the frame F2, and R3 be the inter-frame distance from the frame F0 to the frame F3, the vector obtained by multiplying the motion vector 73 by $R1/R3$ is a forward motion vector 74 for the video macroblock 71. The vector obtained by multiplying the motion vector 73 by $-R2/R3$ is a backward motion vector 75 for the video macroblock 71. Bi-directional predictive encoding and decoding of the video macroblock 71 are performed by using the motion vectors 74 and 75.

In the methods shown in FIGS. 37 and 38, in a reference frame for a backward prediction for a bi-directional prediction video macroblock to be encoded, a macroblock at the same position as that of the video macroblock in the frame will be considered. When this macroblock uses a plurality of forward reference frames, forward and backward motion vectors for the video macroblock are generated by scaling a motion vector with respect to the same reference frame as the forward reference frame for the bi-directional prediction video macroblock.

As described above, generation of motion vectors by scaling in the above manner can reduce the encoding overhead for the motion vectors and improve the encoding efficiency. In addition, if there are a plurality of motion vectors on which scaling is based, the prediction efficiency can be improved by selecting motion vectors exhibiting coincidence in terms of forward reference frame and scaling them. This makes it possible to realize high-efficiency encoding.

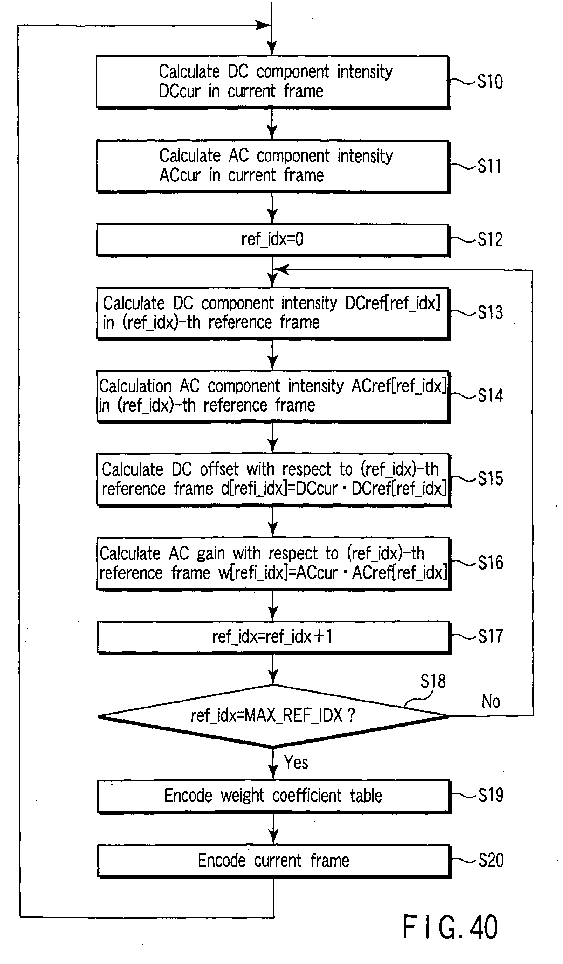

FIG. 39 shows another method for the bi-directional predictions shown in FIGS. 37 and 38. Referring to FIG. 39, a frame F3 is a video frame to be encoded, and a video macroblock 81 to be encoded is predicted by a bi-directional prediction using a frame F4 as a backward reference frame and a frame F2 as a forward reference frame. A macroblock 80 in the frame F4 which is located at the same position as that of the video macroblock 81 is predicted by the linear sum of two forward frames F0 and F1. In the method shown in FIG. 39, therefore, the same forward reference frame is not used for the macroblock 80 and the video macroblock 81, unlike the methods shown in FIGS. 37 and 38.

In this case, a motion vector with respect to one of the forward reference frames F0 and F1 for the macroblock 80 which is temporally closer to the forward reference frame F2 for the video macroblock 81 is scaled in accordance with the inter-frame distance. With this operation, forward and backward vectors for the video macroblock 81 are generated. Letting R1 be the inter-frame distance from the frame F2 to the frame F3, R2 be the inter-frame distance from the frame F4 to the frame F3, and R3 be the inter-frame distance from the frame F1 to the frame F4, a forward motion vector 84 for the video macroblock 81 is obtained by multiplying a motion vector 82 of the macroblock 80 with respect to the frame F1 by R1/R3. A backward motion vector 85 for the to-be-encoded macroblock 81 is obtained by multiplying the motion vector 82 by -R2/R3. The video macroblock 81 is bi-directionally predicted by using the motion vectors 84 and 85 obtained by scaling.

As described above, generation of motion vectors by scaling in the above manner can reduce the encoding overhead the motion vectors and improve the encoding efficiency. In addition, if there are a plurality of motion vectors on which scaling is based, and there are no motion vectors exhibiting coincidence in terms of forward reference frame, a motion vector corresponding to a reference frame temporally closest to the forward reference frame for the video macroblock is selected and scaled. This makes it possible to improve the prediction efficiency and realize high-efficiency encoding.

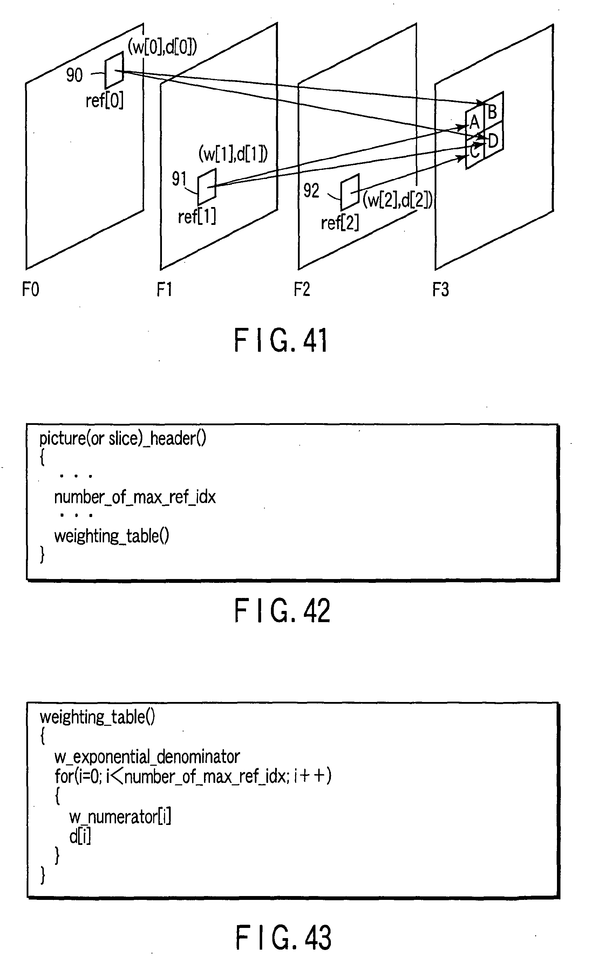

FIG. 40 is a flow chart of the video encoding method according to the embodiment of the present invention. FIG. 41 is a view for explaining a weighting prediction according to the embodiment of the present invention. A weighting prediction according to the embodiment will be described with reference to FIG. 41. A weight factor determination method will then be described with reference to FIG. 40.

Referring to FIG. 41, reference symbols F0, F1, F2, and F3 denote temporally consecutive frames. The frame F3 is a video frame to be encoded. The frames F0, F1, and F2 are reference frames for the video frame F3.

Of to-be-encoded pixel blocks A, B, C, and D in the video frame F3, for the blocks A, B, and C, reference pixel block signals with motion compensation are generated from the frames F1, F0, and F2, respectively. With respect to these reference pixel block signals, a prediction pixel block signal is generated by multiplications of weight factors and addition of DC offset values. The difference between the prediction pixel block signal and the to-be-encoded pixel block signal is calculated, and the differential signal is encoded, together with the identification information of the reference frames and motion vector information.

With respect to the block D, reference block signals with motion compensation are respectively generated from the frames F0 and F1. A prediction pixel block signal is generated by adding a DC offset value to the linear combination of the reference pixel blocks. The difference signal between the to-be-encoded pixel block signal and the prediction pixel block signal is encoded, together with the identification information of the reference frames and motion vector information.

On the other hand, in a decoding operation, the identification information of the reference frames and motion vector information are decoded. The above reference pixel block signals are generated on the basis of these pieces of decoded information. A prediction pixel block signal is generated by performing multiplications of weight factors and addition of a DC offset value with respect to the generated reference pixel block signals. The encoded difference signal is decoded, and the decoded differential signal is added to the prediction pixel block signal to decode the video picture.

Prediction pixel block signals are generated in encoding and decoding operations by the following calculation. Letting predA be a prediction signal for the pixel block A, and ref[1] be a reference pixel block signal extracted from the frame F1, the signal predA is calculated as follows:

$$predA=w[1] \cdot ref[1]+d[1] \qquad (42)$$

where w[1] is a weight factor for the reference pixel block, and d[1] is a DC offset value. These values are encoded as header data for each video frame or slice in a coefficient table. Weight factors and DC offset values are separately determined for a plurality of reference frames corresponding to each video frame. For example, with respect to the pixel block B in FIG. 41, since a reference pixel block ref[0] is extracted from the frame F0, a prediction signal predB is given by the following equation:

$$predB = w[0] \bullet red[0] + d[0] \qquad (43)$$

With respect to the pixel block D, reference pixel blocks are extracted from the frames F0 and F1, respectively. These reference pixel blocks are multiplied by weight factors, and DC offset values are added to the products. The resultant signals are then averaged to generate a prediction signal predD

$$predD = \{w[0] \bullet ref[0] + w[1] \bullet ref[1] + (d[0] + d[1])\} / 2 \qquad (44)$$

In this embodiment, a weight factor and DC offset value are determined for each reference frame in this manner.

A method of determining the above weight factors and DC offset values in an encoding operation according to this embodiment will be described with reference to FIG. 40. The method of determining weight factors and DC offset values will be described with reference to the flow chart of FIG. 40, assuming that the inter-frame prediction relationship shown in FIG. 41 is maintained, i.e., the frame F3 is a video frame, and the frames F0, F1, and F2 are reference frames.

Weight factors and DC offset values are regarded as independent values with respect to a plurality of reference frames, and weight factor/DC offset data table data is encoded for each video frame or slice. For example, with respect to the video frame F3 in FIG. 41, weight factors and DC offset values (w[0], d[0]), (w[1], d[1]), and (w[2], d[2]) corresponding to the frames F0, F1, and F2 are encoded. These values may be changed for each slice in the video frame.

First of all, an average value DCcur (a DC component intensity to be referred to as a DC component value hereinafter) of pixel values in the entire to-be-encoded frame F3 or in each slice in the frame is calculated as follows (step S10).

$$DCcur = \frac{\sum\limits_{x,y} F3(x, y)}{N} \tag{45}$$

where F3(x, y) is a pixel value at a coordinate position (x, y) in the frame F3, and N is the number of pixels in the frame or a slice. The AC component intensity (to be referred to as an AC component value hereinafter) of the entire video frame F3 or each slice in the frame is then calculated by the following equation (step S11):

$$ACcur = \frac{\sum\limits_{x,y} \left| F3(x,y) - DCcur \right|}{N} \tag{46}$$

In measurement of an AC component value, a standard deviation like the one described below may be used. In this case, the computation amount in obtaining an AC component value increases.

$$ACcur = \sqrt{\frac{\sum\limits_{x,y} \left( F3(x,y) - DCcur \right)^2}{N}} \tag{47}$$

As is obvious from a comparison between equations (46) and (47), the AC component value measuring method based on equation (46) is effective in reducing the computation amount in obtaining an AC component value.

Letting "ref_idx" be an index indicating a reference frame number, a DC component value DCref[ref_idx] of the (ref_idx)-th reference frame and an AC component value ACref[rf_idx] are calculated according to equations (45) and (46) (steps S13 and S14).

On the basis of the above calculation result, a DC offset value d[ref_idx] with respect to the (ref_idx)-th reference frame is determined as the difference between DC components as follows (step S15):

$$d[ref\_idx] = DCcur - DCref[ref\_idx] \tag{48}$$

A weight factor w[ref_idx] is determined as an AC gain (step S16).

$$w[ref\_idx] = ACcur / ACref[ref\_idx] \tag{49}$$

The above calculation is performed with respect to all the reference frames (from ref_idx = 0 to MAX_REF_IDX) (steps S17 and S18). MAX_REF_IDX indicates the number of reference frames. When all weight factors and DC offset values are determined, they are encoded as table data for each video frame or slice, and weighted predictive encoding of the respective pixel blocks is performed in accordance with the encoded weight factors and DC offset values. Prediction pixel block signals in encoding and decoding operations are generated according to equations (42) to (44) described above.

As described above, generation of prediction signals by using weight factors and DC offset values which vary for each reference frame and performing predictive encoding in the above manner can properly generate prediction signals from a plurality of reference frames and realize high-prediction-efficiency encoding with higher efficiency and high picture quality even with respect to a video signal which varies in signal amplitude for each frame or slice over time or varies in DC offset value.

A specific example of the method of encoding information of weight factors and DC offset values will be described next. FIGS. 42, 43 and 44 show data structures associated with encoding of information of weight factors and DC offset values.

FIG. 42 shows part of the header data structure of a video frame to be encoded or slice. A maximum index count "number_of_max_ref_idx" indicating reference frames for the video frame or slice and a table data "weighting_table()" indicating information of weight factors and DC offset values are encoded. The maximum index count "number_of_max_ref_idx" is equivalent to MAX_REF_IDX in FIG. 40.

FIG. 43 shows the first example of an encoded data structure concerning the weight factor/DC offset data table. In this case, the data of weight factors and DC offset values corresponding to each reference frame are encoded in accordance with the maximum index count "number_of_max_ref_idx" sent as the header data of the frame or slice. A DC offset value d[i] associated with the ith reference frame is directly encoded as an integral pixel value.

On the other hand, a weight factor w[i] associated with the ith reference frame is not generally encoded into an integer. For this reason, as indicated by equation (50), the weight factor w[i] is approximated with a rational number w'[i] whose denominator becomes a power of 2 so as to be encoded into a numerator [i] expressed in the form of an integer and a denominator to the power of 2 w_exponential_denominator.

$$w'[i] = \frac{w\_numerator[i]}{2^{w\_exponential\_denominator}} \tag{50}$$

The value of the numerator and the denominator to the power of 2 can be obtained by the following equation (51):

$$w\_numerator[i] = (int)w[i] \times 2^{w\_exponential\_denominator}$$

$$w\_exponential\_denominator = (int)\log_2\left(\frac{255}{\max_i(w[i])}\right) \tag{51}$$

In encoding and decoding operations, a prediction picture is generated by using the above encoded approximate value w'[i]. According to equations (50) and (51), the following merits can be obtained.

According to the weight factor expression based on equation (50), the denominator of the weight factor is constant for each video frame, whereas the numerator changes for each reference frame. This encoding method can reduce the data amount of weight factors to be encoded, decrease the encoding overhead, and improve the encoding efficiency as compared with the method of independently encoding weight factors for each reference frame into denominators and numerators.

If the denominator is set to a power of 2, since multiplications of weight factors with respect to reference pixel block signals can be realized by multiplications of integers and bit shifts, no floating-point operation or division is required. This makes it possible to reduce the hardware size and computation amount for encoding and decoding.

The above computations will be described in further detail below. Equation (52) represents a prediction expression obtained by generalizing the predictive expression indicated by equations (42) and (43) and is used for the generation of a prediction pixel block signal for a pixel block corresponding to a reference frame number i. Let Predi be a prediction signal, ref[i] be the reference pixel block signal extracted from the ith reference frame, and w[i] and d[i] are a weight factor and DC offset value for the reference pixel block extracted from the ith reference frame.

$$Pred_i = w[i] \bullet ref[i] + d[i] \qquad (52)$$

Equation (53) is a prediction expression in a case wherein the weight factor w[i] in equation (52) is expressed by the rational number indicated by equation (50). In this case, wn[i] represents w_numerator[i] in equation (50), and wed represents w_exponential_denominator.

$$Pred_i = ((wn[i] \bullet ref[i] + 1 << (wed - 1)) >> wed) + d[i]$$

$$(53)$$

In general, since the weight factor w[i] which is effective for an arbitrary fading picture or the like is not an integer, a floating-point multiplication is required in the equation (52). In addition, if w[i] is expressed by an arbitrary rational number, an integer multiplication and division are required. If the denominator indicated by equation (50) is expressed by a rational number which is a power of 2, a weighted predictive computation can be done by an integer multiplication using an integral coefficient wn[i], adding of an offset in consideration of rounding off, a right bit shift of wed bit, and integral addition of a DC offset value, as indicated by equation (53). This eliminates the necessity for floating-point multiplication.

Also, a power of 2 which indicates the magnitude of a denominator is commonly set for each video frame or slice regardless of a reference frame number i. Even if, therefore, the reference frame number i takes a plurality of values for each video frame, an increase in code amount in encoding weight factors can be suppressed.

Equation (54) indicates a case wherein the weight factor representation based on equation (50) is applied to a prediction based on the linear sum of two reference frames indicated by equation (44), as in the case with equation (53).

$$Pred = ((wn[0] * ref[0] + wn[1] \bullet ref[1] + 1 << wed) >> (wed + 1)) + (d[0] + d[1] + 1) >> 1$$

$$(54)$$

In the above prediction based on the linear sum of two reference frames as well, since a weight factor is not generally encoded into an integer, two floating-point multiplications are required according to equation (44). According to equation (54), however, a prediction signal can be generated by the linear sum of two reference frames by performing only an integer multiplication, bit shift, and integer addition. In addition, since information wed concerning the magnitude of a denominator is also commonized, an increase in code amount in encoding a weight factor can be suppressed.

Also, according to equation (54), the numerator of a weight factor is expressed by eight bits. If, therefore, a pixel signal value is expressed by eight bits, encoding and decoding can be done with a constant computation precision of 16 bits.

In addition, within the same video frame, a denominator, i.e., a shift amount, is constant regardless of reference frames. In encoding or decoding, therefore, even if reference frames are switched for each pixel block, there is no need to change the shift amount, thereby reducing the computation amount or hardware size. If weight factors for all reference frames satisfy

$$w\_numerator[i] = 2^n \times K_i \qquad (55)$$

the denominator and numerator of the to-be-encoded weight factor to be calculated by equation (54) may be transformed as follows:

$$w\_numerator[i] = w\_numerator[i] >> n$$
$$w\_exponential\_denominator \qquad (56)$$
$$= w\_exponential\_denominator - n$$

Equation (56) has the function of reducing each weight factor expressed by a rational number to an irreducible fraction. Encoding after such transformation can reduce the dynamic range of the encoded data of weight factors without decreasing the weight factor precision and can further reduce the code amount in encoding weight factors.

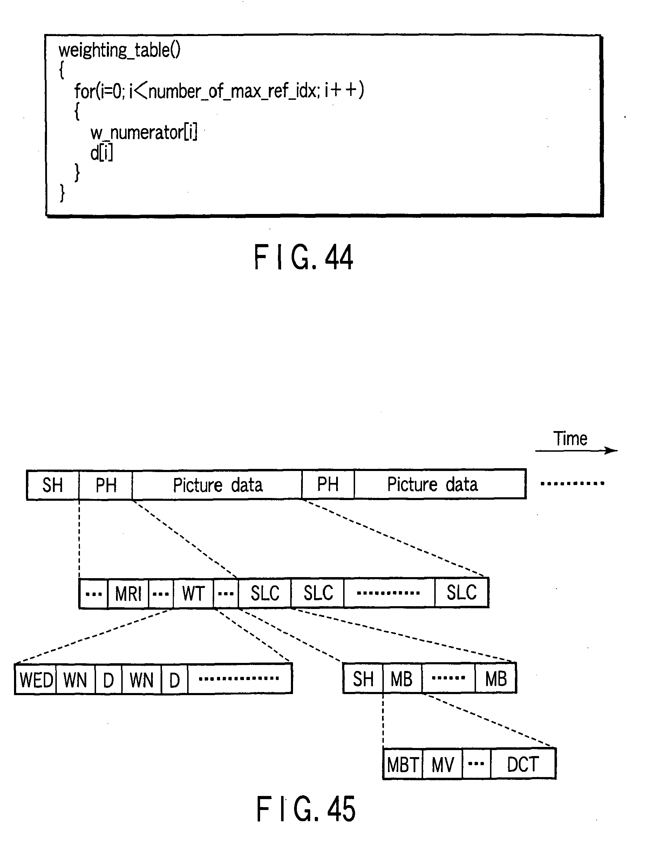

FIG. 44 shows the second example of the video data structure associated with a weight factor/DC offset data table. In the case shown in FIG. 44 a DC offset value is encoded in the same manner as in the form shown in FIG. 43. In encoding a weight factor, however, a power of 2 which indicates a denominator is not encoded unlike in the form shown in FIG. 43, and only the numerator of weight factor which is expressed by a rational number is encoded while the denominator is set as a constant value. In the form shown in FIG. 44, for example, a weight factor may be expressed by a rational number, and only a numerator w_numerator[i] may be encoded as follows.

$$w'[i] = \frac{w\_numerator[i]}{2^4} \qquad (57)$$

$$w\_numerator[i] = \begin{cases} 1 & , \text{if } w[i] \leq \frac{1}{16} \\ 255 & , \text{if } w[i] \geq 16 \\ (int)w[i] \times 2^4 & , else \end{cases}$$

$$w\_exponential\_deno\min ator = 4 \qquad (58)$$

In this embodiment, since the power of 2 which represents the denominator of the weight factor is constant, there is no need to encode information concerning the denominator to the power of 2 for each video frame, thereby further reducing the code amount in encoding a weight factor table.

Assume that in making a rational number representation with a constant numerator ("16" in the above case), the value of the numerator is clipped to eight bits. In this case, if, for example, a pixel signal is expressed by eight bits, encoding and decoding can be done with a constant computation precision of 16 bits.

In addition, in this embodiment, since the shift amount concerning a multiplication of a weight factor is constant, there is no need to load a shift amount for each frame in encoding and decoding. This makes it possible to reduce the implementation cost of an encoding or decoding apparatus or software or hardware size.

FIG. 45 schematically shows the overall time-series structure of to-be-encoded video data including the data structures shown in FIGS. 42 to 44. In the head of the video data to be encoded, information of a plurality of encoding parameters which remain constant within one encoding sequence, such as a picture size, is encoded as a sequence header (SH). Each picture frame or field is encoded as a picture, and each picture is sequentially encoded as a combination of a picture header (PH) and picture data (Picture data).

In the picture header (PH), a maximum index count "number_of_max_ref_idx" indicating reference frames and a weight factor/DC offset data table "weighting_table()", which are shown in FIG. 42, are encoded as MRI and WT, respectively. In "weighting_table()"(WT), a power of 2 w_exponential_denominator indicating the magnitude of the denominator common to the respective weight factors as shown in FIG. 43 is encoded as WED, and w_numerator[i] indicating the-magnitude of the numerator of each weight factor and a DC offset value d[i] are encoded WN and D, respectively, following w_exponential_denominator.

With regard to combinations of weight factor numerators and DC offset values, a plurality combinations of WNs and Ds are encoded on the basis of the number indicated by "number_of_max_ref_idx" contained in the picture header. Each picture data is divided into one or a plurality of slices (SLCs), and the data are sequentially encoded for each slice. In each slice, an encoding parameter associated with each pixel block in the slice is encoded as a slice header (SH), and one or a plurality of macroblock data (MB) are sequentially encoded following the slice header.

With regard to macroblock data, information concerning encoding of each pixel in the macroblock, e.g., prediction mode information (MBT) of a pixel block in the macroblock and motion vector information (MV), is encoded. Lastly, the encoded orthogonal transform coefficient (DCT) obtained by computing the orthogonal transform (e.g., a discrete cosine transform) of the to-be-encoded pixel signal or prediction error signal is contained in the macroblock data. In this case, both or one of ""number_of_max_ref_idx" and "weighting_table()"(WT) contained in the picture header may be encoded within the slice header (SH).

In the arrangement of the weight factor table data shown in FIG. 44, since encoding of data indicating the magnitude of the denominator of a weight factor can be omitted, encoding of WED in FIG. 45 can be omitted.

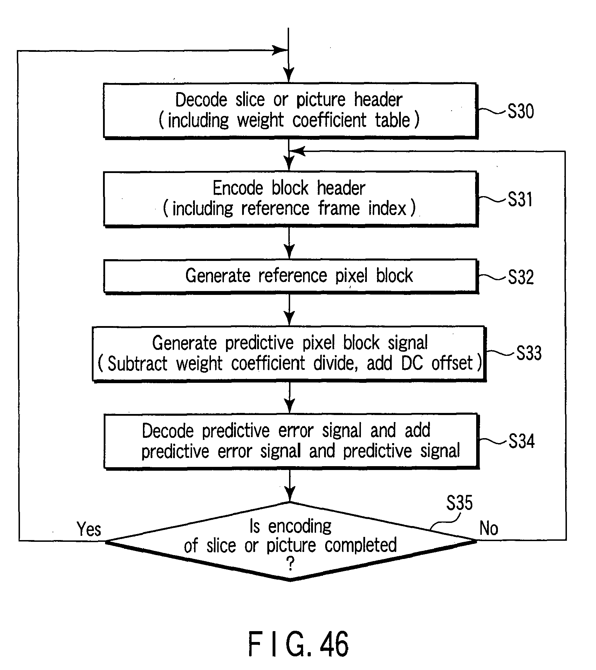

FIG. 46 is a flow chart showing a video decoding procedure according to the embodiment of the present invention. A procedure for inputting the encoded data, which is encoded by the video encoding apparatus according to the embodiment described with reference to FIG. 40, and decoding the data will be described below.

The header data of an encoded frame or slice, which includes the weight factor/DC offset data table described with reference to FIGS. 42 to 44, is decoded from the input encoded data (step S30). The header data of an encoded block, which includes a reference frame index for identifying a reference frame for each encoded block, is decoded (step S31).

A reference pixel block signal is extracted from the reference frame indicated by the reference frame index for each pixel block (step S32). A weight factor and DC offset value are determined by referring to the decoded weight factor/DC offset data table on the basis of the reference frame index of the encoded block.

A prediction pixel block signal is generated from the reference pixel block signal by using the weight factor and DC offset value determined in this manner (step S33). The encoded prediction error signal is decoded, and the decoded prediction error signal is added to the prediction pixel block signal to generate a decoded picture (step S34).

When the respective encoded pixel blocks are sequentially decoded and all the pixel blocks in the encoded frame or slice are decoded, the next picture header or slide header is continuously decoded.

The encoding and decoding methods following the above procedures can generate proper prediction pictures in encoding and decoding operations even with respect to a vide signal which varies in signal amplitude over time or varies in DC offset value over time, thereby realizing high-efficiency, high-picture-quality video encoding and decoding with higher prediction efficiency.

The preferable forms of the present invention disclosed in the above embodiments will be described below one by one.

(1) In a video encoding method of performing motion compensation predictive inter-frame encoding of a to-be-encoded macroblock of a video picture by using a predetermined combination of a plurality of reference frames and a motion vector between the to-be-encoded macroblock and at least one reference frame, (a) at least one reference macroblock is extracted from each of the plurality of reference frames, (b) a predictive macroblock is generated by calculating the linear sum of the plurality of extracted reference macroblocks by using a predetermined combination of weighting factors, and (c) a predictive error signal between the predictive macroblock and the to-be-encoded macroblock is generated to encode the predictive error signal, the first index indicating the combination of the plurality of reference frames, the second index indicating the combination of the weighting factors, and the information of the motion vector.

<Effects>

Performing a prediction based on the linear sum of a plurality of reference frames with variable linear sum weighting factors in this manner allows a proper prediction with respect to changes in signal intensity over time such as fading. This makes it possible to improve the prediction efficiency in encoding. In addition, for example, in a portion where occlusion (appearing and disappearing) temporally occurs, the prediction efficiency can be improved by selecting proper reference frames. Encoding these combinations of these linear predictive coefficients and reference frames as indexes can suppress the overhead.

(2) In (1), an index indicating the combination of linear sum weighting factors is encoded as header data for each frame or each set of frames, and the predictive error signal, the index indicating the combination of reference frames, and the motion vector are encoded for each macroblock.

<Effects>

In general, changes in signal intensity over time such as fading occur throughout an entire frame, and occlusion or the like occurs locally in the frame. According to (2), one combination of linear predictive coefficients made to correspond to a change in signal intensity over time is encoded for each frame, and an index indicating a combination of reference frames is made variable for each macroblock. This makes it possible to improve the encoding efficiency while reducing the encoding overhead, thus achieving an improvement in encoding efficiency including overhead.

(3) In (1) or (2), the motion vector to be encoded is a motion vector associated with a specific one of the plurality of reference frames.

<Effects>

In performing motion compensation predictive encoding using a plurality of reference frames for each macroblock, when a motion vector for each macroblock is individually encoded, the encoding overhead increases. According to (3), a motion vector for a specific reference frame is transmitted, and motion vectors for other frames are obtained by scaling the transmitted motion vector in accordance with the inter-frame distances between the to-be-encoded frame and the respective reference frames. This makes it possible prevent an increase in encoding overhead and improve the encoding efficiency.

(4) In (3), the motion vector associated with the specific reference frame is a motion vector that is normalized in accordance with the reference frame and the to-be-encoded frame.

<Effects>

Since the motion vector normalized with the unit inter-frame distance is used as a motion vector to be encoded in this manner, motion vector scaling with respect to an arbitrary reference frame can be performed at low cost by multiplication or shift computation and addition processing. Assuming temporally uniform movement, normalization with a unit inter-frame distance minimizes the size of a motion vector to be encoded and can reduce the information amount of the motion vector, thus obtaining the effect of reducing the encoding overhead.

(5) In (3), the motion vector associated with the specific reference frame is a motion vector for one of the plurality of reference frames which corresponds to the greatest inter-frame distance from the to-be-encoded frame.

<Effects>

According to (3), the motion vector code amount decreases and scaling of a motion vector can be realized at a low cost. On the other hand, as the inter-frame distance between a reference frame and a to-be-encoded frame increases, the precision of motion compensation decreases. In contrast to this, according to (5), a motion vector for one of a plurality of reference frames which corresponds to the greatest inter-frame distance is encoded, and motion vectors for the remaining reference frames can be generated by interior division of the encoded motion vector in accordance with the inter-frame distances. This can suppress a decrease in motion compensation precision with respect to each reference frame. This makes it possible to improve the prediction efficiency and perform high-efficiency encoding.

(6) In (1) or (2), the motion vectors to be encoded are the first motion vector associated with one specific reference frame of the plurality of reference frames and a motion vector for another or other reference frames, and the motion vector for another or other reference frames is encoded as a differential vector between another or other motion vectors and the motion vector obtained by scaling the first motion vector in accordance with the inter-frame distance between the to-be-encoded frame and one or the plurality of reference frames.

<Effects>

If a local temporal change in picture can be approximated by translation, a prediction can be made from a plurality of reference frames using one motion vector and the motion vectors obtained by scaling it in accordance with the inter-frame distances. If, however, the speed of a change in picture is not temporally constant, it is difficult to perform proper motion compensation by scaling alone. According to (6), as motion vectors for a plurality of reference frames, one representative vector and a differential vector between the motion vector obtained by scaling the representative vector and an optimal motion vector for each reference frame are encoded. This makes it possible to reduce the code amount of motion vectors as compared with the case wherein a plurality of motion vectors are encoded. This therefore can reduce the encoding overhead while improving the prediction efficiency.

(7) In (6), the first motion vector is a motion vector normalized in accordance with the inter-frame distance between the reference frame and the frame to be encoded.

(8) In (6), the first motion vector is a motion vector for one of the plurality of reference frames which corresponds to the greatest inter-frame distance from the frame to be encoded.

(9) In any one of (1) to (8), encoding is skipped without outputting any encoded data with respect to a macroblock when an index indicating a combination of the plurality of reference frames is a predetermined value, all the elements of the motion vector to be encoded are 0, and all the predictive error signals to be encoded are 0. With regard to the macroblock to be encoded next, the number of skipped macroblocks is encoded.

<Effects>

If the above conditions are made to coincide with each other on the transmission side and reception side as conditions for skipping macroblocks, a picture can be played back on the reception side without sending an index indicating a combination of reference frames, a motion vector with a size of 0, and a 0 error signal, which are encoding information for each macroblock, upon encoding them. This makes it possible to reduce the encoded data amount corresponding to these data and improve the encoding efficiency. In addition, encoding a predictive coefficient corresponding to a temporal change in signal intensity for each frame can realize adaptive macroblock skipping in accordance with the characteristics of a picture signal without increasing the encoding overhead.

(10) In any one of (1) to (8), encoding is skipped without outputting any encoded data with respect to a macroblock when an index indicating a combination of the plurality of reference frames is a predetermined value, the motion vector to be encoded coincides with a motion vector for the immediately previously encoded macroblock, and all the predictive error signals to be encoded are 0. With regard to the macroblock to be encoded next, the number of skipped macroblocks is encoded.

<Effects>

When, for example, an area larger than a macroblock in a frame temporally translates, the corresponding macroblock can be encoded as a skip macroblock without sending any motion vector information. This makes it possible to reduce the encoding overhead and improve the encoding efficiency.

(11) In (9) or (10), an index indicating the predetermined combination of reference frames indicates the use of two immediately previously encoded frames as reference frames.

<Effects>

When the use of two immediately previously encoded frames as reference pictures is set as a macroblock skipping condition, an accurate predictive picture can be easily generated by a linear prediction such as linear extrapolation even in a case wherein a signal intensity changes over time due to fading or the like. In spite of the fact that the signal intensity changes over time, encoding of a macroblock can be skipped. The two effects, i.e., an improvement in prediction efficiency and a reduction in encoding overhead, make it possible to improve the encoding efficiency.

(12) In (9) or (10), an index indicating the predetermined combination of reference frames can be changed for each to-be-encoded frame, and the index indicating the predetermined combination of reference frames is encoded as header data for a to-be-encoded frame.

<Effects>

The macroblock skipping conditions can be flexibly changed in accordance with a change in picture signal over time. By properly changing the skipping conditions for each frame in accordance with a picture so as to easily cause macroblock skipping at the time of encoding, the encoding overhead can be reduced, and high-efficiency encoding can be realized.

(13) In any one of (1) to (8), encoding is skipped without outputting any encoded data with respect to a macroblock when an index indicating a combination of the plurality of reference frames is the same as that for the immediately previously encoded macroblock, all the elements of the motion vector to be encoded are 0, and all the predictive error signals to be encoded are 0. With regard to the macroblock to be encoded next, the number of skipped macroblocks is encoded.

<Effects>

When the use of the same combination of reference frames as that for the immediately preceding macroblock is set as a macroblock skipping condition, macroblock skipping can be efficiently done by utilizing the spatiotemporal characteristic correlation between areas adjacent to a video signal. This can improve the encoding efficiency.

(14) In any one of (1) to (8), encoding is skipped without outputting any encoded data with respect to a macroblock when an index indicating a combination of the plurality of reference frames is the same as that for the immediately previously encoded macroblock, the motion vector to be encoded coincides with a motion vector for the immediately previously encoded macroblock, and all the predictive error signals to be encoded are 0. With regard to the macroblock to be encoded next, the number of skipped macroblocks is encoded.

<Effects>

Adding the arrangement in (14) to that in (13) makes it possible to reduce the encoding overhead and improve the encoding efficiency.

(15) In any one of (1) to (8), the motion vector to be encoded is predicted from a motion vector for one or a plurality of adjacent macroblocks within the frame, and the differential vector between the motion vector to be encoded and the predicted motion vector is encoded.

<Effects>

The encoding overhead for motion vectors can be reduced and the encoding efficiency can be improved more than in (1) to (8) by predicting a motion vector to be encoded from adjacent macroblocks within the frame in consideration of the spatial correlation between motion vectors, and encoding only the differential vector.

(16) In any one of (1) to (8), the motion vector to be encoded is predicted from a motion vector for a macroblock at the same position in the immediately previously encoded frame, and the differential vector between the motion vector to be encoded and the predicted motion vector is encoded.

<Effects>

The encoding overhead for motion vectors can be reduced and the encoding efficiency can be further improved by predicting a motion vector to be encoded from a motion vector for a macroblock at the same position in the immediately previously encoded frame in consideration of the temporal correlation between motion vectors, and encoding only the differential vector.

(17) In any one of (1) to (8), the motion vector to be encoded is predicted from a motion vector for one or a plurality of macroblocks within the frame and a motion vector for a macroblock at the same position in the immediately previously encoded frame, and the differential vector between the motion vector to be encoded and the predicted motion vector is encoded.

<Effects>

Both the characteristics in (15) and (16) can be obtained by predicting a motion vector within a frame and between frames in consideration of the spatiotemporal characteristic correlation between motion vectors. This makes it possible to further improve the encoding efficiency for motion vectors.

(18) In ay one of (15) to (17), encoding is skipped without outputting any encoded data with respect to a macroblock when an index indicating a combination of the plurality of reference frames is a predetermined value, the differential vector of the motion vector to be encoded is 0, and all the predictive error signals to be encoded are 0. With regard to the macroblock to be encoded next, the number of skipped macroblocks is encoded.

<Effects>

In synergy with the arrangement of any one of (15) to (17), the encoding overhead can be further reduced to improve the encoding efficiency.

(19) In any one of (15) to (17), encoding is skipped without outputting any encoded data with respect to a macroblock when an index indicating a combination of the plurality of reference frames is a predetermined value, the differential vector of the motion vector to be encoded coincides with a differential vector for the immediately previously encoded macroblock, and all the predictive error signals to be encoded are 0. With regard to the macroblock to be encoded next, the number of skipped macroblocks is encoded.

<Effects>

In synergism with the arrangement of any one of (15) to (17) and the arrangement of (10), the encoding overhead can be further reduced to improve the encoding efficiency.

(20) In (18) or (19), an index indicating the predetermined combination of reference frames indicates the use of two immediately previously encoded frames as reference frames.

<Effects>

In synergism with the arrangement of (18) or (19) and the arrangement of (11), the encoding overhead can be further reduced to improve the encoding efficiency.

(21) In (18) or (19), an index indicating the predetermined combination of reference frames can be changed for each to-be-encoded frame, and the index indicating the predetermined combination of reference frames is encoded as header data for a to-be-encoded frame.

<Effects>

In synergism with the arrangement of (18) or (19) and the arrangement of (12), the encoding overhead can be further reduced to improve the encoding efficiency.

(22) In any one of (15) to (17), encoding is skipped without outputting any encoded data with respect to a macroblock when an index indicating a combination of the plurality of reference frames is the same as that for the immediately previously encoded macroblock, all the elements of the differential vector of the motion vector to be encoded are 0, and all the predictive error signals to be encoded are 0. With regard to the macroblock to be encoded next, the number of skipped macroblocks is encoded.

<Effects>

In synergism with the arrangement of any one of (15) to (17) and the arrangement of (13), the encoding overhead can be reduced to improve the encoding efficiency.

(23) In any one of (15) to (17), encoding is skipped without outputting any encoded data with respect to a macroblock when an index indicating a combination of the plurality of reference frames is the same as that for the immediately previously encoded macroblock, the differential vector of the motion vector to be encoded coincides with a differential vector for the immediately previously encoded macroblock, and all the predictive error signals to be encoded are 0. With regard to the macroblock to be encoded next, the number of skipped macroblocks is encoded.

<Effects>

In synergism with the arrangement of any one of (15) to (17) and the arrangement of (14), the encoding overhead can be reduced to improve the encoding efficiency.

(24) In (1) or (2), the combination of linear sum weighting factors is determined in accordance with the inter-frame distances between a to-be-encoded frame and a plurality of reference frames.

<Effects>

A proper predictive picture can be easily generated at a low cost by performing linear interpolation or linear extrapolation for a time jitter in signal intensity such as fading in accordance with the inter-frame distances between a to-be-encoded frame and a plurality of reference frames. This makes it possible to realize high-efficiency encoding with high prediction efficiency.

(25) In (1) or (2), an average DC value in a frame or field in an input video signal is calculated, and the combination of linear sum weighting factors is determined on the basis of the DC values in a plurality of reference frames and a to-be-encoded frame.

<Effects>

By calculating linear predictive coefficients from temporal changes in DC value in a to-be-encoded frame and a plurality of reference frames, a proper predictive picture can be generated with respect to not only a constant temporal change in signal intensity but also an arbitrary time jitter in signal intensity.

(26) In (1) or (2), assume that an input video signal has a variable frame rate or an encoder for thinning out arbitrary frames of the input video signal to make it have a variable frame rate is prepared. In this case, in encoding the video signal having the variable frame rate, the combination of linear sum weighting factors is determined in accordance with changes in inter-frame distance between a to-be-encoded frame and a plurality of reference frames.

<Effects>

By using proper linear predictive coefficients in accordance with inter-frame distances with respect to encoding with a variable frame rate in which the inter-frame distances between a to-be-encoded frame and a plurality of reference frames dynamically change, high prediction efficiency can be maintained to perform high-efficiency encoding.

(27) In a video encoding method of performing motion compensation predictive inter-frame encoding of a to-be-encoded macroblock of a video picture by using a predetermined combination of a plurality of reference frames and a motion vector between the to-be-encoded macroblock and at least one reference frame, (a) the first reference macroblock corresponding to a candidate for the motion vector is extracted from the first reference frame, (b) the candidate for the motion vector is scaled in accordance with the inter-frame distance between at least one second reference frame and the to-be-encoded frame, (c) at least one second reference macroblock corresponding to the candidate for the motion vector obtained by scaling is extracted from the second reference frame, (d) a predictive macroblock is generated by calculating a linear sum using a predetermined combination of weighting factors for the first and second reference macroblocks, (e) a predictive error signal between the predictive macroblock and the to-be-encoded macroblock is generated, (f) the motion vector is determined on the basis of the magnitude of the predictive error signal between the linear sum of the first and second reference macroblocks and the to-be-encoded macroblock, and (g) the predictive error signal, the first index indicating the first and second reference frames, the second index indicating the combination of weighting factors, and the information of the determined motion vector are encoded.

<Effects>

Assume that a plurality of reference macroblocks are extracted from a plurality of reference frames with respect to one to-be-encoded macroblock, and a predictive macroblock is generated from the linear sum. In this case, if an optimal motion vector is determined for each reference frame, the computation amount becomes enormous. According to the arrangement of (27), since a motion vector candidate for the first reference frame is scaled to obtain motion vectors for other reference frames, a plurality of optimal motion vectors can be searched out with a very small computation amount. This makes it possible to greatly reduce the encoding cost.

(28) In (27), the determined motion vector is scaled in accordance with the distances between the respective reference frames and the to-be-encoded frame, and a reference macroblock for at least one reference frame is individually searched again so as to reduce the propriety error signal near the scaled motion vector. A motion compensation prediction is then performed by using the motion vector obtained as a result of the re-search.

<Effects>

Making a re-search for a motion vector near the scaled motion vector candidate can realize a higher-efficiency motion vector search with a smaller computation amount and realize a high-efficiency motion compensation prediction with a slight increase in computation amount. This makes it possible to perform high-efficiency encoding.

(29) In a video encoding method of performing motion compensation inter-frame encoding of a to-be-encoded macroblock of a video picture by using at least one past reference frame and a motion vector between the to-be-encoded macroblock and the reference frame, the motion compensation predictive inter-frame encoding is performed upon switching, for each to-be-encoded macroblock, between operation of using a motion vector for a to-be-decoded macroblock at the same intra-frame position as that of the to-be-encoded macroblock in the frame encoded immediately before the to-be-encoded frame containing the to-be-encoded macroblock and operation of newly determining and encoding the motion vector.

<Effects>

As has been described above, in motion compensation predictive encoding, the overhead for motion vector encoding influences the encoding efficiency. When, in particular, a picture with high prediction efficiency is to be encoded or many motion vectors are to be encoded because of a small macroblock size, the code amount of motion vector may become dominant. According to the arrangement of (29), the temporal correlation between the movements of pictures is used such that a motion vector for a macroblock at the same position as that of a to-be-encoded macroblock in the immediately preceding frame is not encoded if the macroblock can be used without any change, and a motion vector for only a macroblock which is subjected to a decrease in prediction efficiency when the motion vector for the immediately preceding frame is used is encoded. This makes it possible to reduce the overhead for motion vector encoding and realize high-efficiency encoding.

(30) In a video encoding method of performing motion compensation predictive inter-frame encoding of a to-be-encoded macroblock of a video picture by using at least one reference frame and a motion vector between the to-be-encoded macroblock and the reference frame, the motion compensation predictive inter-frame encoding is performed upon switching, for each to-be-encoded macroblock, between (a) the first prediction mode of using at least one encoded past frame as the reference frame, (b) the second prediction mode of using an encoded future frame as the reference frame, (c) the third prediction mode of using the linear sum of the encoded past and future frames as the reference frame, and (d) the fourth prediction mode of using the linear sum of the plurality of encoded past reference frames as the reference frame.

<Effects>

In the case of B pictures (bi-directional predictive encoding) used for MPEG2 video encoding, a prediction from one forward frame, a prediction from one backward frame, and an average prediction from forward and backward frames are switched for each macroblock. In the average prediction, averaging processing functions as a loop filter to remove original image noise or encoding noise in a reference frame, thereby improving the prediction efficiency. Note, however, that a bi-directional prediction is difficult to make before and after a scene change, and hence a prediction is made from one forward or backward frame. In this case, no loop filter effect works, and the prediction efficiency decreases. According to the arrangement of (30), even in a prediction from only a forward frame, since a predictive picture is generated from the linear sum of a plurality of reference frames, the prediction efficiency can be improved by the loop filter effect.

(31) In (30), the prediction based on the linear sum includes linear interpolation and linear extrapolation corresponding to inter-frame distances.

<Effects>

Even if the signal intensity changes over time due to fading or the like, a proper predictive picture can be easily generated by linear interpolation or linear extrapolation from a plurality of frames. This makes it possible to obtain high prediction efficiency.

(32) In a video decoding method of performing motion compensation predictive inter-frame decoding of a to-be-decoded macroblock of a video picture by using a predetermined combination of a plurality of reference frames and a motion vector between the to-be-decoded macroblock and at least one reference frame, (a) encoded data including a predictive error signal for each to-be-decoded macroblock, the first index indicating the combination of a plurality of reference frames, the second index indicating a combination of linear sum weighting factors for reference macroblocks, and information of the motion vector is decoded, (b) a plurality of reference macroblocks are extracted from the plurality of reference frames in accordance with the decoded information of the motion vector and the decoded information of the first index, (c) a predictive macroblock is generated by calculating the linear sum of the plurality of extracted reference frames by using the combination of weighting factors indicated by the decoded information of the second index, and (d) a video signal is decoded by adding the predictive macroblock and the decoded predictive error signal for each of the to-be-decoded macroblocks.

<Effects>

The data encoded in (1) can be decoded, and the same encoding efficiency improving effect as that in (1) can be obtained.

(33) In (32), an index indicating the combination of linear sum weighting factors is received as header data for each frame or each set of a plurality of frames, and the predictive error signal, the index indicating the combination of reference frames, and the motion vector are received and decoded for each macroblock.

<Effects>

The data encoded in (2) can be decoded, and the same encoding efficiency improving effect as that in (2) can be obtained.

(34) In (32) or (33), the received motion vector is a motion vector associated with a specific one of the plurality of reference frames, the received motion vector is scaled in accordance with the inter-frame distance between the to-be-decoded frame and the reference frame, and a motion vector for another or other reference frames is generated by using the scaled motion vector.

<Effects>

The data encoded in (3) can be decoded, and the same encoding efficiency improving effect as that in (3) can be obtained.

(35) In (34), the motion vector associated with the specific reference frame is a motion vector normalized in accordance with the inter-frame distance between the reference frame and the frame to be encoded.

<Effects>

The data encoded in (4) can be decoded, and the same encoding efficiency improving effect as that in (4) can be obtained.

(36) In (34), the motion vector associated with the specific reference frame is a motion vector for one of the plurality of reference frames which corresponds to the greatest inter-frame distance from the frame to be encoded.

<Effects>

The data encoded in (5) can be decoded, and the same encoding efficiency improving effect as that in (5) can be obtained.

(37) In (32) or (33), the received motion vector is a differential vector between the first motion vector associated with a specific one of the plurality of reference frames and another or other reference frames. The first motion vector is scaled in accordance with the inter-frame distance between a to-be-encoded frame and the one or a plurality of reference frames. A motion vector for another or other reference frames is generated by adding the scaled motion vector and the differential vector for the received one or a plurality of reference frames.

<Effects>

The data encoded in (6) can be decoded, and the same encoding efficiency improving effect as that in (6) can be obtained.
(38) In (37), the received first motion vector is a motion vector normalized in accordance with the inter-frame distance between the reference frame and the frame to be encoded.

<Effects>

The data encoded in (7) can be decoded, and the same encoding efficiency improving effect as that in (7) can be obtained.
(39) In (37), the received first motion vector is a motion vector for one of the plurality of reference frames which corresponds to the greatest inter-frame distance from the frame to be encoded.

<Effects>

The data encoded in (8) can be decoded, and the same encoding efficiency improving effect as that in (8) can be obtained.
(40) In any one of (32) to (39), when information associated with the number of skipped macroblocks is received for each macroblock, and one or more macroblocks are skipped, all motion vector elements required to decode each of the skipped macroblocks are regarded as 0. By using a predetermined combination of reference frames, reference macroblocks are extracted from the plurality of reference frames. A predictive macroblock is generated from the plurality of reference macroblocks by a linear sum based on an index indicating the combination of the received linear sum weighting factors. The predictive macroblock is used as a decoded picture.

<Effects>

The data encoded in (9) can be decoded, and the same encoding efficiency improving effect as that in (9) can be obtained.
(41) In any one of (32) to (39), when information associated with the number of skipped macroblocks is received for each macroblock, and one or more macroblocks are skipped, reference macroblocks are extracted, for each of the skipped macroblocks, from the plurality of reference frames by using a motion vector for the immediately previously encoded macroblock without being skipped and a predetermined combination of a plurality of reference frames. A predictive macroblock is generated from the plurality of reference frames by a linear sum based on an index indicating the combination of the received linear sum weighting factors. The predictive macroblock is then used as a decoded picture.

<Effects>

The data encoded in (10) can be decoded, and the same encoding efficiency improving effect as that in (10) can be obtained.
(42) In (40) or (41), the predetermined combination of reference frames includes immediately previously decoded two frames.

<Effects>

The data encoded in (11) can be decoded, and the same encoding efficiency improving effect as that in (11) can be obtained.
(43) In (40) or (41), an index indicating the predetermined combination of reference frames is received as header data for an encoded frame, and a skipped macroblock is decoded in accordance with the index.

<Effects>

The data encoded in (12) can be decoded, and the same encoding efficiency improving effect as that in (12) can be obtained.

(44) In any one of (32) to (39), when information associated with the number of skipped macroblocks is received for each macroblock, and one or more macroblocks are skipped, all motion vector elements required to decode each of the skipped macroblocks are regarded as 0. By using an index indicating a combination of a plurality of reference frames in the immediately preceding macroblock encoded without being skipped, reference macroblocks are extracted from the plurality of reference frames, and a predictive macroblock is generated from the plurality of reference macroblocks by a linear sum based on the received combination of linear sum weighting factors. The predictive macroblock is used as a decoded picture.

<Effects>

The data encoded in (13) can be decoded, and the same encoding efficiency improving effect as that in (13) can be obtained.

(45) In any one of (32) to (39), when information associated with the number of skipped macroblocks is received for each macroblock, and one or more macroblocks are skipped, reference macroblocks are extracted, for each of the skipped macroblocks, from the plurality of reference frames by using a motion vector for the immediately previously encoded macroblock without being skipped and an index indicating a combination of a plurality of reference frames in the immediately preceding macroblock encoded without being skipped. A predictive macroblock is generated from the plurality of reference frames by a linear sum based on an index indicating the combination of the received linear sum weighting factors. The predictive macroblock is then used as a decoded picture.

<Effects>

The data encoded in (14) can be decoded, and the same encoding efficiency improving effect as that in (14) can be obtained.

(46) In any one of (32) to (39), the received motion vector is encoded as a differential vector with respect to a motion vector predicted from one or a plurality of adjacent macroblocks within a frame. A predictive motion vector is generated from a decoded motion vector for the plurality of adjacent macroblocks. The predictive motion vector is added to the received motion vector to decode the motion vector for the corresponding macroblock.

<Effects>

The data encoded in (15) can be decoded, and the same encoding efficiency improving effect as that in (15) can be obtained.

(47) In any one of (32) to (39), the following is the 47th characteristic feature. The received motion vector is encoded as a differential motion vector with respect to a motion vector predicted from a motion vector in a macroblock at the same position in the immediately preceding frame. By adding the received motion vector and the motion vector predicted from the decoded motion vector in the macroblock at the same position as that in the immediately previously decoded frame, the motion vector for the corresponding macroblock is decoded.

<Effects>

The data encoded in (16) can be decoded, and the same encoding efficiency improving effect as that in (16) can be obtained.

(48) In any one of (32) to (39), the received motion vector is encoded as a differential motion vector with respect to a motion vector predicted from a motion vector for one or a plurality of adjacent macroblocks in a frame and a motion vector for a macroblock at the same position in the immediately preceding frame. A predictive motion vector is generated from a decoded motion vector for the plurality of adjacent macroblocks and a decoded motion vector for a macroblock at the same position in the immediately previously decoded frame. By adding the predictive motion vector and the received motion vector, the motion vector for the corresponding macroblock is decoded.

<Effects>

The data encoded in (17) can be decoded, and the same encoding efficiency improving effect as that in (17) can be obtained.

(49) In any one of (46) to (48), when information associated with the number of skipped macroblocks is received for each macroblock, and one or more macroblocks are skipped, reference macroblocks are extracted, for each of the skipped macroblocks, from the plurality of reference frames by using the predictive motion vector as a motion vector for the skipped macroblock and a predetermined combination of a plurality of reference frames. A predictive macroblock is generated from the plurality of reference frames by a linear sum based on an index indicating the combination of the received linear sum weighting factors. The predictive macroblock is then used as a decoded picture.

<Effects>

The data encoded in (18) can be decoded, and the same encoding efficiency improving effect as that in (18) can be obtained.

(50) In any one of (46) to (48), when information associated with the number of skipped macroblocks is received for each macroblock, and one or more macroblocks are skipped, reference macroblocks are extracted, for each of the skipped macroblocks, from the plurality of reference frames by using a motion vector obtained by adding a motion vector for the immediately preceding macroblock encoded without being skipped to the predictive motion vector and a predetermined combination of a plurality of reference frames. A predictive macroblock is generated from the plurality of reference frames by a linear sum based on an index indicating the combination of the received linear sum weighting factors. The predictive macroblock is then used as a decoded picture.

<Effects>

The data encoded in (19) can be decoded, and the same encoding efficiency improving effect as that in (19) can be obtained.

(51) In (49) or (50), the predetermined combination of reference frames includes two immediately previously decoded frames.

<Effects>

The data encoded in (20) can be decoded, and the same encoding efficiency improving effect as that in (20) can be obtained.

(52) In (49) or (50), an index indicating the predetermined combination of reference frames is received as header data for an encoded frame, and a skipped macroblock is decoded in accordance with the received index.

<Effects>

The data encoded in (21) can be decoded, and the same encoding efficiency improving effect as that in (21) can be obtained.

(53) In any one of (46) to (48), when information associated with the number of skipped macroblocks is received for each macroblock, and one or more macroblocks are skipped, reference macroblocks are extracted, for each of the skipped macroblocks, from the plurality of reference frames by using the predictive motion vector as a motion vector for the skipped macroblock and an index indicating a combination of a plurality of reference frames in the immediately preceding macroblock encoded without being skipped. A predictive macroblock is generated from the plurality of reference frames by a linear sum based on an index indicating the combination of the received linear sum weighting factors. The predictive macroblock is then used as a decoded picture.

<Effects>

The data encoded in (22) can be decoded, and the same encoding efficiency improving effect as that in (22) can be obtained.

(54) In any one of (46) to (48), when information associated with the number of skipped macroblocks is received for each macroblock, and one or more macroblocks are skipped, reference macroblocks are extracted, for each of the skipped macroblocks, from the plurality of reference frames by generating a motion vector by adding a differential motion vector for the immediately preceding macroblock encoded without being skipped to the predictive motion vector and using an index indicating a combination of a plurality of reference frames in the immediately preceding macroblock encoded without being skipped. A predictive macroblock is generated from the plurality of reference frames by a linear sum based on an index indicating the combination of the received linear sum weighting factors. The predictive macroblock is then used as a decoded picture.

<Effects>

The data encoded in (23) can be decoded, and the same encoding efficiency improving effect as that in (23) can be obtained.

(55) In a video decoding method of performing motion compensation predictive inter-frame decoding of a to-be-decoded macroblock of a video picture by using a predetermined combination of a plurality of reference frames and a motion vector between the to-be-decoded macroblock and at least one reference frame, (a) encoded data including a predictive error signal for each to-be-decoded macroblock, the first index indicating the combination of a plurality of reference frames, the second index indicating the frame number of an encoded frame, and information of the motion vector is decoded, (b) a plurality of reference macroblocks are extracted from the plurality of reference frames in accordance with the decoded information of the motion vector and the decoded information of the first index, (c) the inter-frame distances between the plurality of reference frames and the encoded frame are calculated in accordance with the decoded information of the second index, (d) a predictive macroblock is generated by calculating the linear sum of the plurality of extracted reference macroblocks using weighting factors determined in accordance with the calculated inter-frame distances, and (e) a video signal is decoded by adding the predictive macroblock and the decoded predictive error signal.

<Effects>

The data encoded in (24) can be decoded, and the same encoding efficiency improving effect as that in (24) can be obtained.

(56) In a video decoding method of performing motion compensation predictive inter-frame decoding of a to-be-decoded macroblock of a video picture by using at least one past reference frame and a motion vector between the to-be-decoded macroblock and at least one reference frame, (a) encoded data including a predictive error signal for each to-be-decoded macroblock and information of one of the encoded first motion vector or a flag indicating the use of the second motion vector for a macroblock at the same intra-frame position as in an immediately previously encoded frame are received and decoded, (b) a predictive macroblock is generated by using the decoded first motion vector for a to-be-decoded macroblock for which the information of the first motion vector is received and using the second motion vector for a to-be-decoded macroblock for which the flag is received, and (c) a video signal is decoded by adding the predictive macroblock and the predictive error signal.

<Effects>

The data encoded in (29) can be decoded, and the same encoding efficiency improving effect as that in (29) can be obtained.

(57) In a video decoding method of performing motion compensation predictive inter-frame decoding of a to-be-decoded macroblock of a video picture by using a motion vector between the to-be-decoded macroblock and at least one reference frame, (a) encoded data including information of a predictive error signal for each to-be-decoded macroblock, prediction mode information indicating one of the first prediction mode of using at least one to-be-encoded past frame as the reference frame, the second mode of using a to-be-encoded future frame as the reference frame, the third prediction mode of using the linear sum of to-be-encoded past and future frames as the reference frame, and the fourth mode of using the linear sum of the plurality of to-be-encoded past frames as the reference frame, and the information of the motion vector is received and decoded, (b) a predictive macroblock signal is generated by using the prediction mode information and the information of the motion vector, and (c) a video signal is decoded by adding the predictive macroblock signal and the decoded predictive error signal.

<Effects>

The data encoded in (30) can be decoded, and the same encoding efficiency improving effect as that in (30) can be obtained.

(58) In (57), the prediction based on the linear sum includes linear interpolation and linear extrapolation corresponding to inter-frame distances.

<Effects>

The data encoded in (31) can be decoded, and the same encoding efficiency improving effect as that in (31) can be obtained.

(59) In a video encoding method of performing motion compensation predictive inter-frame encoding of a to-be-encoded macroblock of a video picture by using at least one reference frame selected from a plurality of reference frames and a motion vector between the to-be-encoded macroblock and at least one reference frame, the motion compensation predictive inter-frame encoding is skipped with respect to a to-be-encoded macroblock when the motion vector coincides a predictive vector selected from motion vectors for a plurality of macroblocks adjacent to the to-be-encoded macroblock of the video picture, at least one reference frame selected for the to-be-encoded macroblock coincides with the macroblock from which the predictive vector is selected, and all to-be-encoded predictive error signals in the motion compensation predictive inter-frame encoding are 0, and the number of macroblocks for which the motion compensation predictive inter-frame encoding is skipped in performing motion compensation predictive inter-frame encoding of the next to-be-encoded macroblock is encoded.

<Effects>

As in (22), macroblock skipping is efficiently caused by using motion vector/reference frame selection correlation in an inter-frame prediction between adjacent macroblocks. This makes it possible to reduce the encoding overhead and improve the encoding efficiency. In addition, when the use of the same reference frame reference frame as that of an adjacent macroblock used for a prediction of a motion vector is set as a skipping condition, macroblock skipping can be caused more efficiently by using a correlation between adjacent macroblocks based on a combination of a motion vector and a reference frame.

(60) In a video encoding method of performing motion compensation predictive inter-frame encoding of a to-be-encoded macroblock of a video picture by using at least one first reference frame selected from a plurality of reference frames and a motion vector between the to-be-encoded macroblock and the first reference frame, a predictive error signal obtained by the motion compensation predictive inter-frame encoding, the differential vector between a motion vector used for the motion compensation predictive inter-frame encoding and a predictive vector selected from motion vectors between the second reference frame and a plurality of macroblocks adjacent to the to-be-encoded macroblock, and the differential value between an index indicating the first reference frame and an index indicating the second reference frame are encoded.

<Effects>

As in (15) to (17), motion vector information is efficiency encoded by using the correlation between motion vectors between adjacent macroblocks. In addition, with regard to an index associated with a frame, of a plurality of reference frames, to which each macroblock refers, the differential value between an index indicating a reference frame in an adjacent macroblock from which a predictive vector is selected and an index indicating a reference frame in a to-be-encoded macroblock is encoded. This makes it possible to improve the encoding efficiency of an index indicating a reference frame by using the correlation between adjacent macroblocks based on a combination of a motion vector and a reference frame. This can reduce the encoding overhead and perform high-efficiency video encoding.

(61) In a video decoding method of performing motion compensation predictive inter-frame decoding of a to-be-decoded macroblock of a video picture by using a motion vector between the to-be-decoded macroblock and at least one reference frame selected from a plurality of reference frames, (a) encoded data including a predictive error signal for each to-be-decoded macroblock which is obtained by motion compensation predictive inter-frame encoding, the number of immediately previously skipped macroblocks and information of an index indicating at least one selected reference frame is received and decoded, (b) one predictive vector is selected from motion vectors for a plurality of macroblocks adjacent to the skipped macroblock, (c) a predictive macroblock is generated in accordance with at least one reference frame for the macroblock from which the predictive vector is selected and the predictive vector, and (d) the predictive macroblock is output as a decoded picture signal of the skipped macroblock.

<Effects>

The data encoded in (59) can be decoded, and the same encoding efficiency improving effect as that in (59) can be obtained.

(62) In a video decoding method of performing motion compensation predictive inter-frame decoding of a to-be-decoded macroblock of a video picture by using a motion vector between the to-be-decoded macroblock and at least the first reference frame selected from a plurality of reference frames, (a) encoded data including a predictive error signal obtained by motion compensation predictive inter-frame encoding, the differential vector between a motion vector used for the motion compensation predictive inter-frame encoding and a predictive vector selected from the motion vectors between a plurality of macroblocks adjacent to the to-be-decoded macroblock and the second reference frame, and the differential value between the first index indicating the first reference frame and the second index indicating the second reference frame are received and decoded, (b) the predictive vector is selected from the plurality of macroblocks adjacent to the to-be-decoded macroblock, (c) the motion vector is reconstructed by adding the selected predictive vector and the decoded differential vector, (d) the first index is reconstructed by adding the index of the reference frame for the macroblock from which the predictive vector is selected and the decoded differential value, (e) a predictive macroblock is generated in accordance with the reconstructed motion vector and the reconstructed first index, and (f) a decoded reconstructed picture signal of the to-be-decoded macroblock is generated by adding the generated predictive macroblock and the decoded predictive error signal.

<Effects>

The data encoded in (60) can be decoded, and the same encoding efficiency improving effect as that in (60) can be obtained.
As described above, video encoding and decoding processing may be implemented as hardware (apparatuses) or may be implemented by software using a computer. Part of the processing may be implemented by hardware, and the other part may be implemented by software. According to the present invention, therefore, programs for causing a computer to execute video encoding or decoding processing described in (1) to (62) can also be provided.

Industrial Applicability

As has been described above, according to the present invention, high-picture quality, high-efficiency video encoding and decoding schemes with a low overhead for encoded data can be provided, which can greatly improve prediction efficiency for fade-in/fade-out pictures and the like, which conventional video encoding schemes such as MPEG have difficulty in handling, without much increasing the computation amount and cost for encoding and decoding.

**Claims**

1. A video encoding method of performing motion compensation predictive inter-frame encoding on a to-be-encoded block in a to-be-encoded frame of a video picture, **characterized by** comprising:

   obtaining at least one weighting factor and at least one DC offset value;
   generating a prediction block by calculating a linear sum of a plurality of reference blocks extracted from a plurality of reference frames and adding the DC offset value to the linear sum;
   generating a prediction error signal between the prediction block and the to-be-encoded block; and
   encoding information of the prediction error signal, information of the reference frame, information of the weighting factor, information of the DC offset value, and information of a motion vector between the to-be-encoded block and at least one reference frame.

2. A video encoding apparatus of performing motion compensation predictive inter-frame encoding on a to-be-encoded block in a to-be-encoded frame of a video picture, **characterized by** comprising:

   obtaining means for obtaining at least one weighting factor and at least one DC offset value;
   first generator means for generating a prediction block by calculating a linear sum of a plurality of reference blocks extracted from a plurality of reference frames and adding the DC offset value to the linear sum;
   second generator means for generating a prediction error signal between the prediction block and the to-be-encoded block; and
   encoder means (112-114) for encoding information of the prediction error signal, information of the reference frame, information of the weighting factor, information of the DC offset value, and information of a motion vector between the to-be-encoded block and at least one reference frame.

3. A video encoding method of performing motion compensation predictive inter-frame of a to-be-encoded block in a to-be-encoded frame of a video picture by using a predetermined combination of a plurality of reference frames and a motion vector between the to-be-encoded block and at least one reference frame, comprising:

   a step of determining at least one weighting factor from a ratio between an AC component value in the to-be-encoded frame and an AC component value in the reference frame;
   a step of determining at least one DC offset value from a difference between a DC component value in the to-be-encoded frame and a DC component value in the reference frame;
   a step of generating a predictive block by calculating a linear sum of a plurality of reference blocks extracted from the reference frames and adding the DC offset value;
   a step of generating a predictive error signal between the predictive block and the to-be-encoded block; and
   a step of encoding information of the predictive error signal, information of the reference fame, information of the weighting factor, information of the DC offset value, and information of the motion vector.

EP 1 830 578 A1

FIG. 1

FIG. 2

FIG. 3

FIG. 4

FIG. 5

FIG. 6

FIG. 7

FIG. 8

FIG. 9

FIG. 10

```
Picture(or Slice) ()
{
  time_info_to_be_displayed
  . . .
  linear_weighted_prediction_flag
  . . .
  do {
    Macroblock()
  }while(! "end of Slice(or Picture)" )
}
```

## F I G. 11

```
Macroblock()
{
  macroblock_type
  . . .
  "predictive error signal encoded data"
}
```

## F I G. 12

Time

| SH | PH | Picture data | PH | Picture data | .......... |

| DTI | ... | LWP | ...... | SLC | SLC | ............ | SLC |

| SH | MB | ...... | MB |

| MBT | MV | ... | DCT |

## F I G. 13

Decoding slice or picture header
(including second mode information) — S30

Encode block header
(including first mode information) — S31

Single-prediction ◁ First prediction mode ? ▷ Multi-prediction — S32

Average value prediction

Second prediction mode ? — S33

Linear interpolation prediction

S34
Generate single-frame predictive signal

S35
Generate multi-frame average predictive signal

S36
Generate temporal linear interpolation predictive signal

Decode predictive error signal and add to predictive signal — S37

Yes ◁ End of slice or picture encoding ? ▷ No — S38

FIG. 14

F0    F1         F2

ref1

ref0                    Pred

Rr
Rc

Dt0   Dt1        Dt2    Time

# FIG. 15

F0    F2         F1

Pred

ref0                    ref1

Rc
Rr

Dt0   Dt2        Dt1    Time

# FIG. 16

| Code_number | Weighting _factors | |
|:-:|:-:|:-:|
| | Near | Far |
| 0 | 0.5 | 0.5 |
| 1 | 2 | −1 |

FIG. 17

| Code_number | Weighting _type |
|:-:|:-:|
| 0 | Average |
| 1 | Interpolation / extrapolation |

FIG. 18

| Code_number | Reference_frame |
|:-:|:-:|
| 0 | Final decoded frame (one frame back) |
| 1 | Two frames back |
| 2 | Combination of one frame back and two frames back |

FIG. 19

F I G. 20

EP 1 830 578 A1

EP 1 830 578 A1

FIG. 21

Number_Of_Max_References

WeightingFactorDenominatorExponent

for(i=1; i<=Number_Of_Max_References; i++)

WeightingFactorNumerator [ i ]

# F I G. 22

| Code_number | Reference_frame |
|-------------|-----------------|
| 0 | Multiple reference prediction |
| 1 | Final decoded frame (one frame back) |
| 2 | Two frames back |
| 3 | Three frames back |
| ... | ... |

# F I G. 23

F I G. 24

F0

(a)

F1

(b)

F I G. 25

F I G. 26

EP 1 830 578 A1

F I G. 27

F0    F1         F2

Ra

Rb

F I G. 28

F0    F1    F2

Rb    Ra

F I G. 29

F0    F1    F2         F3

Ra

Rb

Rc

F I G. 30

F I G. 31

F I G. 32

FIG. 33

FIG. 34

FIG. 35

F I G. 36

F I G. 37

FIG. 38

FIG. 39

Calculate DC component intensity
DCcur in current frame — S10

Calculate AC component intensity
ACcur in current frame — S11

ref_idx=0 — S12

Calculate DC component intensity DCref[ref_idx]
in (ref_idx)-th reference frame — S13

Calculation AC component intensity ACref[ref_idx]
in (ref_idx)-th reference frame — S14

Calculate DC offset with respect to (ref_idx)-th
reference frame d[refi_idx]=DCcur · DCref[ref_idx] — S15

Calculate AC gain with respect to (ref_idx)-th
reference frame w[refi_idx]=ACcur · ACref[ref_idx] — S16

ref_idx=ref_idx+1 — S17

S18

ref_idx=MAX_REF_IDX ?  No

Yes

Encode weight coefficient table — S19

Encode current frame — S20

F I G. 40

F I G. 41

```
picture(or slice)_header()
{
    . . .
    number_of_max_ref_idx
    . . .
    weighting_table()
}
```

F I G. 42

```
weighting_table()
{
    w_exponential_denominator
    for(i=0; i<number_of_max_ref_idx; i++)
    {
        w_numerator[i]
        d[i]
    }
}
```

F I G. 43

```
weighting_table()
{
    for(i=0; i<number_of_max_ref_idx; i++)
    {
        w_numerator[i]
        d[i]
    }
}
```

F I G. 44

Time →

| SH | PH | Picture data | PH | Picture data | ·········· |

| ··· | MRI | ··· | WT | ··· | SLC | SLC | ············· | SLC |

| WED | WN | D | WN | D | ············· |

| SH | MB | ······ | MB |

| MBT | MV | ··· | DCT |

F I G. 45

F I G. 46

**European Patent Office**

**EUROPEAN SEARCH REPORT**

Application Number

EP 07 00 6860

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 6 320 906 B1 (TOYOKURA MASAKI [JP] ET AL) 20 November 2001 (2001-11-20) <br> * abstract * <br> * column 1, line 37 - column 1, line 58 * | 1-3 | INV. <br> H04N7/36 <br> H04N7/26 |
| Y | EP 0 695 096 A1 (SONY CORP [JP]) 31 January 1996 (1996-01-31) <br> * abstract; claims 1-3 * | 1-3 | |
| Y | FLIERL M ET AL: "Multihypothesis pictures for H.26L" <br> PROCEEDINGS 2001 INTERNATIONAL CONFERENCE ON IMAGE PROCESSING. ICIP 2001. THESSALONIKI, GREECE, OCT. 7 - 10, 2001, INTERNATIONAL CONFERENCE ON IMAGE PROCESSING, NEW YORK, NY : IEEE, US, vol. VOL. 1 OF 3. CONF. 8, 7 October 2001 (2001-10-07), pages 526-529, XP010563399 ISBN: 0-7803-6725-1 <br> * the whole document * | 1-3 | |
| | | | TECHNICAL FIELDS SEARCHED (IPC) |
| Y | EP 0 511 778 A (AMERICAN TELEPHONE & TELEGRAPH [US]) 4 November 1992 (1992-11-04) <br> * abstract * <br> * page 2, line 15 - page 5, line 50 * <br> * page 8, line 32 - page 10, line 15 * | 1-3 | H04N |
| Y | "H.26L TEST MODEL LONG TERM NUMBER 6 (TML-6) DRAFT 0" <br> ITU-T TELECOMMUNICATION STANDARIZATION SECTOR OF ITU, GENEVA, CH, 9 January 2001 (2001-01-09), pages 1-35, XP001089815 <br> * page 27, paragraph 6 - page 32, paragraph 7 * | 1-3 | |

-/--

The present search report has been drawn up for all claims

| Place of search | Date of completion of the search | Examiner |
|---|---|---|
| Munich | 23 July 2007 | Schoeyer, Marnix |

EPO FORM 1503 03.82 (P04C01)

**European Patent Office**

**EUROPEAN SEARCH REPORT**

Application Number

EP 07 00 6860

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2001 078191 A (CANON KK) 23 March 2001 (2001-03-23) * abstract * ----- | 1-3 | |
| A | JP 09 307930 A (KOKUSAI DENSHIN DENWA CO LTD) 28 November 1997 (1997-11-28) * abstract * ----- | 1-3 | |
| | | | TECHNICAL FIELDS SEARCHED (IPC) |

The present search report has been drawn up for all claims

| Place of search | Date of completion of the search | Examiner |
|---|---|---|
| Munich | 23 July 2007 | Schoeyer, Marnix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 00 6860

This annex lists the patent family members relating to the patent documents cited in the above-mentioned European search report.
The members are as contained in the European Patent Office EDP file on
The European Patent Office is in no way liable for these particulars which are merely given for the purpose of information.

23-07-2007

| Patent document cited in search report | | Publication date | Patent family member(s) | | Publication date |
|---|---|---|---|---|---|
| US 6320906 | B1 | 20-11-2001 | NONE | | |
| EP 0695096 | A1 | 31-01-1996 | DE | 69515755 D1 | 27-04-2000 |
| | | | DE | 69515755 T2 | 13-07-2000 |
| | | | US | 5691774 A | 25-11-1997 |
| EP 0511778 | A | 04-11-1992 | JP | 2665109 B2 | 22-10-1997 |
| | | | JP | 6253291 A | 09-09-1994 |
| | | | US | 5151784 A | 29-09-1992 |
| JP 2001078191 | A | 23-03-2001 | NONE | | |
| JP 9307930 | A | 28-11-1997 | JP | 3458600 B2 | 20-10-2003 |

EPO FORM P0459